(19) Europäisches Patentamt
European Patent Office
Office européen des brevets

(11) Veröffentlichungsnummer : **0 362 143 B1**

(12) # EUROPÄISCHE PATENTSCHRIFT

(45) Veröffentlichungstag der Patentschrift : **15.11.95 Patentblatt 95/46**

(51) Int. Cl.$^6$ : **H01B 1/12**

(21) Anmeldenummer : **89810720.6**

(22) Anmeldetag : **21.09.89**

(54) **Antistatische und elektrisch leitende Reliefbilder, Verfahren zu deren Herstellung, Beschichtungsmittel und strahlungsempfindliche Polymere.**

(30) Priorität : **30.09.88 CH 3646/88**

(43) Veröffentlichungstag der Anmeldung : **04.04.90 Patentblatt 90/14**

(45) Bekanntmachung des Hinweises auf die Patenterteilung : **15.11.95 Patentblatt 95/46**

(84) Benannte Vertragsstaaten : **CH DE FR GB IT LI**

(56) Entgegenhaltungen :
**EP-A- 0 023 988**
**EP-A- 0 109 360**
**EP-A- 0 153 905**
**EP-A- 0 285 564**
**US-A- 3 403 165**
**US-A- 4 158 730**

(73) Patentinhaber : **CIBA-GEIGY AG**
**Klybeckstrasse 141**
**CH-4002 Basel (CH)**

(72) Erfinder : **Finter, Jürgen, Dr.**
**Zasiusstrasse 100**
**D-7800 Freiburg (DE)**
Erfinder : **Hilti, Bruno, Dr.**
**Marschalkenstrasse 27**
**CH-4054 Basel (CH)**
Erfinder : **Mayer, Carl W.**
**Steingrubenweg 224**
**CH-4125 Riehen (CH)**
Erfinder : **Minder, Ernst**
**Bernhardsmattweg 1**
**CH-4450 Sissach (CH)**

**EP 0 362 143 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein beschichtetes Material, bei dem auf mindestens einer Oberfläche eines Substrates ein Reliefbild aus a) einem photostrukturierten und photopolymerisierten oder photovernetzten organischen Material aufgebracht ist, das b) einen Nadelfilz aus einem Charge-Transfer-Komplex (CT-Komplex) aus einem gegebenenfalls substituierten Tetrathio-, Tetraseleno- oder Tetratelluronaphthalin oder -tetracen enthält; ein Verfahren zu dessen Herstellung; ein Beschichtungsmittel und strahlungsempfindliche Polymere.

In der DE-A-3005849 sind elektrisch leitende Formmassen aus einem thermoplastischen Kunststoff und einem CT-Komplex beschrieben, wobei diese CT-Komplexe faser- oder nadelförmig sind. Als Elektronendonator werden N, O und/oder S enthaltende Verbindungen und als Elektronenacceptor Polycyanverbindungen verwendet. Die Formmassen können durch Zugabe des Akzeptors zu einer Polymerlösung, in der der Donator gelöst ist, und anschliessendes Verdampfen des Lösungsmittels hergestellt werden. M. Kryszewski et al. beschreiben in Pure and Applied Chemistry, Vol. 56, No. 3, Seiten 355-368 (1984) elektrisch leitende Polymerzusammensetzungen, die als CT-Komplexe solche aus Tetrathiotetracen als Elektronendonator und Tetracyanochinodimethan, Tetracyanoethylen oder Chloranil als Elektronenacceptor enthalten. Die elektrische Leitfähigkeit dieser Systeme ist auf Grund der relativ niedrigen Leitfähigkeit der reinen CT-Komplexe gering.

Die Stabilität der CT-Komplexe mit Tetracyanochinodimethan ist gering. Es ist bekannt, dass diese CT-Komplexe gegen eine HCN-Abspaltung stabilisiert werden müssen, vgl. DE-A-3335513.

J.C. Stark et al. beschreiben in Organometallics, 3, S. 732-735 (1984), peri-dichalkogenierte Polyacene, von denen bestimmte Salze eine hohe elektrische Leitfähigkeit besitzen. In US-PS 4 384 025, US-PS 4 522 754, DE-OS 3 510 072, DE-OS 3 635 124 und EP-A-0 153 905 sind solche Halogenide beschrieben. Diese Halogenide weisen im allgemeinen einen Schmelzpunkt über 300°C auf. Ferner sind sie in organischen Lösungsmitteln praktisch unlöslich. Wegen dieser Eigenschaften können die Halogenide nur in Form von Pulvern in Polymere eingearbeitet werden. Solche Polymerzusammensetzungen weisen eine sehr geringe elektrische Leitfähigkeit auf, da die leitenden Teilchen in der Polymermatrix isoliert sind. Reliefbilder, die in den Bildteilen solche CT-Komplexe enthalten, sind nicht bekannt.

Ein Gegenstand vorliegender Erfindung ist ein beschichtetes Material, bei dem auf mindestens einer Oberfläche eines Substrates ein Reliefbild aus

a) einem photostrukturierten und photopolymerisierten oder photovernetzten organischen Material aufgebracht ist, das

b) einen Nadelfilz aus einem Charge-Transfer-Komplex (CT-Komplex) enthält, der aus Chlor, Brom oder Iod und

einer Verbindung der Formel I oder Ia oder Mischungen davon gebildet ist,

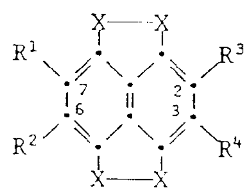 (I),

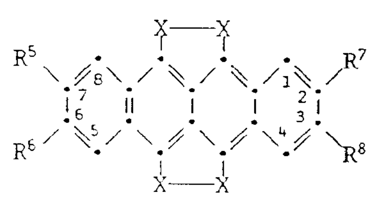 (Ia),

worin X für S, Se oder Te steht, $R^1$, $R^2$, $R^3$ und $R^4$ unabhängig voneinander ein Wasserstoffatom oder Cl bedeuten oder $R^1$ und $R^2$ sowie $R^3$ und $R^4$ zusammen je

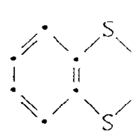 oder 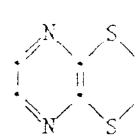

oder $R^1$, $R^2$, $R^3$ und $R^4$ je Phenylthio, 4-Methyl- oder 4-Methoxyphenylthio oder 4-Pyridylthio darstellen, $R^5$, $R^6$, $R^7$ und $R^8$ unabhängig voneinander H oder F bedeuten, $R^5$ für $CH_3$ und $R^6$, $R^7$ und $R^8$ für H oder $R^5$, $R^6$, $R^7$ und $R^8$ für $CH_3$ stehen, $R^5$ und $R^6$ für $CH_3$ oder Cl und $R^7$ und $R^8$ für H stehen oder $R^5$ und $R^6$ für H, $R^7$ für $-COR^9$ und $R^8$ für H oder $-COR^9$, oder $R^5$ und $R^6$ für H und $R^7$ und $R^8$ zusammen für -CO-O-CO oder -CO-$NR^{10}$-CO- stehen, worin $R^9$ Halogen, -OH, $-NH_2$, oder den Rest eines Alkohols, primären oder sekundären Amins darstellt, oder -OM ist, wobei M ein Kation bedeutet, und $R^{10}$ H oder der um die $NH_2$-Gruppe verminderte

Rest eines primären Amins ist.

Die Komponente b) ist bevorzugt in einer Menge von 0,01 bis 10 Gew.-%, besonders 0,05 bis 5 Gew.-% und insbesondere 0,5 bis 3 Gew.-% enthalten, bezogen auf die Komponente a).

Einige Verbindungen der Komponente b) und ihre Herstellung sind in den zuvor erwähnten Publikationen beschrieben. Bevorzugte CT-Komplexe der Komponente b) sind solche, die aus Verbindungen der Formel Ia gebildet und die besonders aus Tetrathiotetracen, Tetraselenotetracen, 2-Fluor- oder 2,3-Difluortetraselenotetracen gebildet sind.

Besonders bevorzugt ist der CT-Komplex aus Cl und einer Verbindung der Formel Ia gebildet. Insbesondere handelt es sich bei dem CT-Komplex der Komponente b) um $(Tetraselenotetracen)_2Cl$.

In einer bevorzugten Ausführungsform ist der CT-Komplex der Komponente b) in Form eines Nadelnetzwerkes aus Kristallnadeln ausgebildet.

Verbindungen der Formeln II oder IIa

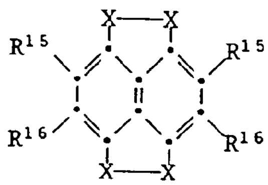 (II), 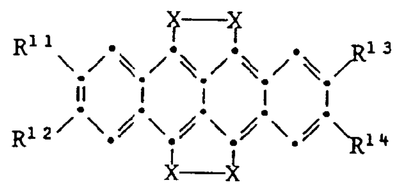 (IIa),

worin $R^{15}$ und $R^{16}$ je Phenylthio, 4-Methyl- oder 4-Methoxyphenylthio oder 4-Pyridylthio oder worin $R^{15}$ und $R^{16}$ zusammen

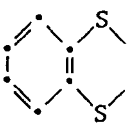 oder 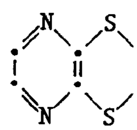

bedeuten, $R^{11}$ für $-CH_3$ und $R^{12}$, $R^{13}$ und $R^{14}$ für H, $R^{11}$ und $R^{12}$ für Cl oder $CH_3$ und $R^{13}$ und $R^{14}$ für H stehen oder $R^{11}$, $R^{12}$, $R^{13}$ und $R^{14}$ für $-CH_3$ oder F stehen, und X S, Se oder Te darstellt, können z.B. wie nachfolgend beschrieben hergestellt werden:

a) Tetramethylierte Tetracene

Man setzt die bekannten Ausgangsverbindungen 4,5-Dimethylphthalsäureanhydrid und 2,3-Dimethyl-6,7-dihydroxynaphthalin in Gegenwart von $B_2O_3$ zu 2,3,8,9-Tetramethyl-5,12-dihydroxy-6,11-dioxo-tetracen (A) um. Diese Reaktion und die weitere Chlorierung und Reduktion zum in 5,6,11,12-Stellung tetrachlorierten Produkt sind in der DE-OS 3635124 beschrieben. Die Umsetzung mit $Na_2X_2$ führt zum entsprechenden tetrachalkogenierten Tetracen. In einer Variante kann das 2,3,8,9-Tetramethyl-5,5,6,11,12,12-hexachlordihydrotetracen (das bei der Chlorierung mit $PCl_5/POCl_3$ erhalten wird) mit 1 Val $Na_2Se_2$ und 2 Val $Na_2Se$ direkt zum entsprechenden Tetraselenotetracen umgesetzt werden. Die Verbindung A kann auch mit Dimethylsulfat zum 5,12-Dimethoxyderivat alkyliert werden [vgl. Chem. Pharm. Bull. 20(4), 827 (1972)]. Die Umsetzung dieses Derivates mit $P_4S_{10}$ in Tetrahydrofuran, die nachfolgende Oxidation mit $Br_2$ und anschliessende Reduktion mit $TiCl_3$ führt zum 2,3,8,9-Tetramethyl-5,6,11,12-tetrathiotetracen.

b) 2-Methyltetracene

Entsprechend der Vorschrift in Chem. Ber. 64, 1713 (1931) wird 2-Methyl-5,12-dioxo-dihydrotetracen erhalten. Die Reduktion mit Zn in alkalischer Lösung führt zum 2-Methyl-5,12-tetrahydrotetracen, das mit Chloranil zum 2-Methyltetracen dehydriert werden kann. Die Umsetzung mit S (siehe US-PS 3 723 417) ergibt das 2-Methyl-5,6,11,12-tetrathiotetracen. Man kann auch wie in a) beschrieben das 2-Methyl-5,6,11,12-tetrachlortetracen herstellen und mit $Na_2X_2$ umsetzen.

c) Tetrafluortetracene

Gemäss der Vorschrift in Chem. Ber 31, 1159 und 1272 (1898) wird durch Kondensation von 2,3-Difluorphthalsäureanhydrid mit Bernsteinsäure und anschliessende Behandlung des Kondensationsproduktes mit Natriumethylat in Ethanol 2,3,8,9-Tetrafluor-5,12-dihydroxy-6,11-dioxo-tetracen (B) erhalten. Die weitere Umsetzung mit $PCl_5$ und anschliessend mit $SnCl_2/CH_3COOH$ zum 2,3,8,9-Tetrafluor-5,6,11,12-tetrachlortetracen erfolgt analog der Vorschrift in Zhuv. Org. Kim. 15(2), 391 (1979). Die Umsetzung mit $Na_2X_2$ ergibt die entsprechenden 2,3,8,9-Tetrafluortetrachalkogentetracene. Die Reduktion von Verbin-

dung B mit Al in Cyclohexanol führt zum 2,3,8,9-Tetrafluortetracen, das mit Schwefel [siehe Bull. Soc. Chim. 15, 27 (1948)] zum 2,3,8,9-Tetrafluor-5,6,11,12-tetrathiotetracen reagiert.

d) Naphthaline

Ausgehend von bekannten (siehe US-PS 3 769 276) 2,3,6,7-Tetrachlortetrachalkogennaphthalinen können durch die Umsetzung mit den Kaliumsalzen von Thiophenol, 4-Methylthiophenol, 4-Methoxythiophenol, 4-Mercaptopyridin, 1,2-Benzodithiol bzw. Pyrazin-2,3-dithiol die entsprechenden 2,3,6,7-substituierten Tetrachalkogennaphthaline erhalten werden.

e) Dimethyl- und Dichlortetracene

Man verfährt analog wie unter a) beschrieben, setzt aber als Ausgangsverbindungen 4,5-Dimethyl- bzw. 4,5-Dichlorphthalsäureanhydrid mit 6,7-Dihydroxynaphthalin um und chloriert mit $PCl_5/POCl_3$.

In den Formeln I, Ia, II und IIa stellt X bevorzugt S oder Se dar. $R^9$ ist als Halogen besonders Chlor.

In dem Rest -OM kann H ein Metall- oder Ammoniumkation sein. Als Metallkation kommen insbesondere solche der Alkali- und Erdalkalimetalle in Frage, z.B. $Li^{\oplus}$, $Na^{\oplus}$, $K^{\oplus}$, $Mg^{2\oplus}$, $Ca^{2\oplus}$, $Sr^{2\oplus}$ und $Ba^{2\oplus}$. Ferner sind $Zn^{2\oplus}$ und $Cd^{2\oplus}$ geeignet. Als Ammoniumkationen kommen z.B. $NH_4^{\oplus}$ und primäres, sekundäres, tertiäres oder quaternäres Ammonium in Frage, die vorzugsweise $C_1$-$C_{12}$-Alkyl-, Cyclohexyl-, Cyclopentyl-, Phenyl- oder Benzylgruppen enthalten können. Die Ammoniumkationen können sich auch von 5- oder 6-gliedrigen heterocyclischen Aminen ableiten, z.B. Piperidin, Pyrrol und Morpholin.

Bei $R^9$ als Rest eines Alkoholes handelt es sich bevorzugt um $C_1$-$C_6$-Alkoxy oder $C_2$-$C_6$-Hydroxyalkoxy, Benzyloxy, Phenoxy, Cyclopentyloxy oder Cyclohexyloxy.

$R^9$ als Rest eines primären oder sekundären Amins leitet sich bevorzugt von Alkylaminen mit einer bzw. 2 $C_1$-$C_6$-Alkylgruppen ab.

$R^{10}$ stellt bevorzugt H, $C_1$-$C_{18}$-Alkyl, Phenyl oder Benzyl dar.

$R^{10}$ enthält als Alkyl bevorzugt 1 bis 12 und besonders 1 bis 6 C-Atome.

Beispiele für Alkyl, das linear oder verzweigt sein kann, sind: Methyl, Ethyl, n- oder i-Propyl, n-, i- oder t-Butyl, Pentyl, Hexyl, 2-Ethylhexyl, Heptyl, Octyl, Nonyl, Decyl, Undecyl und Dodecyl.

Beispiele für Alkoxy und Hydroxyalkoxy sind: Methoxy, Ethoxy, Propoxy, Butoxy, Pentoxy, Hexoxy, β-Hydroxyethoxy, γ-Hydroxypropoxy, δ-Hydroxybutoxy und ω-Hydroxyhexoxy.

Das organische Material kann bis zu 95 Gew.-%, bezogen auf dieses Material, eines Bindemittels enthalten, z.B. Polymere wie z.B. thermoplastische oder elastomere Polymere. Insbesondere sind bis zu 80 Gew.-% des Bindemittels enthalten.

Die Bindemittel sind bevorzugt gegenüber den Verbindungen der Komponente b) inert. Die Bindemittel enthalten daher bevorzugt im wesentlichen keine stark sauren Gruppen, z.B. Carboxygruppen, bzw. stark basische Gruppen, z.B. primäre oder sekundäre Amingruppen.

Eine bevorzugte Ausführungsform ist dadurch gekennzeichnet, dass es sich bei dem Bindemittel um Polymere von Mono- und Diolefinen; Copolymere von Mono- und/oder Diolefinen; Polystyrol, Poly-(p-methylstyrol), Poly-(α-methylstyrol); Copolymere von Styrol oder α-Methylstyrol; Propfcopolymere von Styrol oder α-Methylstyrol; halogenhaltige Polymere; Polymere und Copolymere von Derivaten α,β-ungesättigter Säuren; Polymere, die sich von Acylderivaten oder Acetaten ungesättigter Alkohole ableiten; Homo- und Copolymere von cyclischen Ethern; Polyacetale; Polyphenylenoxide und -sulfide und deren Mischungen mit Styrolpolymeren; Polyurethane; Polyharnstoffe; Polyimide; Polybenzimidazole; Polycarbonate; Polyester; Polyestercarbonate; Polysulfone; Polyethersulfone; Polyetherketone; Polyvinylcarbazol; Polyaddukte von gegebenenfalls hydroxyalkylierten Epoxidverbindungen mit durchschnittlich mehr als einer Epoxidgruppe im Molekül und Diolen, primären Monoaminen, disekundären Diaminen, disekundären linearen oder cyclischen Dicarbonsäurediamiden oder Dicarbonsäuren; Derivate von Cellulose; mit Schwefel vernetzte Produkte aus Doppelbindungen enthaltenden Polymeren; und Mischungen der vorgenannten Polymeren handelt.

Beispiele für Polymere sind:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen, z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere, sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäureester-Copolymere, LLDPE/Ethylen-Vinylacetat-Copolymere und LLDPE/Ethylen-Acrylsäureester-Copolymere.

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Allylalkohol, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol, Styrol-Ethylen/Propylen-Styrol oder Styrol-4-Vinylpyridin-Styrol.

6. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von Derivaten $\alpha,\beta$-ungesättigter Säuren ableiten, wie Polyacrylate, Polymethacrylate und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere, Acrylnitril-Alkylmethacrylat-Butadien-Terpolymere oder Alkylmethacrylat-4-Vinylpyridin-Copolymere.

10. Polymere, die sich von Acylderivaten oder Acetalen ungesättigter Alkohole ableiten, wie Polyvinylacetat, -stearat, -benzoat, -maleat, Polyvinylbutyral, Polyallylphthalat; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder Polybutylenglykol.

12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

13. Polyphenylenoxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyharnstoffe und Polybenzimidazole.

16. Polycarbonate, Polyester, z.B. Polyalkylenterephthalate, und Polyestercarbonate.

17. Polysulfone, Polyethersulfone und Polyetherketone.

18. Polyvinylcarbazol.

19. Polyaddukte von gegebenenfalls hydroxyalkylierten Epoxidverbindungen mit durchschnittlich mehr als einer Epoxidgruppe im Molekül und Diolen, primären Monoaminen, disekundären Diaminen, disekundären linearen oder cyclischen Dicarbonsäurediamiden oder Dicarbonsäuren.

20. Polymerhomolog chemisch abgewandelte Derivate von Cellulose, wie Celluloseacetate, -propionate und -butyrate, bzw. die Celluloseether, wie Methylcellulose.

21. Mit Schwefel vernetzte (vulkanisierte) Produkte aus Doppelbindungen enthaltenden Polymeren wie z.B. Naturkautschuk, Synthesekautschuk, Butadien- bzw. Isoprenpolymerisate oder -copolymerisate.

22. Mischungen (Polyblends) der vorgenannten Polymeren, wie z.B. PP/EPDM, PVC/EVA, PVC/ABS, PVC/MBS, PC/ABS, PC/ASA, PC/PBT, PVC/CPE, PVC/Acrylate, POM/thermoplastisches PUR, PC/thermoplastisches PUR, POM/Acrylat, POM/MBS, PPO/HIPS.

Strahlungsempfindliche und damit photostrukturierbare Materialien sind bekannt. Es kann sich um Positiv- oder Negativsysteme handeln. Solche Materialien sind z.B. von G.E. Green et al. in J. Macro. Sci.-Revs. Macr. Chem., C21(2), 187-273(1981-82) und von G.A. Delzenne in Adv. Photochem., 11, S. 1-103 (1979) beschrieben.

Es handelt sich bei Komponente a) um ein photopolymerisiertes oder photovernetztes organisches Material. Besonders bevorzugt ist, dass Komponente a) erhalten ist aus einer nichtflüchtigen monomeren, oligomeren oder polymeren Substanz mit photopolymerisierbaren oder photodimerisierbaren ethylenisch ungesättigten Gruppen; aus kationisch härtbaren Systemen oder aus photovernetzbaren Polyimiden. Photoempfindliche Polyimide sind z.B. in DE-A-1 962 588, EP-A-0 132 221, EP-A-0 134 752, EP-A-0 162 017, EP-A-0 181 837 und EP-A-0 182 745 beschrieben.

Eine bevorzugte Ausführungsform ist dadurch gekennzeichnet, dass das Substrat transparent ist und das Nadelnetzwerk teilweise aus der Oberfläche des Reliefbildes herausragt und metallisiert ist. Solche Materialien sind erhältlich, indem man durch das transparente Substrat unter einer Bildmaske bestrahlt und bei der Entwicklung (Nassentwicklung) das teilweise unvernetzte bzw. nicht polymerisierte Material an der Oberfläche des Reliefbildes mitentfernt und das freigelegte Netzwerk aus nadelförmigen Kristallen (Nadelfilz) kathodisch in einem ein Metallsalz enthaltendem Elektrolysebad metallisiert. Bevorzugt ist das Metall ein Halbedel- oder Edelmetall, z.B. Cu, Ag, Au, Pt, Ir, Co, Ni oder Cr.

Ein weiterer Gegenstand der Erfindung ist ein Verfahren zur Herstellung des erfindungsgemässen Materials, dadurch gekennzeichnet, dass man ein Substrat mit einer Zusammensetzung aus

a) einem strahlungsempfindlichen organischen Material, das als Elektronenacceptor Cl-, Br- und oder I-Atome enthält oder das mit einer Cl-, Br- und/oder I-Atome enthaltenden Substanz als Elektronenacceptor vermischt ist, wobei die Cl-, Br- und/oder I-Atome so aktiviert sind, dass sie unter Einwirkung thermischer Energie mit den Verbindungen der Formel I oder Ia einen CT-Komplex bilden,

b) einer Verbindung der Formel I oder Ia oder Mischungen davon

c) gegebenenfalls einem inerten Lösungsmittel, und

d) gegebenenfalls einem Bindemittel,

beschichtet, das beschichtete Substrat erwärmt, danach unter einer Bildmaske bestrahlt und darauf entwickelt.

In einer bevorzugten Ausführungsform des erfindungsgemässen Verfahrens ist Komponente a) ein Homo- oder Copolymer, an dessen Polymerrückgrat über eine Brückengruppe ein 3,4-Dichlormaleinimidylrest und gegebenenfalls andere photodimerisierbare Gruppen gebunden sind.

Geeignete Brückengruppen sind z.B. lineares oder verzweigtes $C_2$-$C_{12}$-, besonders $C_2$-$C_6$-Alkylen, Cyclohexylen, Phenylen, Benzylen und Xylylen. Sie können über Gruppen -O-, -CO-O-, -CO-OR$^{22}$-O-CO- oder -CO-O- an das Polymerrückgrat gebunden sein.

Eine bevorzugte Ausführungsform des Verfahrens ist dadurch gekennzeichnet, dass das Polymerrückgrat aus einem Homo- oder Copolymer des Vinylalkohols oder deren Hydroxyalkylethern, einem Homo- oder Copolymer der Methacryl- und/oder Acrylsäure oder deren Hydroxyalkyl- oder Hydroxycycloalkylestern; oder einem Polyaddukt aus einer Epoxidverbindung mit durchschnittlich mehr als einer Epoxidgruppe im Molekül und einem Diol, einem primären Monoamin, einem disekundären Diamin, einem linearen oder cyclischen disekundären Dicarbonsäurdiamid; einer Dicarbonsäure oder deren Hydroxyalkylethern gebildet ist.

Ferner ist bevorzugt, dass die (zusätzliche) photodimerisierbare Gruppe ausgewählt ist aus Cinnamat und mit $C_1$-$C_4$-Alkyl 2,3-substituiertem Maleinimidyl.

Eine andere bevorzugte Ausführungsform ist dadurch gekennzeichnet, dass das strahlungsempfindliche organische Material der Komponente a) mit einer halogenhaltigen organischen Verbindung vermischt ist, die unter Zufuhr von Wärme Halogen abspaltet.

Bei der halogen-, besonders Cl-, Br- oder I-haltigen organischen Verbindung kann es sich um eine halogenierte, gesättigte oder ungesättigte, aliphatische, cycloaliphatische, aliphatisch-heterocyclische, aromatische oder heteroaromatische organische Verbindung handeln, die durch -CN, HO-, =O, $C_1$-$C_4$-Alkyl, $C_1$-$C_4$-Alkoxy, -CO-$C_1$-$C_4$-Alkyl, -COO$C_1$-$C_4$-Alkyl substituiert sein können. Die Halogenverbindungen können einzeln oder in Gemischen eingesetzt werden. Die organische Verbindung ist bevorzugt chloriert, bromiert und/oder iodiert. Die Verbindungen können einfach halogeniert sein, wie z.B. N-bromierte oder N-chlorierte Dicarbonsäureimide. C-halogenierte Verbindungen weisen zweckmässig einen höheren Halogenierungsgrad auf; bevorzugt sind diese Verbindungen zu mindestens 80 % C-halogeniert, besonders C-bromiert und/oder C-chloriert. Verbindungen, deren Halogenatome durch elektronenziehende Gruppen aktiviert sind, sind besonders günstig. Besonders bevorzugt handelt es sich bei der halogenhaltigen Verbindung um perchlorierte $C_3$-$C_5$-Alkane, $C_3$-$C_5$-Alkene oder Verbindung mit Trichlormethylgruppen.

Beispiele für halogenierte organische Verbindungen sind Tetrabrommethan, Bromoform, Trichlorbrommethan, Hexachlorpropen, Hexachlorcyclopropan, Hexachlorethan, Octachlorpropan, n-Octachlorbutan, n-Decachlorbutan, Tetrabromethan, Hexabromethan, Tetrabrom-o-benzochinon, 2,4,4,6-Tetrabrom-2,5-cyclohexadienon, Hexabrombenzol, Chloranil, Hexachloraceton, 1,4,5,6,7,7-Hexachlor-5-norbornen-2,3-dicarbonsäure, 1,2,5,6,9,10-Hexabromcyclododecan, Tetrachlorethylen, Perchlorcyclopentadien, Perchlorbutadien, Dichloracetaldehyd-diethylacetal, 1,4-Dichlor-2-buten, 1,3-Dichlor-2-buten, 3,4-Dichlor-1-buten, Tetrachlorcyclopropen, 1,3-Dichloraceton, 1,4-Bis(trichlormethyl)-benzol, 1,3-Dibrompropan, 1,6-Dibromhexan, 3-Chlorpropionsäureethylester, 2-Chlorpropionsäuremethylester, 2-Chloracrylnitril, Trichloressigsäureethylester, Tris-(trichlormethyl)-triazin, 1-(p-Methoxy)phenylethenyl-5-(1,3-bistrichloromethyl)-triazin, 1,2,3-Trichlorpropan, 1,1,2-Trichlorethan, Chlorameisensäurebutylester, Trichlorethylen, 2,3-Dichlormaleinsäureanhydrid, 1,12-Dibromdodecan, α,α'-Dibrom-p-xylol, α,α'-Dichlor-o-xylol, Phenacylchlorid oder -bromid, 1,10-Dibromdecan, α,α'-Dichlor-p-xylol, α,α'-Dibrom-m-xylol, Jodacetonitril, 2,3-Dichlor-5,6-dicyanobenzochinon, 2,3-Dichlorpropionsäuremethylester, 1-Brom-2-chlorethan, 1-Brom-2-chlorpropan, Chlorameisensäure-2-bromethylester, Iodessigsäureethylester, N-Chlor-, N-Brom- oder N-Iodsuccinimid oder -phthalsäureimid, oder Mischungen hiervon.

Eine weitere bevorzugte Ausführungsform ist dadurch gekennzeichnet, dass es sich bei dem strahlungsempfindlichen Material um ein photopolymerisierbares oder photovernetzbares organisches Material handelt, und insbesondere, dass das Material eine nichtflüchtige monomere, oligomere oder polymere Substanz mit photopolymerisierbaren oder photodimerisierbaren ethylenisch ungesättigten Gruppen; ein kationisch härtbares System oder ein photovernetzbares Polyimid ist.

Eine andere bevorzugte Ausführungsform des erfindungsgemässen Verfahrens ist dadurch gekennzeichnet, dass das strahlungsempfindliche Material mit einem in einem inerten organischen Lösungsmittel löslichen thermoplastischen Polymer vermischt ist, das an ein Polymerrückgrat über eine Gruppe -O-, -O-CO-, -CO-$OR^{22}$-OCO- oder -CO-O- gebundene aliphatische oder cycloaliphatische Seitengruppen enthält, die in α-, β-, γ- oder ω-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen $-(CH_2)_z-$, Benzylen oder Xylylen darstellt.

Diese thermoplastischen Polymeren können einen Polymerisationsgrad von 5 bis 10 000, bevorzugt 10 bis 5000 und insbesondere 10 bis 1000 aufweisen.

Die aliphatischen und cycloaliphatischen Seitengruppen der Komponente a) sind besonders in α-, β- oder γ-Stellung, besonders in α- und/oder β-Stellung mit Cl, Br oder I substituiert. Die aliphatische Gruppe enthält bevorzugt 1 bis 4 C-Atome, die teilweise oder vollständig mit Cl, Br oder I substituiert ist. Die Substitution mit Cl ist besonders bevorzugt.

Bei der aliphatischen Seitengruppe, die linear oder cyclisch sein kann, kann es sich z.B. um lineares oder verzweigtes $C_1$-$C_{12}$-, besonders $C_1$-$C_6$- und insbesondere $C_1$-$C_4$-Alkyl handeln. Beispiele sind Methyl, Ethyl und die Isomeren von Propyl, Butyl, Pentyl, Hexyl, Heptyl, Octyl, Nonyl, Decyl, Undecyl und Dodecyl. Beispiele für cycloaliphatische Gruppen sind besonders Cyclopentyl und Cyclohexyl. Besonders bevorzugt sind mit Cl, Br oder I, besonders mit Cl ein- oder mehrfach substituiertes Methyl oder Ethyl, z.B. $-CH_2Cl$, $-CHCl_2$, $CCl_3$, $-CHClCH_3$, $-CCl_2CH_3$, $-CHCl-CH_2Cl$, $-CCl_2-CH_2Cl$, $-CHCl-CHCl_2$, $-CCl_2-CHCl_2$, $-CCl_2-CCl_3$, $-CH_2-CH_2Cl$, $-CH_2-CHCl_2$ oder $-CH_2-CCl_3$.

An die Gruppen -O-, -O-CO-, -CO-$OR^{22}$-O-CO- oder -CO-O- sind bevorzugt Gruppen der Formel $-C_mH_nX^2_o$ gebunden, worin m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt. $X^2$ steht bevorzugt für Cl, m bevorzugt für 1 bis 6, besonders 1 bis 4, n bevorzugt für 0 oder 1 bis 12, besonders 1 bis 8, o bevorzugt für 1 bis 13, besonders 1 bis 9, und die Summe von n + o = 2 m + 1.

Den thermoplastischen Polymeren können unterschiedliche Hydroxylgruppen bzw. Carboxylgruppen enthaltende Polymere oder Mischungen davon zu Grunde liegen, z.B. Polyester, Polyesteramide, Polyurethane, Polyamide, Polycarbonate und Polyimide aus Hydroxylgruppen enthaltenden Monomeren, verseifte und gegebenenfalls hydroxyalkylierte Polymerisate von Vinylestern oder -ethern, hydroxylierte Polydiolefine wie z.B. Polybutadien oder Polyisopren, Polyacrylate oder Polymethacrylate mit Hydroxyalkylresten in der Estergruppe, Polyacryl- oder Polymethacrylsäuren, oder reduzierte Polyketone oder Copolymere davon; sowie Copolymerisate von gegebenenfalls hydroxyalkyliertem Vinylalkohol, Allylalkohol, Acrylaten oder Methacrylaten bzw. Acrylsäuren oder Methacrylsäuren oder Diolefinen mit Comonomeren wie z.B. Acrylnitril, Olefinen, Diolefinen, Vinylchlorid, Vinylidenchlorid, Vinylfluorid, Vinylidenfluorid, Styrol, α-Methylstyrol, Maleinsäureanhydrid, Maleinsäureimid, Vinylethern und Vinylestern; und Polyaddukte von gegebenenfalls hydroxyalkylierten

Epoxidverbindungen mit durchschnittlich mehr als einer Epoxidgruppe im Molekül und Diolen, primären Monoaminen, disekundären Diaminen, disekundären linearen oder cyclischen Dicarbonsäurediamiden oder Dicarbonsäuren.

Eine bevorzugte Ausführungsform ist dadurch gekennzeichnet, dass es sich bei dem thermoplastischen Polymer um ein lineares Polyaddukt aus einer Glycidylverbindung mit durchschnittlich mehr als einer Epoxidgruppe und einem Diol, primären Monoamin, disekundären Diamin, disekundären linearen oder cyclischen Dicarbonsäurediamid oder einer Dicarbonsäure handelt, in dem das H-Atom der sekundären OH-Gruppen mindestens teilweise durch eine Gruppe $-CO-C_mH_nX^2_o$ substituiert ist, worin m für eine Zahl von 1 bis 12, n für 0 oder eine Zahl von 1 bis 24 und o eine Zahl von 1 bis 25 sind, und die Summe von n + o = 2 m + 1 ist, und $X^2$ für Cl, Br oder I steht.

Den Polyaddukten liegen bevorzugt Glycidylverbindungen mit durchschnittlich zwei Epoxidgruppen im Molekül zu Grunde.

Als Glycidylverbindungen kommen vor allem solche mit zwei an ein Heteroatom (z.B. Schwefel, vorzugsweise Sauerstoff oder Stickstoff) gebundenen Glycidylgruppen, β-Methylglycidylgruppen oder 2,3-Epoxycyclopentylgruppen in Frage; genannt seien insbesondere Bis-(2,3-epoxycyclopentyl)ether; Diglycidylether von mehrwertigen aliphatischen Alkoholen, wie 1,4-Butandiol, oder Polyalkylenglykolen, wie Polypropylenglykole; Diglycidylether von cycloaliphatischen Polyolen, wie 2,2-Bis-(4-hydroxycyclohexyl)-propan; Diglycidylether von mehrwertigen Phenolen, wie Resorcin, Bis-(p-hydroxyphenyl)-methan, 2,2-Bis-(p-hydroxyphenyl)-propan (=Diomethan), 2,2-Bis-(4′-hydroxy-3′,5′-dibromphenyl)-propan, 1,3-Di-(p-hydroxyphenyl)-ethan; Di-(β-methylglycidyl)-ether der oben angeführten zweiwertigen Alkohole oder zweiwertigen Phenole; Diglycidylester von Dicarbonsäuren, wie Phthalsäure, Terephthalsäure, $\Delta^4$-Tetrahydrophthalsäure und Hexahydrophthalsäure; N,N-Diglycidylderivate von primären Aminen und Amiden und heterocyclischen, zwei N-Atome enthaltenden Stickstoffbasen, und N,N′-Diglycidylderivate von disekundären Diamiden und Diaminen, wie N,N-Diglycidylanilin, N,N-Diglycidyltoluidin, N,N-Diglycidyl-p-aminophenyl-methyl-ether, N,N′-Dimethyl-N,N′-diglycidyl-bis-(p-aminophenyl)-methan; N′,N″-Diglycidyl-N-phenyl-isocyanurat; N,N′-Diglycidylethylenharnstoff; N,N′-Diglycidyl-5,5-dimethyl-hydantoin, N,N′-Diglycidyl-5-isopropyl-hydantoin, N,N-Methylen-bis-(N′,N′-diglycidyl-5,5-dimethylhydantoin), 1,3-Bis-(N-glycidyl-5,5-dimethylhydantoin)-2-hydroxypropan; N,N′-Diglycidyl-5,5-dimethyl-6-isopropyl-5,6-dihydro-uracil.

Die Glycidylverbindungen können mit aliphatischen, cycloaliphatischen oder aromatischen Diolen zu den bevorzugten Polyaddukten umgesetzt werden, wobei durch Addition an der Glycidylgruppe eine sekundäre Alkoholgruppe gebildet wird, die modifiziert werden kann.

Die Glycidylverbindungen können aber auch mit primären, aliphatischen, cycloaliphatischen oder aromatischen Monoaminen (z.B. Anilin, Toluidin, $C_1$-$C_{12}$-Alkylaminen, $C_2$-$C_{12}$-Hydroxyalkylaminen), aliphatischen, cycloaliphatischen oder aromatischen Dicarbonsäuren (z.B. Maleinsäure, Adipinsäure, Trimethyladipinsäure, Sebacinsäure, Azelainsäure, Bernsteinsäure, Dodecylbernsteinsäure, Phthalsäure, Terephthalsäure, $\Delta^4$-Tetrahydrophthalsäure, Hexahydrophthalsäure, 4-Methylhexahydrophthalsäure, 3,6-Endomethylen-$\Delta^4$-tetrahydrophthalsäure, 4-Methyl-3,6-endomethylen-$\Delta^4$-tetrahydrophthalsäure) oder aliphatischen, cycloaliphatischen, heterocyclischen oder aromatischen Bissekundäraminen oder Bissekundärcarbonsäureamiden (z.B. N,N′-Dimethylethylendiamin, N,N′-Dimethylpropylen-1,3-diamin, N,N′-Dimethylhexamethylendiamin, N,N′-Dicyclohexylhexamethylendiamin, N,N′,N″-Trimethyldiethylentriamin, N,N′-Diethylpropylen-1,3-diamin, N-Methyl-3,5,5-trimethyl-3-(methylaminomethyl)-cyclohexylamin, N,N′-dimethylierte oder -diethylierte aromatische Diamine, z.B. m- oder p-Phenylendiamin, Bis-(4-aminophenyl)-methan oder -sulfon, 2,2-Bis-(4-aminophenyl)-propan, N,N-Dimethyl-m-xylylendiamin, sowie Ethylenharnstoff, 5,5-Dimethylhydantoin, 5-Isopropylhydantoin, N,N-Methylen-bis-5,5-dimethylhydantoin, 1,3-Bis-(5,5-dimethyl)-2-hydroxypropan, 5,5-Dimethyl-6-isopropyl-5,6-dihydrouracil), durch Polyaddition zu linearen Polyaddukten umgesetzt werden.

Bevorzugt ist ein erfindungsgemässes Verfahren, worin das Polyaddukt

a) 100 bis 0,1 Mol-% gleiche oder verschiedene Struktureinheiten der Formel V

$$-O-R^{24}-O-CH_2-\underset{\displaystyle OR^{26}OCOC_mH_nX^2_o}{\underset{|}{C}H}-CH_2-OR^{25} \qquad (V)$$

und

b) 99,9 bis 0 Mol-% gleiche oder verschiedene Struktureinheiten der Formel VI

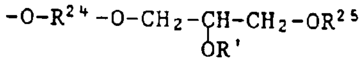

(VI)

enthält, bezogen auf das Polyaddukt, wobei $R^{24}$ und $R^{25}$ unabhängig voneinander den um zwei Hydroxylgruppen verminderten Rest eines Diols mit aliphatischen oder aromatischen Diolgruppen darstellen, und R′ H, unsubstituiertes oder mit OH substituiertes $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet, -$OR^{26}$- eine direkte Bindung oder $R^{26}$ unsubstituiertes oder mit $C_1$-$C_{16}$-Alkyl substituiertes Ethylen darstellt, und $X^2$, m, n und o die zuvor angegebenen Bedeutungen haben.

Bevorzugt sind 100 bis 20, besonders 30 bis 100 Mol% Struktureinheiten der Formel V, und 80 bis 0, besonders 70 bis 0 Mol% Struktureinheiten der Formel VI enthalten.

In einer bevorzugten Ausführungsform stellen $R^{24}$ und $R^{25}$ gleiche Reste dar. $R^{24}$ und $R^{25}$ in der Bedeutung als Rest mit aliphatischen Diolgruppen enthält bevorzugt 2 bis 12, besonders 2 bis 8 C-Atome. Die Hydroxylgruppen können an offenkettige oder cyclische aliphatische Reste gebunden sein. Als aliphatischer Rest kommt z.B. lineares oder verzweigtes $C_2$-$C_{12}$-Alkylen, $C_3$-$C_8$-Cycloalkylen, $C_1$-$C_4$-Alkyl-$C_5$-$C_8$-cycloalkyl, Cyclohexylmethylen oder Cyclohexyldimethylen in Frage. Beispiele sind Ethylen, 1,2- oder 1,3-Propylen, 1,2-, 1,3- oder 1,4-Butylen, 1,2-, 1,3-, 1,4- oder 1,5-Pentylen, 1,2-, 1,3-, 1,4-, 1,5 oder 1,6-Hexylen, Heptylen, Octylen, Nonylen, Decylen, Undecylen, Dodecylen, 1,3-Cyclopentylen, 1,3-oder 1,4-Cyclohexylen, 2-Methyl-1,4-cyclohexylen und Cyclohexyl-1,4-dimethylen.

Die aromatischen Diolgruppen der für die Polyaddukte verwendeten Diole sind insbesondere phenolische Gruppen. Die Diolreste mit phenolischen Gruppen enthalten bevorzugt 6-30, besonders 6-20 C-Atome. Eine bevorzugte Ausführungsform sind Zusammensetzungen, worin $R^{24}$ und $R^{25}$ unabhängig voneinander einen Rest der Formel

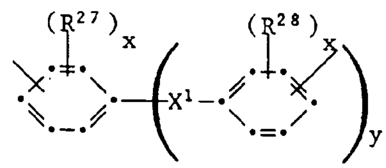

darstellen, worin $X^1$ eine direkte Bindung, $C_1$-$C_4$-Alkylen, $C_2$-$C_{12}$-Alkyliden, $C_5$-$C_8$-Cycloalkyliden, -O-, -S-, -SO-, -$SO_2$-, -CO-, -$CO_2$-, -N($C_1$-$C_4$-Alkyl)- oder -Si($CH_3$)$_2$- bedeutet, $R^{27}$ und $R^{28}$ unabhängig voneinander H, Halogen, $C_1$-$C_4$-Alkyl oder $C_1$-$C_4$-Alkoxy sind, und x 0, 1 oder 2 bedeutet und y für 0 oder 1 steht.

$X^1$ stellt bevorzugt eine direkte Bindung, Methylen, Ethylen, $C_2$-$C_6$-Alkyliden, Cyclohexyliden oder Cyclopentyliden, -O- oder -S- dar. $R^{27}$ und $R^{28}$ stehen vorzugsweise für H oder Methyl und y steht bevorzugt für 1.

Insbesondere bedeuten $R^{24}$ und $R^{25}$ den Rest

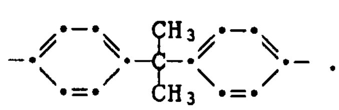

$R^{26}$ als mit Alkyl substituiertes Ethylen enthält bevorzugt $C_1$-$C_4$- und besonders $C_1$- oder $C_2$-Alkyl. Besonders bevorzugt sind Ethylen, 1,2-Propylen und 1,2- oder 2,3-Butylen.

R′ in der Bedeutung von $C_1$-$C_{20}$-Alkyl kann linear oder verzweigt sein. R′ in der Bedeutung von Acyl kann z.B. $C_1$-$C_{20}$-Alkyl-CO-, $C_5$-$C_8$-Cycloalkyl-CO-, $C_1$-$C_{15}$-Alkyl-$C_5$-$C_8$-cycloalkyl-CO-, $C_5$-$C_8$-Cycloalkyl-$CH_2$-CO-, $C_1$-$C_{14}$-Alkyl-$C_5$-$C_8$-cycloalkyl-$CH_2$-CO-, Phenyl-CO-, Benzyl-CO-, $C_1$-$C_{14}$-Alkylphenyl-CO- oder -benzyl-COsein. Bei dem Kohlenwasserstoffrest im Aminocarbonyl kann es sich z.B. um $C_1$-$C_{20}$-Alkyl-, $C_5$-$C_8$-Cycloalkyl-, $C_1$-$C_{15}$-Alkyl-$C_5$-$C_8$-cycloalkyl-, $C_5$-$C_8$-Cycloalkyl-$CH_2$-, $C_1$-$C_{14}$-Alkyl-$C_5$-$C_8$-cycloalkyl-$CH_2$-, Phenyl-, Benzyl-, $C_1$-$C_{14}$-Alkylphenyl- oder -benzyl handeln. R′ steht bevorzugt für H.

Eine andere bevorzugte Ausführungsform des erfindungsgemässen Verfahrens ist dadurch gekennzeichnet, dass das thermoplastische Polymer ein Homo- oder Copolymer eines Acrylsäure- oder Methacrylsäureesters ist, das chlorierte, bromierte und/oder iodierte aliphatische oder cycloaliphatische Gruppen in der Estergruppe enthält.

Eine besonders bevorzugte Ausführungsform ist dadurch gekennzeichnet, dass das thermoplastische Polymer

a) 0,1 bis 100 Mol-% mindestens eines Strukturelements der Formel III

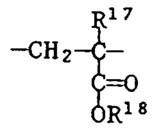 (III),

und

b) 0 bis 99,9 Mol-% mindestens eines Strukturelements der Formel IV

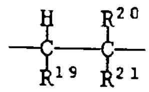 (IV)

enthält, bezogen auf das Polymer, worin $R^{17}$ für H oder Methyl steht; $R^{18}$ einen Rest $-(R^{22}-O-CO)_z-C_mH_nX^2_o$ darstellt, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt; $R^{19}$ H, $C_1$-$C_6$-Alkyl oder -$COOR^{23}$ bedeutet; $R^{20}$ für H, F, Cl, CN oder $C_1$-$C_6$-Alkyl steht; und $R^{21}$ H, F, Cl, CN, $R^{23}$-O-, $C_1$-$C_{12}$-Alkyl, -$COOR^{23}$, -O-CO-$R^{23}$, -$COOR^{22}$-OH,

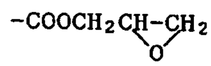

oder Phenyl darstellt, worin $R^{22}$ die zuvor angegebene Bedeutung hat und $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt.

Bevorzugt sind 100 bis 20, besonders 100 bis 30 Mol% Struktureinheiten der Formel III und 80 bis 0, besonders 70 bis 0 Mol% Struktureinheiten der Formel IV enthalten.

$R^{17}$ steht bevorzugt für Methyl. Für $X^2$, m, n und o gelten die zuvor angegebenen Bevorzugungen und z bedeutet bevorzugt 1.

$R^{22}$ ist bevorzugt unsubstituiert oder mit OH oder Cl substituiert. $R^{22}$ enthält als Alkylen bevorzugt 2 bis 6 C-Atome. Das Alkylen kann linear oder verzweigt sein. Beispiele sind Ethylen und die Isomeren von Propylen, Butylen, Pentylen, Hexylen, Heptylen, Octylen, Nonylen, Decylen, Undecylen und Dodecylen. $R^{22}$ ist als Cycloalkylen besonders Cyclohexylen und in den Cycloalkylen enthaltenden Resten bevorzugt Cyclohexylen.

$R^{23}$ kann lineares oder verzweigtes $C_1$-$C_{18}$-, bevorzugt $C_1$-$C_{12}$- und besonders $C_1$-$C_6$-Alkyl sein. $R^{23}$ stellt als Cycloalkyl besonders Cyclopentyl oder Cyclohexyl dar. Bei $R^{23}$ als ($C_1$-$C_{12}$-Alkyl)-cycloalkyl ist das Cycloalkyl besonders Cyclopentyl oder Cyclohexyl und die Alkylgruppe kann linear oder verzweigt sein und enthält bevorzugt 1 bis 6, besonders 1 bis 4 C-Atome. Bedeutet $R^{23}$ Alkylphenyl oder Alkylbenzyl, so kann die Alkylgruppe linear oder verzweigt sein und enthält bevorzugt 1 bis 6, besonders 1 bis 4 C-Atome.

$R^{19}$ steht bevorzugt für H. Bedeutet $R^{19}$ Alkyl, so handelt es sich bevorzugt um Methyl oder Ethyl. Bedeutet $R^{19}$ -$COOR^{23}$, so stellt $R^{23}$ bevorzugt $C_1$-$C_{12}$-, besonders $C_1$-$C_6$-Alkyl dar.

Bedeutet $R^{20}$ Alkyl, so handelt es sich bevorzugt um $C_1$-$C_4$-Alkyl, z.B. Methyl, Ethyl, n-Propyl und n-Butyl. $R^{20}$ steht bevorzugt für H, Cl oder $C_1$-$C_4$-Alkyl.

Bedeutet $R^{21}$ die Gruppe $R^{23}$-O-, so stellt $R^{23}$ bevorzugt $C_1$-$C_{12}$-, besonders $C_1$-$C_6$-Alkyl dar. Bedeutet $R^{21}$ Alkyl, so enthält es bevorzugt 1 bis 6, besonders 1 bis 4 C-Atome. Bedeutet $R^{21}$ die Gruppe -$COOR^{23}$, so stellt $R^{23}$ bevorzugt $C_{1-12}$-, besonders $C_1$-$C_6$-Alkyl, Cyclopentyl oder Cyclohexyl dar. Bedeutet $R^{21}$ die Gruppe -OCO-$R^{23}$, so stellt $R^{23}$ bevorzugt $C_1$-$C_{12}$-, besonders $C_1$-$C_6$-Alkyl, Phenyl oder Benzyl dar.

In der Gruppe-$COOR^{22}OH$ für $R^{21}$ gelten die zuvor für $R^{22}$ angegebenen Bevorzugungen.

In einer bevorzugten Ausführungsform stehen $R^{19}$ für H, $R^{20}$ für H, F, Cl, Methyl oder Ethyl, und $R^{21}$ für F, Cl, CN, $C_1$-$C_4$-Alkyl, $C_1$-$C_6$-Alkoxy, -COO-$C_1$-$C_6$-Alkyl, -COO-$R^{22}$-OH, -OOC-$C_1$-$C_6$-Alkyl oder Phenyl.

Ein bevorzugtes Verfahren ist dadurch gekennzeichnet, dass $R^{17}$ für Methyl steht; $R^{18}$ einen Rest -$R^{22}$-O-CO-$C_mH_nX^2_o$ darstellt, worin m für eine Zahl von 1 bis 6, n für 0 oder eine Zahl von 1 bis 12 und o für eine Zahl

von 1 bis 13 stehen, und die Summe von n + o = 2 m + 1 ist, $X^2$ für Cl steht, und $R^{22}$ unsubstituiertes oder mit OH oder Cl substituiertes $C_2$-$C_6$-Alkylen, Cyclopentylen, Cyclohexylen, Cyclopentylen-$CH_2$-, Cyclohexylen-$CH_2$- oder Cyclohexylen$-(CH_2)_z-$ darstellt; $R^{19}$ H bedeutet; $R^{20}$ H, F, Cl oder $C_1$-$C_4$-Alkyl ist; und $R^{21}$ H,F, Cl, CN, $R^{23}$-O-, $C_1$-$C_6$-Alkyl, -$COOR^{23}$, -O-CO-$R^{23}$, -$COOR^{22}$-OH,

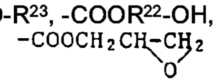

oder Phenyl darstellt, $R^{22}$ die zuvor angegebene Bedeutung hat und $R^{23}$ $C_1$-$C_6$-Alkyl, $C_5$- oder $C_6$-Cycloalkyl, Phenyl oder Benzyl sind.

Eine andere bevorzugte Zusammensetzung ist dadurch gekennzeichnet, dass $R^{17}$ Methyl ist; $R^{18}$ einen Rest -$R^{22}$-O-CO-$C_mH_nX^2_o$ darstellt, worin m für eine Zahl von 1 bis 4, n für 0 oder eine Zahl von 1 bis 8 und o für eine Zahl von 1 bis 13 stehen und die Summe von n + o = 2 m + 1 ist, $X^2$ Cl bedeutet; $R^{22}$ lineares $C_2$-$C_6$-Alkylen oder -$CH_2CHOHCH_2$- darstellt; $R^{19}$ und $R^{20}$ H bedeuten; und $R^{21}$ -$COOR^{22}$OH oder -$COOR^{23}$ bedeuten, worin $R^{22}$ die zuvor angegebene Bedeutung hat und $R^{23}$ $C_1$-$C_6$-Alkyl ist.

Besonders bevorzugt sind Zusammensetzungen, worin in Formel III $R^{17}$ für H oder $CH_3$ und $R^{22}$ für lineares oder verzweigtes $C_2$-$C_6$-Alkylen, Cyclopentylen oder Cyclohexylen stehen, und in Formel IV $R^{19}$ H bedeutet, $R^{20}$ H oder Methyl darstellt, und $R^{21}$ -$COOR^{23}$ oder -$COOR^{22}$OH bedeutet, und $R^{22}$ und $R^{23}$ die zuvor angegebenen Bedeutungen haben.

Eine weitere bevorzugte Ausführungsform des erfindungsgemässen Verfahrens ist dadurch gekennzeichnet, dass es sich bei dem thermoplastischen Polymer um ein Homo-oder Copolymer des Vinylalkohols handelt, in dem das H-Atom der sekundären OH-Gruppe mindestens teilweise mit einer Gruppe -Y-$C_mH_nX^2_o$ substituiert ist, worin Y eine direkte Bindung, -CO- oder -$R^{26}$-O-CO-bedeutet, $X^2$ für Cl, Br oder I steht, m eine Zahl von 1 bis 12, n für 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt.

Bevorzugt sind Copolymere enthalten.

Bevorzugt ist ein solches Verfahren, worin das Copolymer

a) 90 bis 0,1 Mol% Struktureinheiten der Formel VII

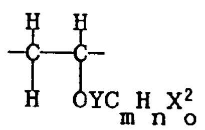

(VII),

und

b) 99,9 bis 10 Mol% gleiche oder verschiedene Struktureinheiten der Formel VIII

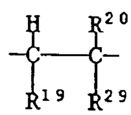

(VIII),

enthält, worin Y eine direkte Bindung, -CO- oder -$R^{26}$-O-CO- bedeutet, $X^2$ für Cl, Br oder I steht, m eine Zahl von 1 bis 12, n für 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt; $R^{19}$ H, $C_1$-$C_6$-Alkyl oder -$COOR^{23}$ bedeutet; $R^{20}$ für H, F, Cl, CN oder $C_1$-$C_6$-Alkyl steht; und $R^{29}$ H, F, Cl, CN, OH, $R^{23}$O-, $C_1$-$C_{12}$-Alkyl, -$COOR^{23}$,-O-CO-$R^{23}$, -$OR^{34}$OH oder Phenyl darstellt; $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt und $R^{34}$ unsubstituiertes oder mit $C_1$-$C_{16}$-Alkyl substituiertes Ethylen ist.

Bevorzugt sind 70 bis 10, besonders 60 bis 20 Mol% Struktureinheiten der Formel VII, und 30 bis 90, besonders 40 bis 80 Mol% Strukturelemente der Formel VIII enthalten.

Für die Bedeutungen von $R^{19}$ und $R^{20}$ in Formel VIII gelten die zuvor angegebenen Bevorzugungen. Für die Bedeutungen von $R^{22}$ und $R^{23}$ gelten ebenfalls die zuvor angegebenen Bevorzugungen.

$R^{29}$ steht bevorzugt für H, F, Cl, CN, OH, $R^{23}$-O-, $C_1$-$C_4$-Alkyl, -$COOR^{23}$, O-CO-$R^{23}$, Phenyl, -$OCH_2CH_2OH$ oder -$OCH_2CH(CH_3)OH$, wobei $R^{23}$ $C_1$-$C_6$-Alkyl ist.

Insbesondere sind solche Zusammensetzungen bevorzugt, worin $R^{19}$ und $R^{20}$ H sind und $R^{29}$ -$OCOR^{23}$ darstellt, worin $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, Benzyl, ($C_1$-$C_{12}$-Al-

kyl)phenyl oder ($C_1$-$C_{12}$-Alkyl)benzyl darstellt.

Eine bevorzugte Ausführungsform ist dadurch gekennzeichnet, dass Y eine direkte Bindung, -CO-, $-CH_2CH_2O$-CO- oder $CH_2CH(CH_3)O$-CO- ist, $X^2$ Cl bedeutet, m eine Zahl von 1 bis 6, n O oder eine Zahl von 1 bis 12 und o eine Zahl von 1 bis 13 sind und die Summe von n + o = 2 m + 1 ist; $R^{19}$ und $R^{20}$ H bedeuten; und $R^{29}$ H, F, Cl, CN, OH, $R^{23}O$-, $C_1$-$C_4$-Alkyl, $-COOR^{23}$, -O-CO-$R^{23}$, Phenyl, $-OCH_2CH_2OH$ oder $-OCH_2CH(CH_3)OH$ darstellt; und $R^{23}$ $C_1$-$C_6$-Alkyl, $C_5$- oder $C_6$-Cycloalkyl, Phenyl oder Benzyl ist.

Eine bevorzugte Ausführungsform des erfindungsgemässen Verfahrens ist dadurch gekennzeichnet, dass das strahlungsempfindliche, Cl-, Br- und/oder I-Atome enthaltende Material ein Copolymer ist, das photodimerisierbare Gruppen im Polymerrückgrat oder als Seitengruppen enthält, und das an ein Polymerrückgrat über eine Gruppe -O-, -O-CO-, -CO-O$R^{22}$-OCO- oder -CO-O- gebundene aliphatische oder cycloaliphatische Seitengruppen enthält, die in $\alpha$-, $\beta$-, $\gamma$- oder $\omega$-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt.

Eine der Ausführungsformen ist dadurch gekennzeichnet, dass es sich bei den photodimerisierbaren Gruppen um eine Imidylgruppe der Formel IX handelt,

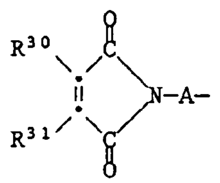 (IX),

worin $R^{30}$ und $R^{31}$ unabhängig voneinander Cl, Br, Phenyl oder $C_1$-$C_4$-Alkyl bedeuten oder $R^{30}$ und $R^{31}$ zusammen $-(CH_2)_3-$, $-(CH_2)_4-$ oder

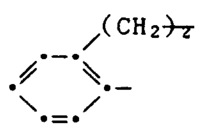

bedeuten, und A für unsubstituiertes oder mit Hydroxyl substituiertes, lineares oder verzweigtes $C_2$-$C_{12}$-Alkylen, oder Cyclohexylen oder Phenylen steht, oder dass es sich um eine Cinnamoylgruppe der Formel

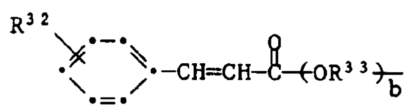 (X)

handelt, worin $R^{32}$ H, $C_1$-$C_{12}$-Alkoxy, Phenyloxy oder $C_1$-$C_{12}$-Alkyl-CO-O- darstellt, $R^{33}$ für $C_2$-$C_6$-Alkylen steht und b 0 oder 1 bedeutet. $R^{30}$ und $R^{31}$ können lineares oder verzweigtes Alkyl, z.B. Methyl, Ethyl, n- und i-Propyl und n-, i- oder t-Butyl darstellen. Bevorzugt sind $R^{30}$ und $R^{31}$ Methyl. A stellt bevorzugt $C_2$-$C_6$-Alkylen dar. Beispiele für Alkylen sind Ethylen und die Isomeren von Propylen, Butylen, Pentylen, Hexylen, Heptylen, Octylen, Nonylen, Decylen, Undecylen und Dodecylen.

In Formel X stellt $R^{32}$ bevorzugt H, $C_1$-$C_4$-Alkoxy, Phenyloxy oder $C_1$-$C_6$-Alkyl-CO-O- dar.

Eine andere der Ausführungsformen ist dadurch gekennzeichnet, dass die aliphatische Cl, Br oder I enthaltende Gruppe der Formel $-C_mH_nX^2_o$ entspricht, worin m für eine Zahl von 1 bis 12, n für O oder eine Zahl von 1 bis 24 und o für eine Zahl von 1 bis 25 stehen und die Summe von n + o = 2 m + 1 ist, $X^2$ für Cl, Br oder I steht.

Eine besondere Ausführungsform ist dadurch gekennzeichnet, dass das Copolymer

a) 0,1 bis 90 Mol-% mindestens eines Strukturelements der Formel III

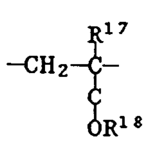 (III)

b) 10 bis 99,9 Mol-% mindestens eines Strukturelementes der Formel XI oder XIa

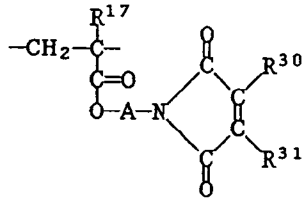

(XI),

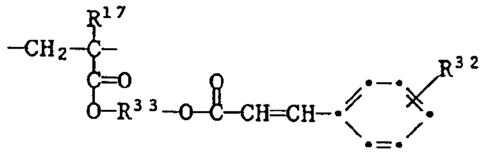

(XIa),

und

c) 0 bis 89,9 Mol-% mindestens eines Strukturelements der Formel IV

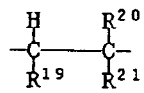

(IV)

enthält, bezogen auf das Polymer, worin $R^{17}$ für H oder Methyl steht; $R^{18}$ einen Rest $-(R^{22}-O-CO)_z-C_mH_nX^2_o$ darstellt, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt; $R^{19}$ H, $C_1$-$C_6$-Alkyl oder -$COOR^{23}$ bedeutet; $R^{20}$ für H, F, Cl, CN, oder $C_1$-$C_6$-Alkyl steht; und $R^{21}$ H, F, Cl, CN, $R^{23}$-O-, $C_1$-$C_{12}$-Alkyl, -$COOR^{23}$, -O-CO-$R^{23}$, -$COOR^{22}$-OH,

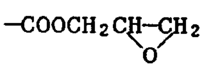

oder Phenyl darstellt, $R^{22}$ die zuvor angegebene Bedeutung hat und $R^{23}$ $C_1$-$C_{18}$-Alkyl, $C_5$-$C_7$-Cycloalkyl, ($C_1$-$C_{12}$-Alkyl)-$C_5$-$C_7$cycloalkyl, Phenyl, ($C_1$-$C_{12}$-Alkyl)phenyl, Benzyl oder ($C_1$-$C_{12}$-Alkyl)benzyl darstellt, $R^{30}$ und $R^{31}$ unabhängig voneinander Cl, Br, Phenyl oder $C_1$-$C_4$-Alkyl bedeuten oder $R^{30}$ und $R^{31}$ zusammen $-(CH_2)_3-$, $-(CH_2)_4-$ oder

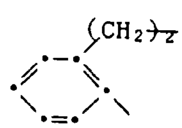

bedeuten, und A für unsubstituiertes oder mit Hydroxyl substituiertes lineares oder verzweigtes $C_2$-$C_{12}$-Alkylen, oder Cyclohexylen oder Phenylen steht, $R^{32}$ H, $C_1$-$C_{12}$-Alkoxy, Phenyloxy oder $C_1$-$C_{12}$-Alkyl-CO-O- darstellt und $R^{33}$ für $C_2$-$C_6$-Alkylen steht.

Eine andere bevorzugte Ausführungsform ist dadurch gekennzeichnet, dass das Copolymer ein Polyaddukt ist, das

a) 0,1 bis 90 Mol-% gleiche oder verschiedene Struktureinheiten der Formel V

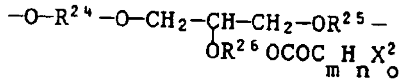 (V)

b) 10 bis 99,9 Mol-% mindestens eines Strukturelementes der Formeln XII oder XIIa

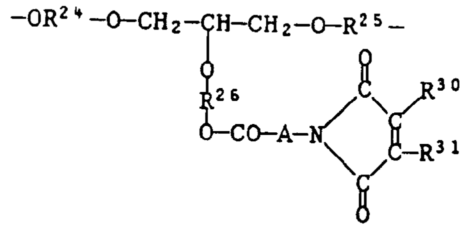 (XII),

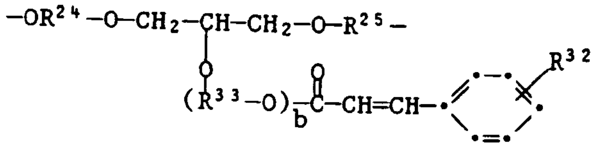 (XIa),

und

c) 89,9 bis 0 Mol-% gleiche oder verschiedene Struktureinheiten der Formel VI

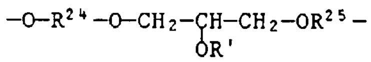 (VI)

enthält, bezogen auf das Polyaddukt, wobei $R^{24}$ und $R^{25}$ unabhängig voneinander den um zwei Hydroxylgruppen verminderten Rest eines Diols mit aliphatischen oder aromatischen Diolgruppen darstellen, R′, H, unsubstituiertes oder mit OH substituiertes $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet, $-OR^{26}$ eine direkte Bindung oder $R^{26}$ unsubstituiertes oder mit $C_1$-$C_{16}$-Alkyl substituiertes Ethylen darstellen, und A, $R^{30}$, $R^{31}$, $R^{32}$, $R^{33}$, $X^2$, m, n, o und b die zuvor angegebenen Bedeutungen haben.

Geeignet sind auch solche Polyaddukte, die Chalkongruppen in der Polymerkette enthalten, z.B. solche mit Strukturelementen der Formeln V und IV, wobei $R^{24}$ in Formel V einen Rest der Formel

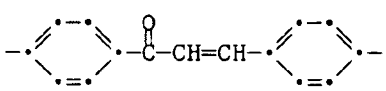 oder 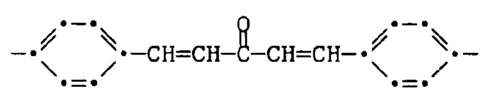

bedeutet.

Eine weitere bevorzugte Ausführungsform ist dadurch gekennzeichnet, dass das Copolymer

a) 90 bis 0,1 Mol % Struktureinheiten der Formel VII

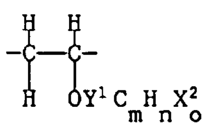 (VII)

b) 10 bis 99,9 Mol-% mindestens eines Strukturelementes der Formeln XIII oder XIIIa

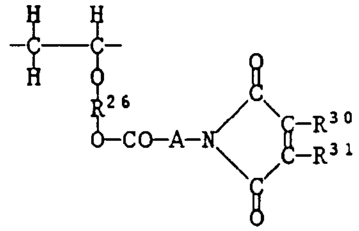

(XIII),

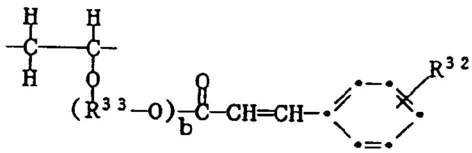

(XIIIa),

und

c) 89,9 bis 0 Mol % gleiche oder verschiedene Struktureinheiten der Formel VIII

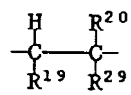

(VIII),

enthält, worin $Y^1$ -CO- oder $-R^{26}$ -O-CO- bedeutet, $X^2$ für Cl, Br oder I steht, m eine Zal von 1 bis 12, n 0 oder eine Zahl von 1 bis 24, o eine Zahl von 1 bis 25 sind und die Summe von n + 0 = 2 m + 1 ist, und $R^{26}$ unsubstituiertes oder mit $C_1$-$C_{16}$-Alkyl substituiertes Ethylen darstellt; $R^{19}$ H, $C_1$-$C_6$-Alkyl oder $-COOR^{23}$ bedeutet; $R^{20}$ für H, F, Cl, CN, oder $C_1$-$C_6$-Alkyl steht; und $R^{29}$ H, F, Cl, CN, OH, $R^{23}O$-, $C_1$-$C_{12}$-Alkyl, $-COOR^{23}$, O-CO-$R^{23}$, $-OR^{34}OH$ oder Phenyl darstellt; $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt und $R^{34}$ unsubstituiertes oder mit $C_1$-$C_{16}$-Alkyl substituiertes Ethylen ist, und A, $R^{30}$, $R^{31}$, $R^{32}$ und $R^{33}$ die zuvor angegebenen Bedeutungen haben.

Für die Definitionen in diesen Ausführungsformen gelten die zuvor angegebenen Bevorzugungen.

Die zuvor beschriebenen Polymeren mit halogenhaltigen oder zusätzlich strahlungsempfindlichen Gruppen sind neu.

Die Herstellung dieser thermoplastischen Polymeren kann in an sich bekannter Weise dergestalt erfolgen, dass man ein Carboxylgruppen enthaltendes Polymer oder seine esterbildenden Derivate (z.B. Polymethacrylsäure oder Ester davon) mit einem Cl-, Br- und/oder I-substituierten Alkohol verestert, oder ein Hydroxylgruppen enthaltendes Polymer (z.B. Polyaddukte aus Verbindungen mit 2 Epoxidgruppen oder deren hydroxyalkylierten Derivate, Polymethacrylsäurehydroxylalkylester, Styrol-Allylalkohol-Copolymere, Polyvinylalkohole oder deren hydroxyalkylierten Derivate) mit einem Cl-, Br- oder I-substituierten Alkohol verethert, oder einer Cl-, Br- oder I-substituierten Carbonsäure oder ihrer esterbildenden Derivate wie z.B. Ester oder Säurehalogenide, verestert. Die Reaktion wird zweckmässig in einem Lösungmittel und bei Temperaturen von -20°C bis 100°C durchgeführt. Das gewünschte Polymer kann z.B. isoliert werden, indem man die flüchtigen Bestandteile gegebenenfalls im Vakuum verdampft, oder das Polymer aus der Reaktionslösung mit Wasser fällt und trocknet. Hierbei können jedoch durch Hydrolyse halogenierte Carbonsäurereste teilweise wieder abgespalten werden. Bei Mitverwendung von Alkoholen oder Carbonsäuren (bzw. esterbildenden Derivaten) mit photodimerisierbaren Gruppen gelangt man zu entsprechenden strahlungsempfindlichen Copolymeren.

Ein weiterer Gegenstand der Erfindung ist ein strahlungsempfindliches, aktivierte Cl-, Br- oder I-Atome enthaltendes Copolymer, das photodimerisierbare Gruppen im Polymerrückgrat oder als Seitengruppen enthält, und das an ein Polymerrückgrat über eine Gruppe -O-, -O-CO-, $-CO-OR^{22}-OCO-$ oder -CO-O- gebundene aliphatische oder cycloaliphatische Seitengruppen enthält, die in α-, β-, γ- oder ω-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen $-(CH_2)_r-$, Benzylen oder Xylylen darstellt.

Bevorzugt ist ein Copolymer, das dadurch gekennzeichnet ist, dass es sich bei den photodimerisierbaren Gruppen um eine Imidylgruppe der Formel IX handelt,

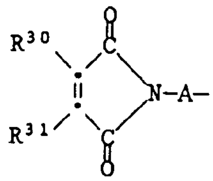 (IX),

worin $R^{30}$ und $R^{31}$ unabhängig voneinander Cl, Br, Phenyl oder $C_1$-$C_4$-Alkyl bedeuten oder $R^{30}$ und $R^{31}$ zusammen $-(CH_2)_3-$, $-(CH_2)_4-$ oder

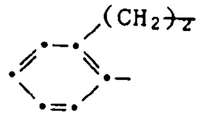

bedeuten, und A für unsubstituiertes oder verzweigtes oder mit Hydroxyl substituiertes lineares $C_2$-$C_{12}$-Alkylen, oder Cyclohexylen oder Phenylen steht, oder dass es sich um eine Cinnamoylgruppe der Formel X

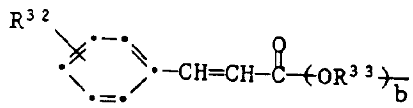 (X)

handelt, worin $R^{32}$ H, $C_1$-$C_{12}$-Alkoxy, Phenyloxy oder $C_1$-$C_{12}$-Alkyl-CO-O- darstellt, $R^{33}$ für $C_2$-$C_6$-Alkylen steht und b 0 oder 1 bedeutet.

Ebenfalls bevorzugt ist ein Copolymer, das dadurch gekennzeichnet ist, dass die aliphatische Cl, Br oder I enthaltende Gruppe der Formel-$C_mH_nX^2_o$ entspricht, worin m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht.

Ebenfalls bevorzugt ist ein Copolymer, das dadurch gekennzeichnet ist, dass es

a) 0,1 bis 90 Mol-% mindestens eines Strukturelements der Formel III

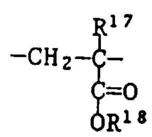 (III)

b) 10 bis 99,9 Mol-% mindestens eines Strukturelementes der Formel XI oder XIa

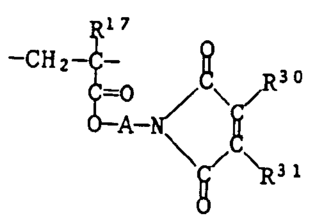 (XI)

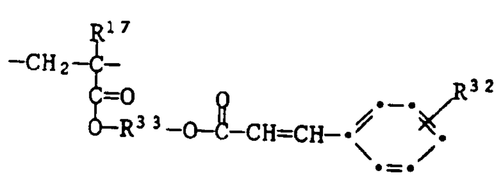 (XIa)

und

c) 0 bis 89,9 Mol-% mindestens eines Strukturelements der Formel IV

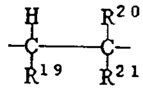

(IV)

enthält, bezogen auf das Polymer, worin $R^{17}$ für H oder Methyl steht; $R^{18}$ einen Rest $-(R^{22}-O-CO)_z-C_mH_nX^2_o$ darstellt, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt; $R^{19}$ H, $C_1$-$C_6$-Alkyl oder -$COOR^{23}$ bedeutet; $R^{20}$ für H, F, Cl, CN, oder $C_1$-$C_6$-Alkyl steht; und $R^{21}$ H, F, Cl, CN, $R^{23}$-O-, $C_1$-$C_{12}$-Alkyl, -$COOR^{23}$, -O-CO-$R^{23}$, -$COOR^{22}$-OH,

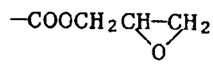

oder Phenyl darstellt, $R^{22}$ die zuvor angegebene Bedeutung hat und $R^{23}$ $C_1$-$C_{18}$-Alkyl, $C_5$-$C_7$-Cycloalkyl, ($C_1$-$C_{12}$-Alkyl)-$C_5$-$C_7$cycloalkyl, Phenyl, ($C_1$-$C_{12}$-Alkyl)phenyl, Benzyl oder ($C_1$-$C_{12}$-Alkyl)benzyl darstellt, $R^{30}$ und $R^{31}$ unabhängig voneinander Cl, Br, Phenyl oder $C_1$-$C_4$-Alkyl bedeuten oder $R^{30}$ und $R^{31}$ zusammen $-(CH_2)_3$, $-(CH_2)_4$ oder

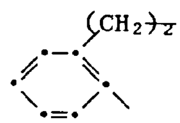

bedeuten, und A für unsubstituiertes oder verzweigtes oder mit Hydroxyl substituiertes lineares $C_2$-$C_{12}$-Alkylen, oder Cyclohexylen oder Phenylen steht, $R^{32}$ H, $C_1$-$C_{12}$-Alkoxy, Phenyloxy oder $C_1$-$C_{12}$-Alkyl-CO-O- darstellt und $R^{33}$ für $C_2$-$C_6$-Alkylen steht.

Weiter bevorzugt ist ein Copolymer, das dadurch gekennzeichnet ist, dass es ein Polyaddukt ist, das

a) 0,1 bis 90 Mol-% gleiche oder verschiedene Struktureinheiten der Formel V

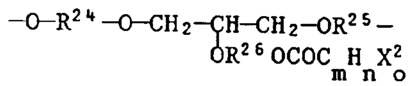

(V)

b) 10 bis 99,9 Mol-% mindestens eines Strukturelementes der Formeln XII oder XIIa

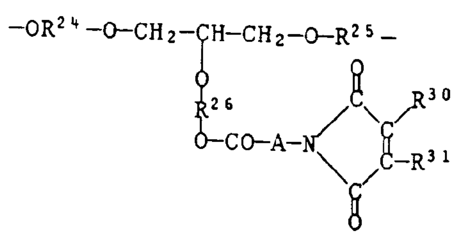

(XII),

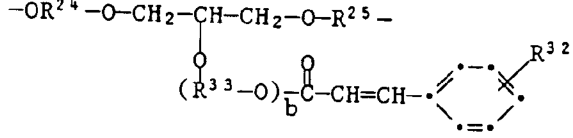

(XIa),

und

c) 89,9 bis 0 Mol-% gleiche oder verschiedene Struktureinheiten der Formel VI

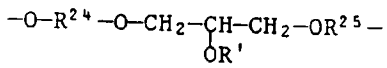

(VI)

enthält, bezogen auf das Polyaddukt, wobei $R^{24}$ und $R^{25}$ unabhängig voneinander den um zwei Hydroxylgruppen verminderten Rest eines Diols mit aliphatischen oder aromatischen Diolgruppen darstellen, R′ H, unsubstituiertes oder mit OH substituiertes $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet, -$OR^{26}$- eine direkte Bindung oder $R^{26}$ unsubstituiertes oder mit $C_1$-$C_{16}$-Alkyl substituiertes Ethylen darstellen, und A, $R^{30}$, $R^{31}$, $R^{32}$, $R^{33}$, $X^2$, m, n, o und b die zuvor angegebenen Bedeutungen haben.

Ebenfalls bevorzugt ist ein Copolymer, das dadurch gekennzeichnet ist, dass das Copolymer

a) 90 bis 0,1 Mol Struktureinheiten der Formel VII

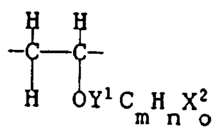

(VII)

b) 10 bis 99,9 Mol-% mindestens eines Strukturelementes der Formeln XIII oder XIIIa

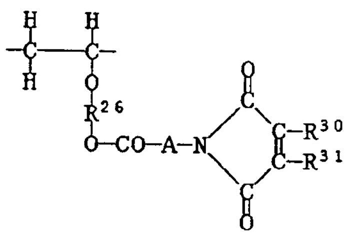

(XIII),

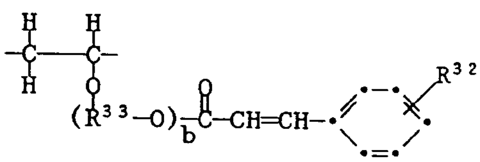

(XIIIa),

und

c) 89,9 bis 0 Mol % gleiche oder verschiedene Struktureinheiten der Formel VIII

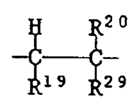

(VIII),

enthält, worin $Y^1$ -CO- oder -$R^{26}$-O-CO- bedeutet, $X^2$ für Cl, Br oder I steht, m eine Zal von 1 bis 12, n 0 oder eine Zahl von 1 bis 24, o eine Zahl von 1 bis 25 sind und die Summe von n + 0 = 2 m + 1 ist, und $R^{26}$ unsubstituiertes oder mit $C_1$-$C_{16}$-Alkyl substituiertes Ethylen darstellt; $R^{19}$ H, $C_1$-$C_6$-Alkyl oder -$COOR^{23}$ bedeutet; $R^{20}$ für H, F, Cl, CN, oder $C_1$-$C_6$-Alkyl steht; und $R^{29}$ H, F, Cl, CN, OH, $R^{23}O$-, $C_1$-$C_{12}$-Alkyl, -$COOR^{23}$, -O-CO-$R^{23}$, -$OR^{34}OH$ oder Phenyl darstellt; $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt und $R^{34}$ unsubstituiertes oder mit $C_1$-$C_{16}$-Alkyl substituiertes Ethylen ist, und A, $R^{26}$, $R^{30}$, $R^{31}$, $R^{32}$ und $R^{33}$ die zuvor angegebenen Bedeutungen haben.

Der Gehalt der Komponente a) beträgt in den erfindungsgemässen Polymeren bevorzugt 0,1 bis 50, besonders 0,1 bis 20 Mol-%, und der Gehalt an Komponente b) 99,9 bis 50 Mol %, besonders 99,9 bis 80 Mol-%. Die Komponente c) kann in einer Menge von 0,1 bis 40 Mol-% enthalten sein.

Ein weiterer Gegenstand der Erfindung ist ein Beschichtungsmittel, enthaltend

a1) ein strahlungsempfindliches organisches Material, das als Elektronenacceptor Cl-, Br- und/oder I-Atome an die strahlungsempfindliche Gruppe gebunden enthält, die so aktiviert sind, dass sie unter Einwirkung von thermischer Energie mit Verbindungen der Formel I oder Ia CT-Komplexe bilden,

a2) ein strahlungsempfindliches organisches Material und ein in einem inerten organischen Lösungsmittel lösliches thermoplastisches Polymer, das an ein Polymerrückgrat über eine Gruppe -O-, -O-CO-, -CO-OR$^{22}$-OCO- oder -CO-O- gebundene aliphatische oder cycloaliphatische Seitengruppen enthält, die in α-, β-, γ- oder ω-Stellung mindestens ein Cl-, Br- oder I-Atom enthalten, wobei R$^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt,

a3) ein Copolymer, das photodimerisierbare Gruppen im Polymerrückgrat oder als Seitengruppen enthält, und das an ein Polymerrückgrat über eine Gruppe -O-, -O-CO-, -CO-OR$^{22}$-OCO- oder -CO-O- gebundene aliphatische oder cycloaliphatische Seitengruppen enthält, die in α-, β-, γ oder ω-Stellung mindestens ein Cl-, Br- oder I-Atom enthalten, wobei R$^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt,

b) eine Verbindung der Formel I oder Ia.

c) gegebenenfalls ein inertes organisches Lösungsmittel, und

d) gegebenenfalls ein Bindemittel.

Für die erfindungsgemässen Copolymeren und das erfindungsgemässe Beschichtungsmittel gelten für die Definitionen die vorstehenden Bevorzugungen.

Das erfindungsgemäss Beschichtungsmittel kann zusätzlich ein Lösungsmittel für ein lösliches Polymer und die Komponente b) enthalten. Geeignete Lösungsmittel sind z.B. polare, aprotische Lösungsmittel, die alleine oder in Mischungen aus mindestens zwei Lösungsmitteln verwendet werden können. Beispiele sind: Ether wie Dibutylether, Tetrahydrofuran, Dioxan, Methylenglykol, Dimethylethylenglykol, Dimethyldiethylenglykol, Diethyldiethylenglykol, Dimethyltriethylenglykol, halogenierte Kohlenwasserstoffe wie Methylenchlorid, Chloroform, 1,2-Dichlorethan, 1,1,1-Trichlorethan, 1,1,2,2-Tetrachlorethan, Carbonsäureester und Lactone wie Essigsäureethylester, Propionsäuremethylester, Benzoesäureethylester, 2-Methoxyethylacetat, γ-Butyrolacton, δ-Valerolacton und Pivalolacton, Carbonsäureamide und Lactame wie N-Methylformamid, N,N-Dimethylformamid, N,N-Diethylformamid, N,N-Dimethylacetamid, N,N-Diethylacetamid, γ-Butyrolactam, ε-Caprolactam, N-Methylpyrrolidon, N-Acetylpyrrolidon, N-Methylcaprolactam, Tetramethylharnstoff, Hexamethylphosphorsäuretriamid, Sulfoxide wie Dimethylsulfoxid, Sulfone wie Dimethylsulfon, Diethylsulfon, Trimethylensulfon, Tetramethylensulfon, N-Methylpyrrolidin, N-Methylpiperidin, N-Methylmorpholin, substituierte Benzole wie Benzonitril, Chlorbenzol, o-Dichlorbenzol, 1,2,4-Trichlorbenzol, Nitrobenzol, Toluol und Xylol.

Das erfindungsgemässe Beschichtungsmittel kann zusätzlich für die Verarbeitung und Anwendung benötigte Hilfsmittel enthalten, z.B. Weichmacher, Verlaufmittel, Formtrennmittel, Füllstoffe, Flammschutzmittel, Antioxidantien und Lichtschutzmittel, Stabilisatoren, Farbstoffe, Pigmente, Photoinitiatoren, Photosensibilisatoren, und Photokatalysatoren.

Das erfindungsgemässe Beschichtungsmittel kann zusätzlich ein Bindemittel enthalten. Beispiele für Bindemittel sind zuvor beschrieben worden. Der Anteil des Bindemittels kann z.B. bis zu 95 Gew.-%, bevorzugt bis zu 80 Gew.-% betragen, bezogen auf die Komponente a1, a2 oder a3.

Die halogenhaltige Substanz der Komponente a) im erfindungsgemässen Verfahren bzw. Beschichtungsmittel ist zweckmässig mindestens in einer solchen Menge enthalten, dass sie zur Bildung von CT-Komplexen (Donor) $(Halogen)_a$ aus den Verbindungen der Komponente b) genügt, wobei $0,3 > a < 0,9$ ist. Bevorzugt ist $0,3 > a < 0,8$ und besonders $a = 0,5$ für Halogen gleich Cl und Br, und $a = 0,76$ für Halogen = Iod. Die zu verwendende Menge hängt im wesentlichen vom Halogenierungsgrad der halogenhaltigen Substanz bzw. der Seitengruppen des Polymeren und dem Anteil solcher Seitengruppen im Polymeren ab. Die Menge kann so gewählt werden, das pro Mol Verbindung der Formel I oder Ia 0,5 bis 2, besonders 1 bis 2 Mol Halogen (Cl, Br, I) in der halogenhaltigen Substanz in den Seitengruppen des Polymers der Komponente a) enthalten sind. Vorteilhaft wird ein Ueberschuss verwendet.

Die Komponente b) ist bevorzugt in einer Menge von 0,01 bis 10 Gew.-%, besonders 0,05 bis 5 Gew.-% und insbesondere 0,1 bis 3 Gew.-% enthalten, bezogen auf die Komponente a).

Die Herstellung dieser erfindungsgemässen Zusammensetzung erfolgt durch einfaches Vermischen der Komponenten, gegebenenfalls unter Mitverwendung eines Lösungsmittels.

Als Substrate können unterschiedliche feste Materialien Verwendung finden, z.B. Metalle und Metalllegierung, Carbide, Nitride, Halbmetalle wie z.B. Silicium, Glas, Keramik, Holz, Papier und gegebenenfalls verstärkte Polymere. Bevorzugt wird Glas verwendet.

Das Aufbringen der Beschichtung kann nach bekannten Verfahren erfolgen, z.B. mittels Streichen, Giessen oder Rakeln. Die aufgebrachte Schicht wird erwärmt, wobei flüchtige Substanzen entfernt werden und sich ein Netzwerk aus nadelförmigen Kristallen (Nadelfilz) der CT-Komplexe bilden. Erwärmen kann eine Temperatur von Raumtemperatur bis 300°C, bevorzugt 50 bis 250°C und insbesondere 80 bis 180°C bedeuten. Danach erfolgt die Bestrahlung unter einer Bildmaske.

Zur Bestrahlung eignen sich z.B. Lichtquellen mit hohem Anteil an kurzwelligem Licht. Hierfür stehen heute entsprechende technische Vorrichtungen und verschiedene Lampenarten zur Verfügung. Beispiele sind Kohlelichtbogenlampen, Xenonlichtbogenlampen, Quecksilberdampflampen, Metall-Halogenlampen, Fluoreszenzlampen, Argonlampen oder photographische Flutlichtlampen. Neuerdings werden auch Laserlichtquellen verwendet. Diese haben den Vorteil, dass keine Photomasken notwendig sind; der gesteuerte Laserstrahl schreibt direkt auf die photohärtbare Schicht.

Die Entwicklung kann je nach verwendetem strahlungsempfindlichen Material erfolgen, z.B. mechanische Entwicklung oder Nass- bzw. Trockenentwicklung. Sofern die Nadelnetzwerke der CT-Komplexe an den freigelegten Stellen mit der Entwicklung nicht ganz entfernt werden können, kann eine mechanische Nachbehandlung erfolgen. Wird die Bestrahlung flächenmässig vorgenommen, so erhält man antistatische oder elektrisch leitende Beschichtungen.

Die erfindungsgemässen, einen CT-Komplex enthaltenden Zusammensetzungen zeichnen sich durch eine hohe chemische Stabilität und Temperaturbeständigkeit und eine geringe Migration der CT-Komplexe aus. Ferner werden überraschend hohe Leitfähigkeiten erzielt, die bis zu 25 % der Leitfähigkeit der reinen CT-Komplexe betragen können. Die CT-Komplexe bilden ein Netzwerk aus elektrisch leitenden Kristallnadeln (Nadelfilz) in der Polymermatrix. Die hohe Stabilität bedingt nur einen geringen oder keinen Verlust der elektrischen Leitfähigkeit beim Gebrauch.

Die erfindungsgemässen antistatischen bzw. elektrisch leitenden Reliefstrukturen und ihre metallisierten Ausführungsformen können als (transparente) Elektroden bzw. leitende Verbindungen für z.B. elektronische Bauteile verwendet werden.

Die nachfolgenden Beispiele erläutern die Erfindung näher.

A) Herstellungsbeispiele

Beispiele 1-7: 28,4 g eines Polyadditionspolymeren aus Bisphenol A und Bisphenol-A-diglycidylether (Mw = 20'000) wird in 200 ml Dimethylformamid (DMF) und 60 ml Pyridin gelöst. Bei 0°C werden unter Rühren und Feuchtigkeitsausschluss 2,08 g (0,01 Mol) 3-(2′,3′-Dichlormaleinimidyl)propionsäurechlorid gelöst in 20 ml DMF zugetropft. Man lässt noch 8 h bei Raumtemperatur rühren und fällt anschliessend in Wasser. Das isolierte Polymer wird bei 80°C im Hochvakuum getrocknet. Der Gehalt an eingebauten 2,3-Dichlormaleinimidylgruppen wird aus der Elementaranalyse bestimmt (das 2,3-Dichlormaleinimidylcarbonsäurechlorid wird nach dem allgemeinen Verfahren in Angew. Makromol. Chem. 133 (1985) S. 147 - 170 hergestellt).

Bei den Beispielen 2 bis 7 wird analog verfahren, wobei man in Beispiel 2 ebenfalls 3-(2′,3′-Dichlormaleinimidyl)propionsäurechlorid, in Beispiel 3 4-(2′,3′-Dichlormaleinimidyl)benzoesäurechlorid, in den Beispielen 4 bis 6 4-(2′-3′-Dichlormaleinimidyl)buttersäurechlorid und in Beispiel 7 Zimtsäurechlorid verwendet. Die Zusammensetzung und Glasumwandlungstemperatur (Tg) sind in Tabelle 1 angegeben.

Tabelle 1

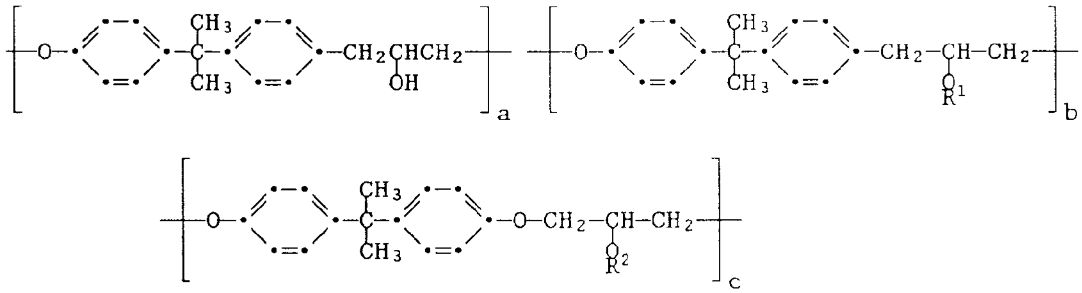

| Beispiel No. | $R^1$ | $R^2$ | $\frac{a}{a+b+c}$ | $\frac{b}{a+b+c}$ | Tg(°C) |
|---|---|---|---|---|---|
| 1 | 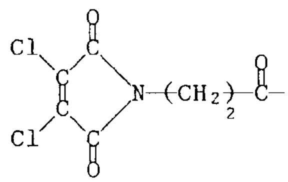 | - | 0,1 | 0,9 | 78 |
| 2 | 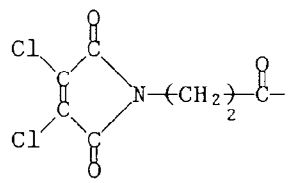 | - | 0,9 | 0,1 | 100 |
| 3 | 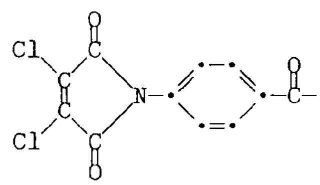 | - | 0,9 | 0,1 | 114 |
| 4 | 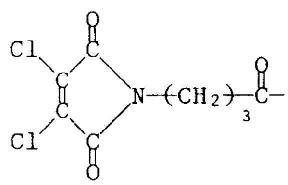 | 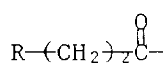 | 0 | 0,1[1)] | 69 |
| 5[3)] | 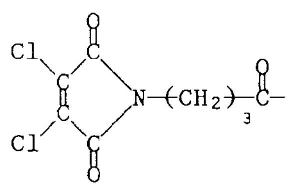 | 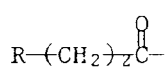 | 0 | 0,1[1)] | 76 |

Tabelle 1 (Fortsetzung)

| Beispiel No. | $R^1$ | $R^2$ | $\frac{a}{a+b+c}$ | $\frac{b}{a+b+c}$ | Tg(°C) |
|---|---|---|---|---|---|
| 6[4)] | 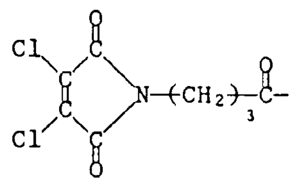 | 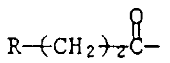 | 0 | 0,9[2)] | 100 |
| 7 | 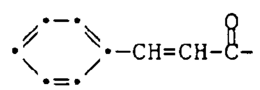 | 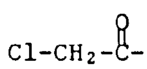 | 0 | 0,9[2)] | 76 |

1) $\frac{c}{a+b+c} = 0{,}9$, 2) $\frac{c}{a+b+c} = 0{,}1$, 3) $\bar{M}_w = 70500$, 4) $\bar{M}_w = 63065$

R = 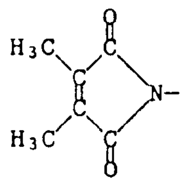

Beispiele 8-11:

Herstellung von 1,2-Dichloro-3,8-dioxo-4,7-dioxa-5,9-dimethyl-decen-9

14,42 g (0,1 Mol) 2-Hydroxypropylmethacrylat, 10 mg Di-tert-butyl-p-kresol und 23,73 g Pyridin werden in 100 ml THF vorgelegt. Bei 10°C werden zu dieser Lösung 16,14 g (0,1 Mol) 2,3-Dichlorpropionsäure in 20 ml THF tropfenweise zugegeben. Nach beendeter Zugabe wird die Lösung noch 4 Stunden bei 40°C gerührt. Man engt am Rotationsverdampfer ein, nimmt das verbliebene Oel in 50 ml Dichlormethan auf and wäscht mehrfach mit Bicarbonatlösung und trocknet die organische Phase mit Natriumsulfat. Das Produkt wird durch Destillation gereinigt. Ausbeute: 19,3g (71 %), Siedepunkt = 104°C/0,6 mbar.

Herstellung von 1,1,1-Trichloro-2,7-dioxo-3,6-dioxa-8-methyl-nonen-8

13,02g (0,1 Mol) 2-Hydroxyethylmethacrylat und 10 mg Di-tert-butyl-p-kresol werden in 100 ml THF gelöst. Unter Eiskühlung gibt man eine Lösung von 30,9 g (0,1 Mol) Trichloressigsäureanhydrid in 30 ml THF so zu, dass die Temperatur 20°C nicht übersteigt. Nach 2 Stunden Rühren bei 50°C engt man am Rotationsverdampfer ein, nimmt den Rückstand in Methylenchlorid auf und schüttelt mit Bicarbonatlösung aus. Aus der getrockneten organischen Phase wird das Produkt durch Destillation gereinigt erhalten. Ausbeute: 19,14 g (69,47 %), Siedepunkt = 76°C/3 mbar.

Herstellung von Photopolymeren, mit Halogengruppen

2,63 g (0,01 Mol) 1,1,1-Trichloro-2,7-dioxo-3,6-dioxa-8-methyl-nonen-8 und 21,33 g (0,09 Mol) N-(5-methyl-3-oxa-4-oxo-hexen-5-yl)-dimethylmaleinimid werden in 250 ml Dioxan unter Stickstoff und Lichtausschluss gerührt und auf 70°C erhitzt. Nach Zugabe von 120 mg Azobisisobutyronitril lässt man 16 Stunden rühren und isoliert dann das entstandene Polymer durch Fällen in Wasser und Trocknen. Analog wird in den Beispielen 9-11 verfahren. Weitere Angaben befinden sich in Tabelle 2.

Tabelle 2

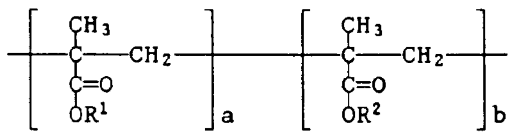

| Beispiel No. | $R^1$ | $R^2$ | $\frac{a}{a+b}$ | $\bar{M}_w$ 1) | Tg(°C) |
|---|---|---|---|---|---|
| 8 | 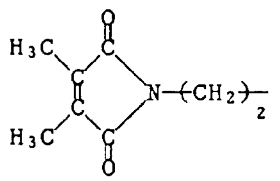 | 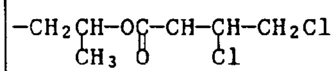 | 0,95 | 32000 | 55 |
| 9 | 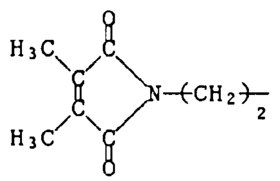 | 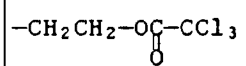 | 0,9 | 49700 | 88 |
| 10 | 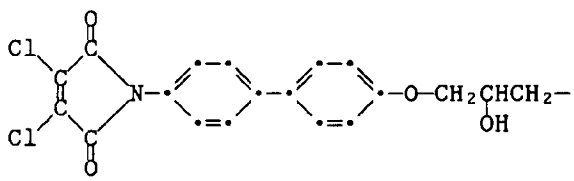 | $-CH_2CH_3$ | 0,85 | 17500 | 98 |
| 11 | 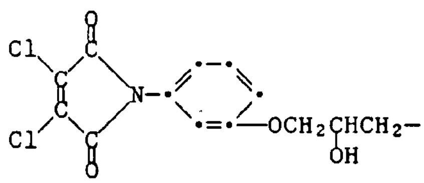 | $-CH_2CH_3$ | 0,15 | 51000 | nicht bestimmt |

B) Anwendungsbeispiele

Beispiele 12-15:

1,6 mg Tetraselenotetracen (TSeT) werden in 10 ml DMF bei 120°C gelöst, dann gibt man 100 mg Polymer nach den Beispielen 4 bis 7 zu und giesst die Lösung auf eine vorgeheizte Glasplatte. Nach Abdampfen des Lösungsmittels bei Temperaturen zwischen 90-130°C verbleibt ein transparenter Film mit einem Nadelnetzwerk aus elektrisch leitenden Kristallen von $(TSeT)_2$-Chlorid in einer Polymermatrix. Der Film wird unter einer photographischen Maske (Stauffer Resolution Guide) mit einer 5000 W Quecksilberhochdrucklampe bestrahlt und anschliessend mit 3-Butyrolacton entwickelt. Es verbleibt ein Reliefbild mit unveränderter elektrischer Leitfähigkeit (gemessen nach der 4-Punktmethode), die in nachfolgender Tabelle 3 angegeben sind.

Tabelle 3

| Beispiel No. | Polymer gemäss Beispiel No. | Leitfähigkeit ($\Omega^{-1}\cdot cm^{-1}$) |
|---|---|---|
| 12 | 4 | 0,1 |
| 13 | 5 | 0,5 |
| 14 | 6 | 0,1 |
| 15 | 7 | 0,6 |

Beispiele 16-22:

1,6 mg Tetraselenotetracen werden zusammen mit 100 mg Polyimid (aus Benzophenondicarbonsäuredianhydrid, Diaminodurol und 3,3'-Dimethyl-5,5'-diethyl-4,4'-diaminodiphenylmethan hergestellt, inhärente Viskosität 0,6 dl/g in DMF) in 10 ml DMF bei 120°C gelöst, dann gibt man 3,5 ml Perchlorpropen zu und giesst die Lösung auf eine vorgeheizte Glasplatte. Nach Abdampfen des Lösungsmittels bei Temperaturen zwischen 90 - 130°C verbleibt ein transparenter Film mit einem Nadelnetzwerk aus elektrisch leitenden $(TSeT)_2$-Chlorid-Kristalliten in einer Polymermatrix. Der Film wird unter einer photographischen Maske (Stauffer Resolution Guide) mit einer 5000 W Quecksilberhochdrucklampe (30 sec) bestrahlt und anschliessend mit 3-Butyrolacton entwickelt. Es verbleibt ein Reliefbild mit unveränderter elektrischer Leitfähigkeit, die 1,8 $\Omega^{-1}cm^{-1}$ beträgt.

In analoger Weise werden Reliefbilder der Beispiele gemäss Tabelle 4 hergestellt.

Tabelle 4

| Beispiel No. | Polymer | $\bar{M}_w$ 1) | Halogen-verbindung | Belichtungs-zeit (sec) | Entwickler | Letzte abgebildete Stufe | Leitfähigkeit ($\Omega^{-1} \cdot cm^{-1}$) |
|---|---|---|---|---|---|---|---|
| 16 | Polyimid | 45000 | Hexachlorpropen | 30 | Dimethylformamid | 6 | 1,8 |
| 17 | Polyimid | 45000 | Polyaddukt 2) | 30 | Dimethylformamid | 5 | 0,9 |
| 18 | Poly(vinylcinnamat) | 80000 | Hexachlorpropen | 240 | Ethylglykolacetat | 3 | 0,2 |
| 19 | Poly(vinylcinnamat) 5 Gew.-% Thioxanthon | 80000 | Hexachlorpropen | 30 | Ethylglykolacetat | 5 | 0,1 |
| 20 | Poly(2,3-dimethyl-imidylethylmethacrylat) | 180000 | Hexachlorpropen | 180 | Ethylglykolacetat | 3 | 0,8 |
| 21 | Poly(2,3-dimethyl-imidylethylmethacrylat) 5 Gew.-% Thioxanthon | 180000 | Hexachlorpropen | 20 | Ethylglykolacetat | 7 | 0,2 |
| 22 | Chalkonepoxidharz 3) | 80000 | Hexachlorpropen | 90 | Cyclohexanon | 8 | 1 |
| | CHalkonepoxidharz | 80000 | Hexachlorpropen | 120 | Cyclohexanon | 10 | 1 |

1) Bezug: Polystyrolstandard

2) 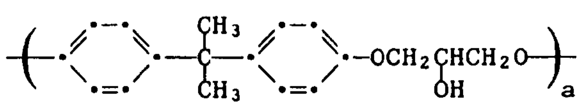 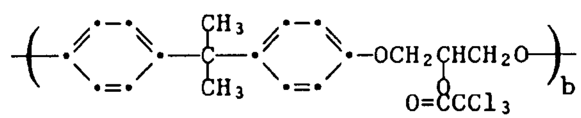 ; $\frac{b}{a+b} = 0,05$, $\bar{M}_w = 79000$

3) Polyaddukt aus Bisphenol-A-Diglycidylether und Bis(p-hydroxybenzyliden)aceton

Beispiele 23-26:

100 mg Polymer werden in 3 ml DMF bei 120°C gelöst. Zu dieser Lösung gibt man unter starkem Rühren eine heisse Lösung von 1,6 mg Tetraselenotetracen in 7 ml DMF und giesst auf eine thermostatisierte Glasplatte, wo man das Lösungsmittel abdampfen lässt. Es resultiert ein elektrisch leitender Polymerfilm.

Nach Belichtung dieses Films durch eine Maske mit einer 5000 W Quecksilberhochdrucklampe (30-60 s) wird mit Ethylglykolacetat entwickelt und man erhält ein elektrisch leitendes Muster. Die Leitfähigkeiten sind in Tabelle 5 angegeben.

Tabelle 5

| Beispiel No. | Polymer gemäss Beispiel No. | Leitfähigkeit ($\Omega^{-1}\cdot cm^{-1}$) |
|---|---|---|
| 23 | 8 | 0,1 |
| 24 | 9 | 0,2 |
| 25 | 10 | 1,5 |
| 26 | 11 | 1,8 |

## Patentansprüche

1. Beschichtetes Material, bei dem auf mindestens einer Oberfläche eines Substrates ein Reliefbild aus
   a) einem photostrukturierten und photopolymerisierten oder photovernetzten organischen Material aufgebracht ist, das
   b) einen Nadelfilz aus einem Charge-Transfer-Komplex (CT-Komplex) enthält, der aus Chlor, Brom oder Iod und

   einer Verbindung der Formel I oder Ia oder Mischungen davon gebildet ist,

   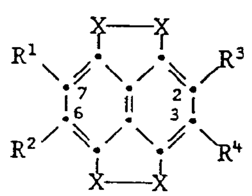 (I), 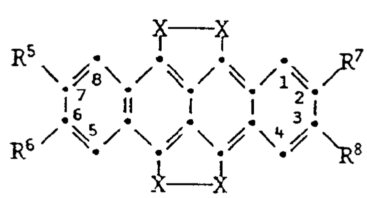 (Ia),

   worin X für S, Se oder Te steht, $R^1$, $R^2$, $R^3$ und $R^4$ unabhängig voneinander ein Wasserstoffatom oder Cl bedeuten oder $R^1$ und $R^7$ sowie $R^3$ und $R^4$ zusammen je

   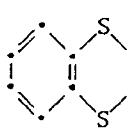 oder 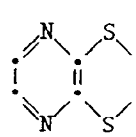 oder

   $R^1$, $R^2$, $R^3$ und $R^4$ je Phenylthio, 4-Methyl- oder 4-Methoxyphenylthio oder 4-Pyridylthio darstellen, $R^5$, $R^6$, $R^7$ und $R^8$ unabhängig voneinander H oder F bedeuten, $R^5$ für $CH_3$ und $R^6$ , $R^7$ und $R^8$ für H oder $R^5$ , $R^6$ , $R^7$ und $R^8$ für $CH_3$ stehen, $R^5$ und $R^6$ für $CH_3$ oder Cl und $R^7$ und $R^8$ für H stehen oder $R^5$ und $R^6$ für H, $R^7$ für $-COR^9$ und $R^8$ für H oder $-COR^9$ , oder $R^5$ und $R^6$ für H und $R^7$ und $R^8$ zusammen für -CO-O-CO oder $-CO-NR^{10}-CO-$ stehen, worin $R^9$ Halogen, -OH, $-NH_2$, oder den Rest eines Alkohols, primären oder sekundären Amins darstellt, oder -OM ist, wobei M ein Kation bedeutet, und $R^{10}$ H oder der um die $NH_2$-Gruppe verminderte Rest eines primären Amins ist.

2. Material gemäss Anspruch 1, dadurch gekennzeichnet, dass die Komponente b) in einer Menge von 0,001 bis 20 Gew.-% enthalten ist, bezogen auf die Komponente a).

3. Material gemäss Anspruch 1, dadurch gekennzeichnet, dass der CT-Komplex aus einer Verbindung der Formel Ia gebildet ist und die Verbindung Tetrathiotetracen, Tetraselenotetracen, 2-Fluor- oder 2,3-Difluortetraselenotetracen darstellt.

4. Material gemäss Anspruch 1, dadurch gekennzeichnet, dass der CT-Komplex aus Chlor und einer Verbindung der Formel Ia gebildet ist.

5. Material gemäss Anspruch 1, dadurch gekennzeichnet, dass es sich bei dem CT-Komplex um $(Tetraselenotetracen)_2Cl$ handelt.

6. Material gemäss Anspruch 1, dadurch gekennzeichnet, dass Komponente a) erhalten ist aus einer nichtflüchtigen monomeren, oligomeren oder polymeren Substanz mit photopolymerisierbaren oder photodimerisierbaren ethylenisch ungesättigten Gruppen, aus kationisch härtbaren Systemen oder aus photovernetzbaren Polyimiden.

7. Material gemäss Anspruch 1, dadurch gekennzeichnet, dass das Substrat transparent ist und der Nadelfilz teilweise aus der Oberfläche des Reliefbildes herausragt und metallisiert ist.

8. Material gemäss Anspruch 7, dadurch gekennzeichnet, dass es sich bei dem Metall um ein Halbedel- oder Edelmetall handelt.

9. Verfahren zur Herstellung eines Materials gemäss Anspruch 1, dadurch gekennzeichnet, dass man ein Substrat mit einer Zusammensetzung aus
   a) einem strahlungsempfindlichen organischen Material, das als Elektronenacceptor Cl-, Br- und/oder I-Atome enthält oder das mit einer Cl-, Br- und/oder I-Atome enthaltenden organischen Substanz als Elektronenacceptor vermischt ist, wobei die Cl-, Br- und/oder I-Atome so aktiviert sind, dass sie unter Einwirkung thermischer Energie mit den Verbindungen der Formel I oder Ia einen CT-Komplex bilden,
   b) einer Verbindung der Formel I oder Ia oder Mischungen davon gemäss Anspruch 1,
   c) gegebenenfalls einem inerten Lösungsmittel, und
   d) gegebenenfalls einem Bindemittel,

   beschichtet, das beschichtete Substrat erwärmt, danach unter einer Bildmaske bestrahlt und darauf entwickelt.

10. Verfahren gemäss Anspruch 9, dadurch gekennzeichnet, dass Komponente a) ein Homo- oder Copolymer ist, an dessen Polymerrückgrat über eine Brückengruppe ein 3,4-Dichlormaleinimidylrest und gegebenenfalls andere photodimerisierbare Gruppen gebunden sind.

11. Verfahren gemäss Anspruch 10, dadurch gekennzeichnet, dass das Polymerrückgrat aus einem Homo- oder Copolymer des Vinylalkohols oder deren Hydroxyalkylethern, einem Homo- oder Copolymer der Methacryl- und/oder Acrylsäure oder deren Hydroxyalkyl- oder Hydroxycycloalkylestern; oder einem Polyaddukt aus einer Epoxidverbindung mit durchschnittlich mehr als einer Epoxidgruppe im Molekül und einem Diol, einem primären Monoamin, einem disekundären Diamin, einem linearen oder cyclischen disekundären Dicarbonsäurediamid, einer Dicarbonsäure oder deren Hydroxyalkylethern gebildet ist.

12. Verfahren gemäss Anspruch 10, dadurch gekennzeichnet, dass die photodimerisierbare Gruppe ausgewählt ist aus Cinnamat und mit $C_1$-$C_4$-Alkyl 2,3-substituiertem Maleinimidyl.

13. Verfahren gemäss Anspruch 9, dadurch gekennzeichnet, dass das strahlungsempfindliche organische Material der Komponente a) mit einer halogenhaltigen organischen Verbindung vermischt ist, die unter Zufuhr von Wärme Halogen abspaltet.

14. Verfahren gemäss Anspruch 13, dadurch gekennzeichnet, dass es sich bei der halogenhaltigen Verbindung um eine halogenierte, gesättigte oder ungesättigte, aliphatische, cycloaliphatische, aliphatisch-heterocyclische, aromatische oder heteroaromatische organische Verbindung handelt.

15. Verfahren gemäss Anspruch 14, dadurch gekennzeichnet, dass die organische Verbindung chloriert, bromiert und/oder iodiert ist.

16. Verfahren gemäss Anspruch 13, dadurch gekennzeichnet, dass es sich bei der halogenhaltigen Verbindung um perchlorierte $C_3$-$C_5$-Alkane, $C_3$-$C_5$-Alkene oder Verbindungen mit Trichlormethylgruppen handelt.

17. Verfahren gemäss Anspruch 13, dadurch gekennzeichnet, dass es sich bei der halogenhaltigen organischen Verbindung um Tetrabrommethan, Bromoform, Trichlorbrommethan, Hexachlorpropen, Hexachlorcyclopropan, Hexachlorethan, Octachlorpropan, n-Octachlorbutan, n-Decachlorbutan, Tetrabromethan, Hexabromethan, Tetrabromo-o-benzochinon, 2,4,4,6-Tetrabromo-2,5-cyclohexadienon, Hexabrombenzol, Chloranil, Hexachloraceton, 1,4,5,6,7,7-Hexachlor-5-norbornen-2,3-dicarbonsäure, 1,2,5,6,9,10-Hexabromcyclododecan, Tetrachlorethylen, Perchlorcyclopentadien, Perchlorbutadien, Dichloracetaldehyddiethylacetal, 1,4-Dichlor-2-buten, 1,3-Dichlor-2-buten, 3,4-Dichlor-1-buten, Tetrachlorcyclopropen, 1,3-Dichloraceton, 1,4-Bis(trichlormethyl)-benzol, 1,3-Dibrompropan, 1,6-Dibromhexan, 3-Chlorpropionsäureethylester, 2-Chlorpropionsäuremethylester, 2-Chloracrylnitril, Trichloressigsäureethylester, Tris(trichlormethyl)-triazin, 1-(p-Methoxy)phenylethenyl-5-(1,3-bistrichloromethyl)-triazin, 1,2,3-Trichlorpropan, 1,1,2-Trichlorethan, Chlorameisensäurebutylester, Trichlorethylen, 2,3-Dichlormaleinsäureanhydrid, 1,12-Dibromdodecan, $\alpha,\alpha'$-Dibrom-p-xylol, $\alpha,\alpha'$-Dichlor-o-xylol, Phenacylchlorid oder -bromid, 1,10-Dibromdecan, $\alpha,\alpha'$-Dichlor-p-xylol, $\alpha,\alpha'$-Dibrom-m-xylol, Iodacetonitril, 2,3-Dichlor-5,6-dicyanobenzochinon, 2,3-Dichlorpropionsäuremethylester, 1-Brom-2-chlorethan, 1-Brom-2-chlorpropan, Chlorameisensäure-2-bromethylester, Iodessigsäureethylester, N-Chlor-, N-Brom- oder N-Iodsuccinimid oder -phthalsäureimid oder Mischungen hiervon handelt.

18. Verfahren gemäss Anspruch 13, dadurch gekennzeichnet, dass es sich bei dem strahlungsempfindlichen Material um ein photopolymerisierbares oder photovernetzbares organisches Material handelt.

19. Verfahren gemäss Anspruch 18, dadurch gekennzeichnet, dass das Material eine nichtflüchtige monomere, oligomere oder polymere Substanz mit photopolymerisierbaren oder photodimerisierbaren ethylenisch ungesättigten Gruppen; ein kationisch härtbares System oder ein photovernetzbares Polyimid ist.

20. Verfahren gemäss Anspruch 9, dadurch gekennzeichnet, dass das strahlungsempfindliche Material mit einem in einem inerten organischen Lösungsmittel löslichen thermoplastischen Polymer vermischt ist, das an ein Polymerrückgrat über eine Gruppe -O-, -O-CO-, -CO-OR$^{22}$-OCO- oder -CO-O- gebundene aliphatische oder cycloaliphatische Seitengruppen enthält, die in $\alpha$-, $\beta$-, $\gamma$- oder $\omega$-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt.

21. Verfahren gemäss Anspruch 20, dadurch gekennzeichnet, dass das thermoplastische Polymer ein Homo- oder Copolymer eines Acrylsäure- oder Methacrylsäureesters ist, das chlorierte, bromierte und/oder iodierte aliphatische oder cycloaliphatische Gruppen in der Estergruppe enthält.

22. Verfahren gemäss Anspruch 21, dadurch gekennzeichnet, dass das Polymer
a) 0,1 bis 100 Mol-% mindestens eines Strukturelements der Formel III

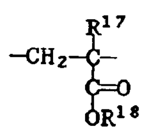 (III),

und
b) 0 bis 99,9 Mol-% mindestens eines Strukturelements der Formel IV

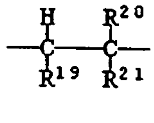 (IV)

enthält, bezogen auf das Polymer, worin $R^{17}$ für H oder Methyl steht; $R^{18}$ einen Rest $-(R^{22}-O-CO)_z-C_mH_nX^2_o$ darstellt, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt; $R^{19}$ H, $C_1$-$C_6$-Alkyl oder -$COOR^{23}$ bedeutet; $R^{20}$ für H, F, Cl, CN oder $C_1$-$C_6$-Alkyl steht; und $R^{21}$ H, F, Cl, CN, $R^{23}$-O-, $C_1$-$C_{12}$-Alkyl, -$COOR^{23}$, -O-CO-$R^{23}$, -$COOR^{22}$-OH,

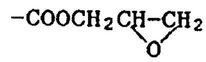

oder Phenyl darstellt, worin $R^{22}$ die zuvor angegebene Bedeutung hat und $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)bentyl darstellt.

**23.** Verfahren gemäss Anspruch 22, dadurch gekennzeichnet, dass $R^{17}$ für Methyl steht; $R^{18}$ einen Rest -$R^{22}$-O-CO-$C_mH_nX^2_o$ darstellt, worin m für eine Zahl von 1 bis 6, n für 0 oder eine Zahl von 1 bis 12 und o für eine Zahl von 1 bis 13 stehen, und die Summe von n + o = 2 m + 1 ist, $X^2$ für Cl steht, und $R^{22}$ unsubstituiertes oder mit OH oder Cl substituiertes $C_2$-$C_6$-Alkylen, Cyclopentylen, Cyclohexylen, Cyclopentylen-$CH_2$-, Cyclohexylen-$CH_2$- oder Cyclohexylen$-(CH_2)_z-$ darstellt; $R^{19}$ H bedeutet; $R^{20}$ H, F, Cl oder $C_1$-$C_4$-Alkyl ist; und $R^{21}$ H, F, Cl, CN, $R^{23}$-O-, $C_1$-$C_6$-Alkyl, -$COOR^{23}$, -O-CO-$R^{23}$, -$COOR^{22}$-OH,

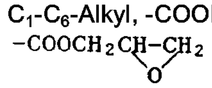

oder Phenyl darstellt, $R^{22}$ die zuvor angegebene Bedeutung hat und $R^{23}$ $C_1$-$C_6$-Alkyl, $C_5$- oder $C_6$-Cycloalkyl, Phenyl oder Benzyl ist.

**24.** Verfahren gemäss Anspruch 22, dadurch gekennzeichnet, dass $R^{17}$ Methyl ist; $R^{18}$ einen Rest -$R^{22}$-O-CO-$C_mH_nX^2_o$ darstellt, worin m für eine Zahl von 1 bis 4, n für 0 oder eine Zahl von 1 bis 8 und o für eine Zahl von 1 bis 13 stehen, und die Summe von n + o = 2 m + 1 ist, $X^2$ Cl bedeutet; $R^{22}$ lineares $C_2$-$C_6$-Alkylen oder -$CH_2CHOHCH_2$- darstellt; $R^{19}$ und $R^{20}$ H bedeuten; und $R^{21}$ -$COOR^{22}$OH oder -$COOR^{23}$ bedeuten, worin $R^{22}$ die zuvor angegebene Bedeutung hat und $R^{23}$ $C_1$-$C_6$-Alkyl ist.

**25.** Verfahren gemäss Anspruch 20, dadurch gekennzeichnet, dass es sich bei dem strahlungsempfindlichen Material um ein photopolymerisierbares oder photovernetzbares organisches Material handelt.

**26.** Verfahren gemäss Anspruch 25, dadurch gekennzeichnet, dass das Material eine nichtflüchtige monomere, oligomere oder polymere Substanz mit photopolymerisierbaren oder photodimerisierbaren ethylenisch ungesättigten Gruppen; ein kationisch härtbares System oder ein photovernetzbares Polyimid ist.

**27.** Verfahren gemäss Anspruch 20, dadurch gekennzeichnet, dass es sich bei dem thermoplastischen Polymer um ein lineares Polyaddukt aus einer Glycidylverbindung mit durchschnittlich mehr als einer Epoxidgruppe und einem Diol, primären Monoamin, disekundären Diamin, disekundären linearen oder cyclischen Dicarbonsäurediamid oder einer Dicarbonsäure handelt, in dem das H-Atom der sekundären OH-Gruppen mindestens teilweise durch eine Gruppe -CO-$C_mH_nX^2_o$ substituiert ist, worin m für eine Zahl von 1 bis 12, n für 0 oder eine Zahl von 1 bis 24 und o eine Zahl von 1 bis 25 sind, und die Summe von n + o = 2 m + 1 ist, und $X^2$ für Cl, Br oder I steht.

**28.** Verfahren gemäss Anspruch 27, dadurch gekennzeichnet, dass das Polyaddukt
a) 100 bis 0,1 Mol-% gleiche oder verschiedene Struktureinheiten der Formel V

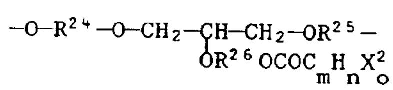 (V)

und
b) 99,9 bis 0 Mol-% gleiche oder verschiedene Struktureinheiten der Formel VI

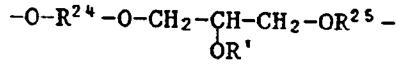 (VI)

enthält, bezogen auf das Polyaddukt, wobei $R^{24}$ und $R^{25}$ unabhängig voneinander den um zwei Hydroxylgruppen verminderten Rest eines Diols mit aliphatischen oder aromatischen Diolgruppen darstellen, R', H, unsubstituiertes oder mit OH substituiertes $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet, -$OR^{26}$- eine direkte Bindung oder $R^{26}$ unsubstituiertes oder mit $C_1$-$C_{16}$-Alkyl substituiertes Ethylen darstellen, und $X^2$, m, n und o die im Anspruch 29 angegebenen Bedeutungen haben.

**29.** Verfahren gemäss Anspruch 28, dadurch gekennzeichnet, dass $R^{24}$ und $R^{25}$ unabhängig unabhängig voneinander einen Rest der Formel

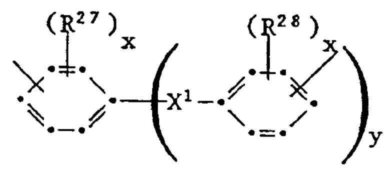

darstellen, worin $X^1$ eine direkte Bindung, $C_1$-$C_4$-Alkylen, $C_2$-$C_{12}$-Alkyliden, $C_5$-$C_8$-Cycloalkyliden, -O-, -S-, -SO-, $SO_2$-, -CO-, -$CO_2$-, -N($C_1$-$C_4$-Alkyl)- oder -Si($CH_3$)$_2$- bedeutet, $R^{27}$ und $R^{28}$ unabhängig voneinander H, Halogen, $C_1$-$C_4$-Alkyl oder $C_1$-$C_4$-Alkoxy sind, und x 0, 1 oder 2 bedeutet und y für 0 oder 1 steht.

**30.** Verfahren gemäss Anspruch 29, dadurch gekennzeichnet, dass $R^{24}$ und $R^{25}$ den Rest

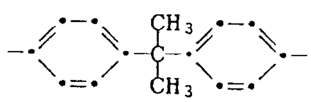

bedeuten.

**31.** Verfahren gemäss Anspruch 27, dadurch gekennzeichnet, dass es sich bei dem strahlungsempfindlichen Material um ein photopolymerisierbares oder photovernetzbares organisches Material handelt.

**32.** Verfahren gemäss Anspruch 31 dadurch gekennzeichnet, dass das Material eine nichtflüchtige monomere, oligomere oder polymere Substanz mit photopolymerisierbaren oder photodimerisierbaren ethylenisch ungesättigten Gruppen; ein kationisch härtbares System oder ein photovernetzbares Polyimid ist.

**33.** Verfahren gemäss Anspruch 20, dadurch gekennzeichnet, dass es sich bei dem thermoplastischen Polymer um ein Homo- oder Copolymer des Vinylalkohols handelt, in dem das H-Atom der sekundären OH-Gruppe mindestens teilweise mit einer Gruppe $-Y-C_mH_nX^2_o$ substituiert ist, worin Y eine direkte Bindung, -CO- oder -$R^{26}$-O-CO- bedeutet, $X^2$ für Cl, Br oder I steht, m eine Zahl von 1 bis 12, n für 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt.

**34.** Verfahren gemäss Anspruch 33, dadurch gekennzeichnet, dass das Copolymer
a) 90 bis 0,1 Mol% Struktureinheiten der Formel VII

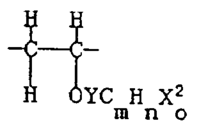

(VII),

und

b) 99,9 bis 10 Mol% gleiche oder verschiedene Struktureinheiten der Formel VIII

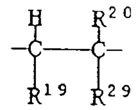

(VIII),

enthält, worin Y eine direkte Bindung, -CO- oder $R^{26}$-O-CO-bedeutet, $X^2$ für Cl, Br oder I steht, m eine Zahl von 1 bis 12, n 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt; $R^{19}$ H, $C_1$-$C_6$-Alkyl oder -$COOR^{23}$ bedeutet; $R^{20}$ für H, F, Cl, CN oder $C_1$-$C_6$-Alkyl steht und $R^{29}$ H, F, Cl, CN, OH, $R^{23}$O-, $C_1$-$C_{12}$-Alkyl, -$COOR^{23}$, -O-CO-$R^{23}$, -$OR^{34}$OH oder Phenyl darstellt; $R^{23}$$C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt und $R^{34}$ unsubstituiertes oder mit $C_1$-$C_{16}$-Alkyl substituiertes Ethylen ist.

**35.** Verfahren gemäss Anspruch 34, dadurch gekennzeichnet, dass Y eine direkte Bindung, -CO-, -$CH_2CH_2$O-CO- oder -$CH_2CH(CH_3)$O-CO- ist, $X^2$ Cl bedeutet, m eine Zahl von 1 bis 6, n 0 oder eine Zahl von 1 bis 12 und o eine Zahl von 1 bis 13 sind und die Summe von n + o = 2 m + 1 ist; $R^{19}$ und $R^{20}$ H bedeuten; und $R^{29}$ H, F, Cl, CN, OH, $R^{23}$O-, $C_1$-$C_4$-Alkyl, -$COOR^{23}$, -O-CO-$R^{23}$, Phenyl, -$OCH_2CH_2OH$ oder -$OCH_2CH(CH_3)OH$ darstellt; und $R^{23}$ $C_1$-$C_6$-Alkyl, $C_5$- oder $C_6$-Cycloalkyl, Phenyl oder Benzyl ist.

**36.** Verfahren gemäss Anspruch 33, dadurch gekennzeichnet, dass es sich bei dem strahlungsempfindlichen Material um ein photopolymerisierbares oder photovernetzbares organisches Material handelt.

**37.** Verfahren gemäss Anspruch 36, dadurch gekennzeichnet, dass das Material eine nichtflüchtige monomere, oligomere oder polymere Substanz mit photopolymerisierbaren oder photodimerisierbaren ethylenisch ungesättigten Gruppen; ein kationisch härtbares System oder ein photovernetzbares Polyimid ist.

**38.** Verfahren gemäss Anspruch 9, dadurch gekennzeichnet, dass das strahlungsempfindliche, Cl-, Br- und/oder I-Atome enthaltende Material ein Copolymer ist, das photodimerisierbare Gruppen im Polymerrückgrat oder als Seitengruppen enthält, und das an ein Polymerrückgrat über eine Gruppe -O-, -O-CO-, -CO-$OR^{22}$-OCO- oder -CO-O- gebundene aliphatische oder cycloaliphatische Seitengruppen enthält, die in α-, β-, γ- oder ω-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt.

**39.** Verfahren gemäss Anspruch 38, dadurch gekennzeichnet, dass es sich bei den photodimerisierbaren Gruppen um eine Imidylgruppe der Formel IX handelt,

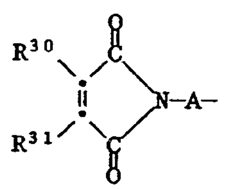

(IX),

worin $R^{30}$ und $R^{31}$ unabhängig voneinander Cl, Br, Phenyl oder $C_1$-$C_4$-Alkyl bedeuten oder $R^{30}$ und $R^{31}$ zusammen $-(CH_2)_3-$, $-(CH_2)_4-$ oder

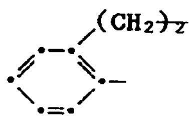

bedeuten, und A für unsubstituiertes oder mit Hydroxyl substituiertes lineares oder verzweigtes $C_2$-$C_{12}$-Alkylen, oder Cyclohexylen oder Phenylen steht, oder dass es sich um eine Cinnamoylgruppe der Formel X

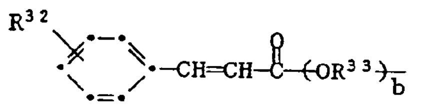 (X)

handelt, worin $R^{32}$ H, $C_1$-$C_{12}$-Alkoxy, Phenyloxy oder $C_1$-$C_{12}$-Alkyl-CO-O- darstellt, $R^{33}$ für $C_2$-$C_6$-Alkylen steht und b 0 oder 1 bedeutet.

**40.** Verfahren gemäss Anspruch 38, dadurch gekennzeichnet, dass die aliphatische Cl, Br oder I enthaltende Gruppe der Formel $-C_mH_nX^2_o$ entspricht, worin m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht.

**41.** Verfahren gemäss Anspruch 38, dadurch gekennzeichnet, dass das Copolymer

a) 0,1 bis 90 Mol-% mindestens eines Strukturelements der Formel III

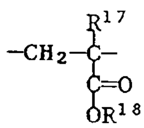 (III)

b) 10 bis 99,9 Mol-% mindestens eines Strukturelementes der Formel XI oder XIa

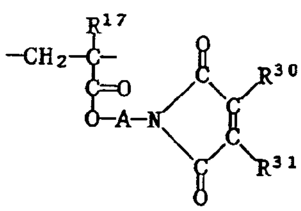 (XI)

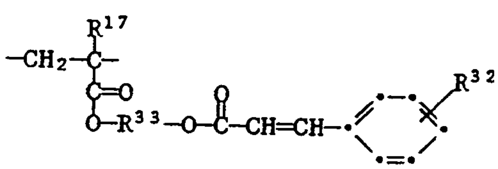 (XIa)

und

c) 0 bis 89,9 Mol-% mindestens eines Strukturelements der Formel IV

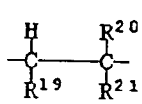 (IV)

enthält, bezogen auf das Polymer, worin $R^{17}$ für H oder Methyl steht; $R^{18}$ einen Rest $-(R^{22}-O-CO)_z-$

$C_mH_nX^2_o$ darstellt, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt; $R^{19}$ H, $C_1$-$C_6$-Alkyl oder -$COOR^{23}$ bedeutet; $R^{20}$ für H, F, Cl, CN, oder $C_1$-$C_6$-Alkyl steht; und $R^{21}$ H, F, Cl, CN, $R^{23}$-O-, $C_1$-$C_{12}$-Alkyl, -$COOR^{23}$, -O-CO-$R^{23}$, -$COOR^{22}$-OH,

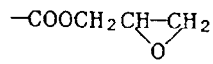

oder Phenyl darstellt, $R^{22}$ die zuvor angegebene Bedeutung hat und $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt, $R^{30}$ und $R^{31}$ unabhängig voneinander Cl, Br, Phenyl oder $C_1$-$C_4$-Alkyl bedeuten oder $R^{30}$ und $R^{31}$ zusammen $-(CH_2)_3-$, $-(CH_2)_4-$ oder

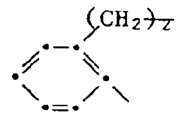

bedeuten, und A für unsubstituiertes oder mit Hydroxyl substituiertes lineares oder verzweigtes $C_2$-$C_{12}$-Alkylen, oder Cyclohexylen oder Phenylen steht, $R^{32}$ H, $C_1$-$C_{12}$-Alkoxy, Phenyloxy oder $C_1$-$C_{12}$-Alkyl-CO-O- darstellt und $R^{33}$ für $C_2$-$C_6$-Alkylen steht.

**42.** Verfahren gemäss Anspruch 38, dadurch gekennzeichnet, dass das Copolymer ein Polyaddukt ist, das
a) 0,1 bis 90 Mo-% gleiche oder verschiedene Struktureinheiten der Formel V

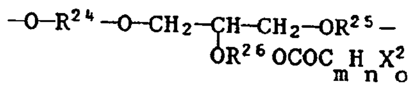
(V)

b) 10 bis 99,9 Mol-% mindestens eines Strukturelementes der Formeln XII oder XIIa

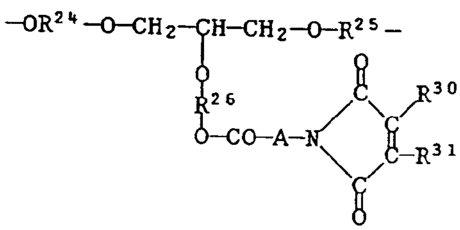
(XII),

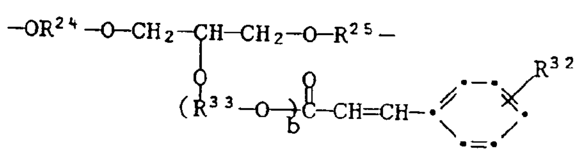
(XIIa),

und
c) 89,9 bis 0 Mol-% gleiche oder verschiedene Struktureinheiten der Formel VI

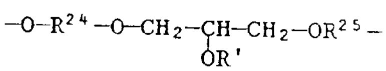
(VI)

enthält, bezogen auf das Polyaddukt, wobei $R^{24}$ und $R^{25}$ unabhängig voneinander den um zwei Hydroxylgruppen verminderten Rest eines Diols mit aliphatischen oder aromatischen Diolgruppen darstellen, R', H, unsubstituiertes oder mit OH substituiertes $C_1$-$C_{20}$-Alkyl, $C_1$-$C_{20}$-Acyl oder mit einem $C_1$-$C_{20}$-Kohlenwasserstoffrest N-substituiertes Aminocarbonyl
bedeutet, -$OR^{26}$ eine direkte Bindung oder $R^{26}$ unsubstituiertes oder mit $C_1$-$C_{16}$-Alkyl substituiertes Ethylen darstellen, und A, $R^{30}$, $R^{31}$, $R^{32}$, $R^{33}$, $X^2$, m, n, o und b die im Anspruch 43 angegebenen Bedeutungen haben.

**43.** Verfahren gemäss Anspruch 38, dadurch gekennzeichnet, dass das Copolymer
a) 90 bis 0,1 Mol % Struktureinheiten der Formel VII

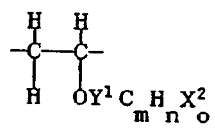

(VII)

b) 10 bis 99,9 Mol-% mindestens eines Strukturelementes der Formeln XIII oder XIIIa

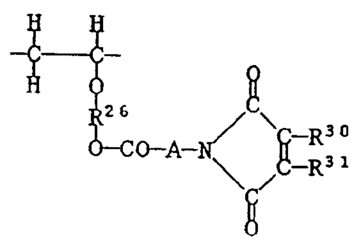

(XIII),

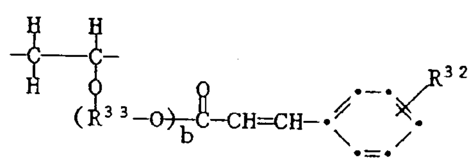

(XIIIa),

und
c) 89,9 bis 0 Mol % gleiche oder verschiedene Struktureinheiten der Formel VIII

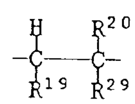

(VIII),

enthält, worin $Y^1$ -CO- oder -$R^{26}$ -O-CO- bedeutet, $X^2$ für Cl, Br oder I steht, m eine Zahl von 1 bis 12, n 0 oder eine Zahl von 1 bis 24, o eine Zahl von 1 bis 25 sind und die Summe von n + 0 = 2 m + 1 ist, und $R^{26}$ unsubstituiertes oder mit $C_1$-$C_{16}$-Alkyl substituiertes Ethylen darstellt;
$R^{19}$ H, $C_1$-$C_6$-Alkyl oder -$COOR^{23}$ bedeutet; $R^{20}$ für H, F, Cl, CN, oder $C_1$-$C_6$-Alkyl steht; und $R^{29}$ H, F, Cl, CN, OH, $R^{23}$O-, $C_1$-$C_{12}$-Alkyl, -$COOR^{23}$, O-CO-$R^{23}$, -$OR^{34}$OH oder Phenyl darstellt; $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt und $R^{34}$ unsubstituiertes oder mit $C_1$-$C_{16}$-Alkyl substituiertes Ethylen ist, und A, $R^{30}$, $R^{31}$, $R^{32}$ und $R^{33}$ die in Anspruch 42 angegebenen Bedeutungen haben und b 0 oder 1 ist.

**44.** Beschichtungsmittel, enthaltend
a1) ein strahlungsempfindliches organisches Material, das als Elektronenacceptor Cl-, Br- und/oder I-Atome an die strahlungsempfindliche Gruppe gebunden enthält, die so aktiviert sind, dass sie unter Einwirkung von thermischer Energie mit Verbindungen der Formel I oder Ia CT-Komplexe bilden,
a2) ein strahlungsempfindliches organisches Material und ein in einem inerten organischen Lösungsmittel lösliches thermoplastisches Polymer, das an ein Polymerrückgrat über eine Gruppe -O-, -O-CO-, -CO-$OR^{22}$-OCO- oder -CO-O- gebundene aliphatische oder cycloaliphatische Seitengruppen enthält,

die in α-, β-, γ- oder ω-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt, oder

a3) ein Copolymer, das photodimerisierbare Gruppen im Polymerrückgrat oder als Seitengruppen enthält, und das an ein Polymerrückgrat über eine Gruppe -O-, -O-CO-, -CO-$OR^{22}$-OCO- oder -CO-O- gebundene aliphatische oder cycloaliphatische Seitengruppen enthält, die in α-, β-, γ- oder ω-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt,

b) eine Verbindung der Formel I oder Ia gemäss Anspruch 1,

c) gegebenenfalls ein inertes organisches Lösungsmittel, und

d) gegebenenfalls ein Bindemittel.

**45.** Strahlungsempfindliches, aktivierte Cl-, Br- oder I-Atome enthaltendes Copolymer, das photodimerisierbare Gruppen im Polymerrückgrat oder als Seitengruppen enthält, und das an ein Polymerrückgrat über eine Gruppe -O-, -O-CO-, -CO-$OR^{22}$-OCO- oder -CO-O- gebundene aliphatische oder cycloaliphatische Seitengruppen enthält, die in α-, β-, γ- oder ω-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_z-$, Benzylen oder Xylylen darstellt.

## Claims

**1.** A coated material, in which, on at least one surface of a substrate, a relief image of

a) a photostructured and photopolymerized or photocrosslinked organic material has been applied which contains

b) a needle felt consisting of a charge transfer complex (CT complex) which is formed from chlorine, bromine or iodine and a compound of the formula I or Ia or mixtures thereof,

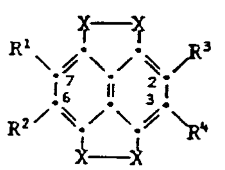 (I), 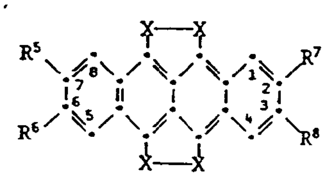 (Ia),

in which X is S, Se or Te, $R^1$, $R^2$, $R^3$ and $R^4$ independently of one another are a hydrogen atom or Cl, or $R^1$ and $R^2$ as well as $R^3$ and $R^4$ together are in each case

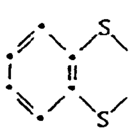 or 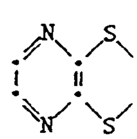

or $R^1$, $R^2$, $R^3$ and $R^4$ are each phenylthio, 4-methyl- or 4-methoxyphenylthio or 4-pyridylthio, $R^5$, $R^6$, $R^7$ and $R^8$ independently of one another are H or F, or $R^5$ is $CH_3$ and $R^6$, $R^7$ and $R^8$ are H, or $R^5$, $R^6$, $R^7$ and $R^8$ are $CH_3$, or $R^5$ and $R^6$ are $CH_3$ or Cl and $R^7$ and $R^8$ are H, or $R^5$ and $R^6$ are H, $R^7$ is -$COR^9$ and $R^8$ is H or -$COR^9$, or $R^5$ and $R^6$ are H and $R^7$ and $R^8$ together are -CO-O-CO or -CO-$NR^{10}$-CO-, where $R^9$ is halogen, -OH, -$NH_2$ or the radical of an alcohol or a primary or secondary amine or is -OM, M being a cation, and $R^{10}$ is H or the radical of a primary amine minus the $NH_2$ group.

**2.** A material according to claim 1, wherein component b) is present in a quantity from 0.001 to 20 % by weight, relative to component a).

**3.** A material according to claim 1, wherein the CT complex is formed from a compound of the formula Ia

and the compound is tetrathiotetracene, tetraselenotetracene or 2-fluoro- or 2,3-difluorotetraselenotetracene.

**4.** A material according to claim 1, wherein the CT complex is formed from chlorine and a compound of the formula Ia.

**5.** A material according to claim 1, wherein the CT complex is (tetraselenotetracene)$_2$Cl.

**6.** A material according to claim 1, wherein component a) has been obtained from a non-volatile monomeric, oligomeric or polymeric substance having photopolymerizable or photodimerizable, ethylenically unsaturated groups, from cationically curable systems or from photocrosslinkable polyimides.

**7.** A material according to claim 1, wherein the substrate is transparent and the needle felt partially protrudes from the surface of the relief image and is metallized.

**8.** A material according to claim 7, wherein the metal is a semirare or rare metal.

**9.** A process for preparing a material according to claim 1, which comprises coating a substrate with a composition of
a) a radiation-sensitive organic material which contains Cl, Br and/or I atoms as electron acceptor or has been mixed with an organic substance containing Cl, Br and/or I atoms as electron acceptor, the Cl, Br and/or I atoms being activated such that they form a CT complex with the compounds of the formula I or Ia under the action of thermal energy,
b) a compound of the formula I or Ia or mixtures thereof,
c) if appropriate an inert solvent and
d) if appropriate a binder,
heating the coated substrate, then irradiating it under an image mask and subsequently developing it.

**10.** A process according to claim 9, wherein component a) is a homopolymer or copolymer, to the polymer backbone of which a 3,4-dichloromaleimidyl radical and, if desired, other photodimerizable groups are linked via a bridging group.

**11.** A process according to claim 10, wherein the polymer backbone is formed by a homopolymer or copolymer of vinyl alcohol or hydroxyalkyl ethers thereof, a homopolymer or copolymer of methacrylic and/or acrylic acid or hydroxyalkyl or hydroxycycloalkyl esters thereof, or a polyadduct of an epoxide compound with on average more than one epoxide group in the molecule and a diol, a primary monoamine, a disecondary diamine, a linear or cyclic disecondary dicarboxylic acid diamide, a dicarboxylic acid or hydroxyalkyl ethers thereof.

**12.** A process according to claim 10, wherein the photodimerizable group is selected from the group comprising cinnamate and maleimidyl 2,3-substituted by $C_1$-$C_4$alkyl.

**13.** A process according to claim 9, wherein the radiation-sensitive organic material of component a) is mixed with a halogen-containing organic compound which eliminates halogen under the action of heat.

**14.** A process according to claim 13, wherein the halogen-containing compound is a halogenated, saturated or unsaturated, aliphatic, cycloaliphatic, aliphatic-heterocyclic, aromatic or heteroaromatic organic compound.

**15.** A process according to claim 14, wherein the organic compound is chlorinated, brominated and/or iodinated.

**16.** A process according to claim 13, wherein the halogen-containing compound is a perchlorinated $C_3$-$C_5$alkane or $C_3$-$C_5$alkene or a compound with trichloromethyl groups.

**17.** A process according to claim 13, wherein the halogenated organic compound is tetrabromomethane, bromoform, trichlorobromomethane, hexachloropropene, hexachlorocyclopropane, hexachloroethane, octachloropropane, n-octachlorobutane, n-decachlorobutane, tetrabromoethane, hexabromoethane, tetrabromo-o-benzoquinone, 2,4,4,6-tetrabromo-2,5-cyclohexadienone, hexabromobenzene, chloranil, hexachloroacetone, 1,4,5,6,7,7-hexachloro-5-norbornene-2,3-dicarboxylic acid, 1,2,5,6,9,10-hexabromocyclododecane, tetrachloroethylene, perchlorocyclopentadiene, perchlorobutadiene, dichloroacetaldehyde diethylacetal, 1,4-dichloro-2-butene, 1,3-dichloro-2-butene, 3,4-dichloro-1-butene, tetrachlorocyclopropene, 1,3-dichloroacetone, 1,4-bis-(trichloromethyl)-benzene, 1,3-dibromopropane, 1,6-dibromohexane, ethyl 3-chloropropionate, methyl 2-chloropropionate, 2-chloroacrylonitrile, ethyl trichloroacetate, tris-(trichloromethyl)-triazine, 1-(p-methoxy)-phenylethenyl-5-(1,3-bistrichloromethyl)-triazine, 1,2,3-trichloropropane, 1,1,2-trichloroethane, butyl chloroformate, trichloroethylene, 2,3-dichloromaleic anhydride, 1,12-dibromododecane, α,α'-dibromo-p-xylene, α,α'-dichloro-o-xylene phenacyl chloride or bromide, 1,10-dibromodecane, α,α'-dichloro-p-xylene, α,α'-dibromo-m-xylene, iodoacetonitrile, 2,3-dichloro-5,6-dicyanobenzoquinone, methyl 2,3-dichloropropionate, 1-bromo-2-chloroethane, 1-bromo-2-chloropropane, 2-bromoethyl chloroformate, ethyl iodoacetate, N-chloro-, N-bromo- or N-iodo-succinimide or -phthalimide, or mixtures thereof.

**18.** A process according to claim 13, wherein the radiation-sensitive material is a photopolymerizable or photocrosslinkable organic material.

**19.** A process according to claim 18, wherein the material is a non-volatile monomeric, oligomeric or polymeric substance having photopolymerizable or photodimerizable ethylenically unsaturated groups, or is a cationically curable system or a photocrosslinkable polyimide.

**20.** A process according to claim 9, wherein the radiation-sensitive material is mixed with a thermoplastic polymer which is soluble in an inert organic solvent and which contains, bound to a polymer backbone via an -O-, -O-CO-, $-CO-OR^{22}-OCO-$ or -CO-O- group, aliphatic or cycloaliphatic side groups which contain at least one Cl, Br or I atom in the α-, β-, γ- or ω-position, $R^{22}$ being $C_2$-$C_{12}$alkylene which is unsubstituted or substituted by OH, Cl, Br or phenyl, $C_4$-$C_{12}$cycloalkylene, $C_4$-$C_{12}$cycloalkylene-$CH_2$-, $C_4$-$C_{12}$-cycloalkylene$-(CH_2)_2-$, benzylene or xylylene.

**21.** A process according to claim 20, wherein the thermoplastic polymer is a homopolymer or copolymer of an ester of acrylic or methacrylic acid, which contains chlorinated, brominated and/or iodinated aliphatic or cycloaliphatic groups in the ester group.

**22.** A process according to claim 21, wherein the polymer contains

a) 0.1 to 100 mol% of at least one structural element of the formula III

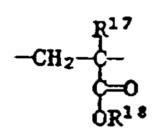

(III),

and

b) 0 to 99.9 mol% of at least one structural element of the formula IV

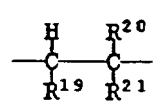

(IV)

relative to the polymer, in which $R^{17}$ is H or methyl, $R^{18}$ is a radical $-(R^{22}-O-CO)_z-C_mH_nX^2_o$, wherein z is 0 or 1, m is a number from 1 to 12 n is 0 or a number from 1 to 24 and o is a number from 1 to 25, with the sum of n + o = 2 m + 1, $X^2$ is Cl, Br or I and $R^{22}$ is $C_2$-$C_{12}$alkylene which is unsubstituted or substituted by OH, Cl, Br or phenyl,

$C_4$-$C_{12}$cycloalkylene, $C_4$-$C_{12}$cycloalkylene-$CH_2$-, $C_4$-$C_{12}$cycloalkylene$-(CH_2)_2-$ , benzylene or xylylene, $R^{19}$ is H, $C_1$-$C_6$alkyl or $-COOR^{23}$, $R^{20}$ is H, F,Cl, CN or $C_1$-$C_6$alkyl and $R^{21}$ is H, F, Cl, CN, $R^{23}$-O-, $C_1$-$C_{12}$alkyl, $-COOR^{23}$, $-O-CO-R^{23}$, $-COOR^{22}-OH$

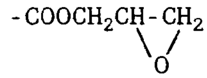

or phenyl, in which $R^{22}$ is as defined above and $R^{23}$ is $C_1$-$C_{18}$alkyl, $C_5$-$C_7$cycloalkyl, ($C_1$-$C_{12}$alkyl)-$C_5$-$C_7$cycloalkyl, phenyl, ($C_1$-$C_{12}$alkyl)-phenyl, benzyl or ($C_1$-$C_{12}$alkyl)-benzyl.

**23.** A process according to claim 22, wherein $R^{17}$ is methyl, $R^{18}$ is a radical $-R^{22}-O-CO-C_mH_nX^2_o$, in which m is a number from 1 to 6, n is 0 or a number from 1 to 12 and o is a number from 1 to 13, with the sum of n + o = 2 m + 1, $X^2$ is Cl and $R^{22}$ is $C_2$-$C_6$alkylene which is unsubstituted or substituted by OH or Cl, cyclopentylene, cyclohexylene, cyclopentylene-$CH_2$-, cyclohexylene-$CH_2$- or cyclohexylene$-(CH_2)_2-$, $R^{19}$ is H, $R^{20}$ is H, F, Cl or $C_1$-$C_4$alkyl, $R^{21}$ is H, F, Cl, CN, $R^{23}$-O-, $C_1$-$C_6$-alkyl, $-COOR^{23}$, $-O-CO-R^{23}$, $-COOR^{22}-OH$,

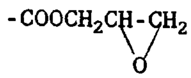

or phenyl, $R^{22}$ is as defined above and $R^{23}$ is $C_1$-$C_6$alkyl, $C_5$cycloalkyl or $C_6$cycloalkyl, phenyl or benzyl.

**24.** A process according to claim 22, wherein $R^{17}$ is methyl, $R^{18}$ is a radical $-R^{22}-O-CO-C_mH_nX^2_o$, in which m is a number from 1 to 4, n is 0 or a number from 1 to 8 and o is a number from 1 to 13, with the sum of n + o = 2 m + 1, $X^2$ is Cl, $R^{22}$ is linear $C_2$-$C_6$alkylene or $-CH_2CHOHCH_2-$, $R^{19}$ and $R^{20}$ are H and $R^{21}$ is $-COOR^{22}OH$ or $-COOR^{23}$, in which $R^{22}$ is as defined above and $R^{23}$ is $C_1$-$C_6$alkyl.

**25.** A process according to claim 20, wherein the radiation-sensitive material is a photopolymerizable or photocrosslinkable organic material.

**26.** A process according to claim 25, wherein the material is a non-volatile monomeric, oligomeric or polymeric substance having photopolymerizable or photodimerizable ethylenically unsaturated groups, or is a cationically curable system or a photocrosslinkable polyimide.

**27.** A process according to claim 20, wherein the thermoplastic polymer is a linear polyadduct of a glycidyl compound having on average more than one epoxide group and a diol, primary monoamine, disecondary diamine, disecondary linear or cyclic dicarboxylic acid diamide or a dicarboxylic acid, in which the H atom of the secondary OH groups is at least partially substituted by a group $-CO-C_mH_nX^2_o$ wherein m is a number from 1 to 12, n is 0 or a number from 1 to 24 and o is a number from 1 to 25, with the sum n + o = 2 m + 1, and $X^2$ is Cl, Br or I.

**28.** A process according to claim 27, wherein the polyadduct

a) 100 to 0.1 mol% of identical or different structural units of the formula V

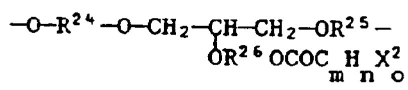 (V)

and

b) 99.9 to 0 mol% of identical or different structural units of the formula VI

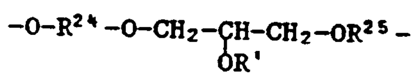 (VI)

relative to the polyadduct, $R^{24}$ and $R^{25}$ independently of one another being the radical of a diol, minus two hydroxyl groups, with aliphatic or aromatic diol groups, and R′ being H, unsubstituted or OH-substituted $C_1$-$C_{20}$alkyl, $C_1$-$C_{20}$acyl or aminocarbonyl N-substituted by a $C_1$-$C_{20}$-hydrocarbon radical, $-OR^{26}-$ being a direct bond or $R^{26}$ being unsubstituted or $C_1$-$C_{16}$alkyl-substituted ethylene, and $X^2$, m, n and o being as

defined in claim 29.

**29.** A process according to claim 28, wherein $R^{24}$ and $R^{25}$ independently of one another are a radical of the formula

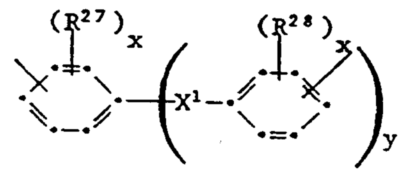

in which $X^1$ is a direct bond, $C_1$-$C_4$alkylene, $C_2$-$C_{12}$alkylidene, $C_5$-$C_8$cycloalkylidene, -O-, -S-, -SO-, $-SO_2-$, -CO-, $-CO_2-$, -N($C_1$-$C_4$alkyl)- or $-Si(CH_3)_2-$, $R^{27}$ and $R^{28}$ independently of one another are H, halogen, $C_1$-$C_4$alkyl or $C_1$-$C_4$alkoxy, and x is 0, 1 or 2 and y is 0 or 1.

**30.** A process according to claim 29, wherein $R^{24}$ and $R^{25}$ are the radical

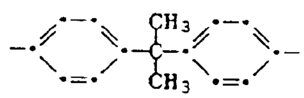 .

**31.** A process according to claim 27, wherein the radiation-sensitive material is a photopolymerizable or photocrosslinkable organic material.

**32.** A process according to claim 31, wherein the material is a non-volatile monomeric, oligomeric or polymeric substance having photopolymerizable or photodimerizable ethylenically unsaturated groups, or is a cationically curable system or a photocrosslinkable polyimide.

**33.** A process according to claim 20, wherein the thermoplastic polymer is a homopolymer or copolymer of vinyl alcohol, in which the H atom of the secondary OH group is at least partially substituted by a group $-Y-C_mH_nX^2_o$, wherein Y is a direct bond, -CO- or $-R^{26}$-O-CO-, $X^2$ is Cl, Br or I, m is a number from 1 to 12, n is 0 or a number from 1 to 24, o is a number from 1 to 25, with the sum of n + o = 2 m + 1, and $R^{26}$ is unsubstituted or $C_1$-$C_{16}$alkyl-substituted ethylene.

**34.** A process according to claim 33, wherein the copolymer contains

a) 90 to 0.1 mol% of structural units of the formula VII

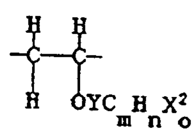 (VII),

and

b) 99.9 to 10 mol% of identical or different structural units of the formula VIII

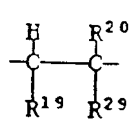 (VIII),

in which Y is a direct bond, -CO- or $-R^{26}$-O-CO-, $X^2$ is Cl, Br or I, m is a number from 1 to 12, n is 0 or a number from 1 to 24, o is a number from 1 to 25, with the sum of n + o = 2 m + 1, and $R^{26}$ is unsubstituted or $C_1$-$C_{16}$alkyl-substituted ethylene, $R^{19}$ is H, $C_1$-$C_6$alkyl or $-COOR^{23}$, $R^{20}$ is H, F, Cl, CN or $C_1$-$C_6$alkyl, and $R^{29}$ is H, F, Cl, CN, OH, $R^{23}$O-, $C_1$-$C_{12}$alkyl, $-COOR^{23}$, $-O-CO-R^{23}$, $-OR^{34}OH$ or phenyl, $R^{23}$ is $C_1$-$C_{18}$al-

kyl, $C_5$-$C_7$cycloalkyl, ($C_1$-$C_{12}$alkyl)-$C_5$-$C_7$cycloalkyl, phenyl, ($C_1$-$C_{12}$alkyl)-phenyl, benzyl or ($C_1$-$C_{12}$alkyl)-benzyl and $R^{34}$ is unsubstituted or $C_1$-$C_{16}$alkyl-substituted ethylene.

**35.** A process according to claim 34, wherein Y is a direct bond, -CO-, $-CH_2CH_2O$-CO- or $-CH_2CH(CH_3)O$-CO-, $X^2$ is Cl, m is a number from 1 to 6, n is 0 or a number from 1 to 12 and o is a number from 1 to 13, with the sum of n + o = 2 m + 1, $R^{19}$ and $R^{20}$ are H, and $R^{29}$ is H, F, Cl, CN, OH, $R^{23}O$-, $C_1$-$C_4$alkyl, $-COOR^{23}$, -O-CO-$R^{23}$, phenyl, $-OCH_2CH_2OH$ or $-OCH_2CH(CH_3)OH$, and $R^{23}$ is $C_1$-$C_6$alkyl, $C_5$cycloalkyl or $C_6$cycloalkyl, phenyl or benzyl.

**36.** A process according to claim 33, wherein the radiation-sensitive material is a photopolymerizable or photocrosslinkable organic material.

**37.** A process according to claim 36, wherein the material is a non-volatile monomeric oligomeric or polymeric substance having photopolymerizable or photodimerizable ethylenically unsaturated groups, or is a cationically curable system or a photocrosslinkable polyimide.

**38.** A process according to claim 9, wherein the radiation-sensitive material containing Cl, Br and/or I atoms is a copolymer which contains photodimerizable groups in the polymer backbone or as side groups and which contains, bound via an -O-, -O-CO-, -CO-$OR^{22}$-OCO- or -CO-O- group to a polymer backbone, aliphatic or cycloaliphatic side groups which contain at least one Cl, Br or I atom in the α-, β-, γ- or ω-position, $R^{22}$ being $C_2$-$C_{12}$alkylene which is unsubstituted or substituted by OH, Cl, Br or phenyl, $C_4$-$C_{12}$cycloalkylene, $C_4$-$C_{12}$cycloalkylene-$CH_2$-, $C_4$- $C_{12}$cycloalkylene$-(CH_2)_z-$, benzylene or xylylene.

**39.** A process according to claim 38, wherein the photodimerizable groups are an imidyl group of the formula IX

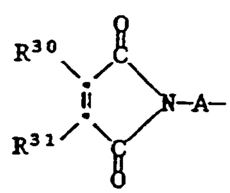

(IX),

in which $R^{30}$ and $R^{31}$ independently of one another are Cl, Br, phenyl or $C_1$-$C_4$alkyl, or $R^{30}$ and $R^{31}$ together are $-(CH_2)_3-$, $-(CH_2)_4-$ or

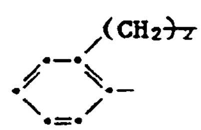

and A is unsubstituted or hydroxyl-substituted, linear or branched $C_2$-$C_{12}$alkylene or cyclohexylene or phenylene, or this is a cinnamoyl group of the formula X

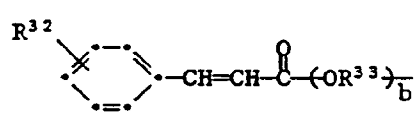

(X)

in which $R^{32}$ is H, $C_1$-$C_{12}$alkoxy, phenoxy or $C_1$-$C_{12}$alkyl-CO-O-, $R^{33}$ is $C_2$-$C_6$alkylene and b is 0 or 1.

**40.** A process according to claim 38, wherein the group containing aliphatic Cl, Br or I is of the formula $-C_mH_nX^2_o$, in which m is a number from 1 to 12, n is 0 or a number from 1 to 24 and o is a number from 1 to 25, with the sum of n + o = 2 m + 1, and $X^2$ is Cl, Br or I.

**41.** A process according to claim 38, wherein the copolymer contains

a) 0.1 to 90 mol% of at least one structural element of the formula III

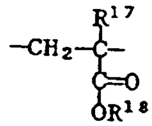

(III)

b) 10 to 99.9 mol% of at least one structural element of the formula XI or XIa

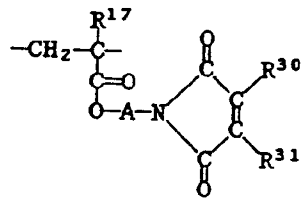

(XI)

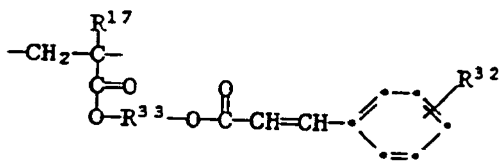

(XIa)

and

c) 0 to 89.9 mol% of at least one structural element of the formula IV

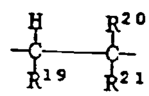

(IV)

relative to the polymer, in which $R^{17}$ is H or methyl, $R^{18}$ is a radical $-(R^{22}-O-CO)_z-C_mH_nX^2_o$, in which z is 0 or 1, m is a number from 1 to 12, n is 0 or a number from 1 to 24 and o is a number from 1 to 25, with the sum n + o = 2 m + 1, $X^2$ is Cl, Br or I, and $R^{22}$ is $C_2$-$C_{12}$alkylene which is unsubstituted or substituted by OH, Cl, Br or phenyl, $C_4$-$C_{12}$cycloalkylene, $C_4$-$C_{12}$cycloalkylene-$CH_2$, $C_4$-$C_{12}$cycloalkylene$-(CH_2)_z-$, benzylene or xylylene, $R^{19}$ is H, $C_1$-$C_6$alkyl or -$COOR^{23}$, $R^{20}$ is H, F, Cl, CN or $C_1$-$C_6$alkyl, and $R^{21}$ is H, F, Cl, CN, $R^{23}$-O-, $C_1$-$C_{12}$alkyl, -$COOR^{23}$, -O-CO-$R^{23}$, -$COOR^{22}$-OH,

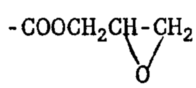

or phenyl, $R^{22}$ is as defined above and $R^{23}$ is $C_1$-$C_{18}$alkyl, $C_5$-$C_7$cycloalkyl, ($C_1$-$C_{12}$alkyl)-$C_5$-$C_7$cycloalkyl, phenyl, ($C_1$-$C_{12}$alkyl)-phenyl, benzyl or ($C_1$-$C_{12}$alkyl)-benzyl, $R^{30}$ and $R^{31}$ independently of one another are Cl, Br, phenyl or $C_1$-$C_4$alkyl or $R^{30}$ and $R^{31}$ together are $-(CH_2)_3-$, $-(CH_2)_4-$ or

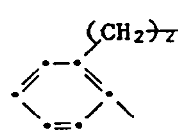

and A is unsubstituted or hydroxyl-substituted, linear or branched $C_2$-$C_{12}$alkylne, or cyclohexylene or phenylene, $R^{32}$ is H, $C_1$-$C_{12}$alkoxy, phenoxy or $C_1$-$C_{12}$alkyl-CO-O and $R^{33}$ is $C_2$-$C_6$alkylene.

**42.** A process according to claim 38, wherein the copolymer is a polyadduct which contains

a) 0.1 to 90 mol% of identical or different structural units of the formula V

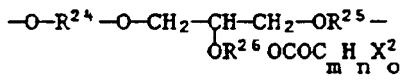 (V)

b) 10 to 99.9 mol% of at least one structural element of the formulae XII or XIIa

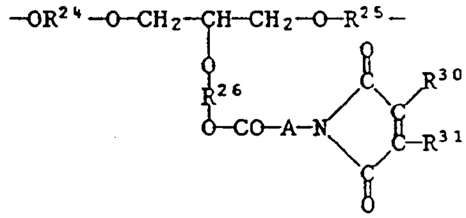 (XII),

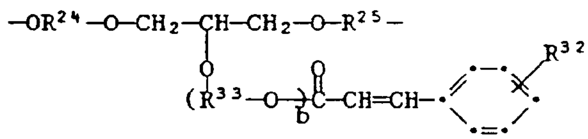 (XIIa),

and

c) 89.9 to 0 mol% of identical or different structural units of the formula VI

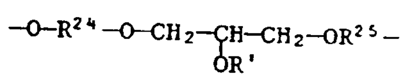 (VI)

relative to the polyadduct, in which $R^{24}$ and $R^{25}$ independently of one another are the radical of a diol, minus two hydroxyl groups, having aliphatic or aromatic diol groups, R′ is H, unsubstituted or OH-substituted $C_1$-$C_{20}$alkyl, $C_1$-$C_{20}$acyl or amino carbonyl which is N-substituted by a $C_1$-$C_{20}$hydrocarbon radical, -$OR^{26}$ is a direct bond or $R^{26}$ is unsubstituted or $C_1$-$C_{16}$alkyl-substituted ethylene, and A, $R^{30}$, $R^{31}$, $R^{32}$, $R^{33}$, $X^2$, m, n, o and b are as defined in claim 43.

**43.** A process according to claim 38, wherein the copolymer contains

a) 90 to 0.1 mol% of structural units of the formula VII

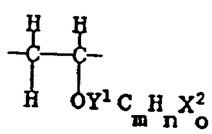 (VII)

b) 10 to 99.9 mol% of at least one structural element of the formulae XIII or XIIIa

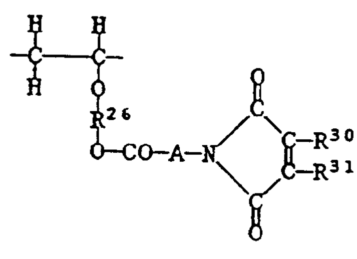 (XIII),

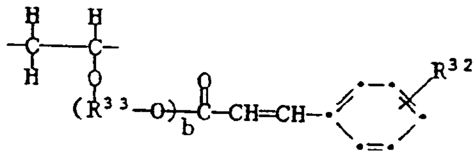

(XIIIa),

and

c) 89.9 to 0 mol% of identical or different structural units of the formula VIII

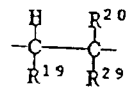

(VIII),

in which $Y^1$ is -CO- or $-R^{26}$-O-CO-, $X^2$ is Cl, Br or I, m is a number from 1 to 12, n is 0 or a number from 1 to 24, o is a number from 1 to 25, with the sum of n + 0 = 2 m + 1, and $R^{26}$ is unsubstituted or $C_1$-$C_{16}$alkyl-substituted ethylene, $R^{19}$ is H, $C_1$-$C_6$alkyl or $-COOR^{23}$, $R^{20}$ is H, F, Cl, CN or $C_1$-$C_6$alkyl, and $R^{29}$ is H, F, Cl, CN, OH, $R^{23}O$-, $C_1$-$C_{12}$alkyl, $-COOR^{23}$, $-O-CO-R^{23}$, $-OR^{34}OH$ or phenyl, $R^{23}$ is $C_1$-$C_{18}$alkyl, $C_5$-$C_7$cycloalkyl, ($C_1$-$C_{12}$alkyl)-$C_5$-$C_7$cycloalkyl, phenyl, ($C_1$-$C_{12}$alkyl)-phenyl, benzyl or ($C_1$-$C_{12}$alkyl)-benzyl and $R^{34}$ is unsubstituted or $C_1$-$C_{16}$alkyl-substituted ethylene, and A, $R^{30}$, $R^{31}$, $R^{32}$ and $R^{33}$ are as defined in claim 42 and b is 0 or 1.

**44.** A coating agent, containing

a1) a radiation-sensitive organic material which contains, as electron acceptors, Cl, Br and/or I atoms which are bound to the radiation-sensitive group and activated in such a way that they form CT complexes with compounds of the formula I or Ia under the action of thermal energy,

a2) a radiation-sensitive organic material and a thermoplastic polymer which is soluble in an inert organic solvent and which contains, bound via an -O-, -O-CO-, $-CO-OR^{22}$-OCO- or -CO-O- group to a polymer backbone, aliphatic or cycloaliphatic side groups which contain at least one Cl, Br or I atom in the $\alpha$-, $\beta$-, $\gamma$- or $\omega$-position, $R^{22}$ being $C_2$-$C_{12}$alkylene which is unsubstituted or substituted by OH, Cl, Br or phenyl, $C_4$-$C_{12}$cycloalkylene, $C_4$-$C_{12}$cycloalkylene-$CH_2$-, $C_4$-$C_{12}$cycloalkylene $-(CH_2)_z-$, benzylene or xylylene,

a3) a copolymer which contains photodimerizable groups in the polymer backbone or as side groups and, bound via an -O-, -O-CO-, $-CO-OR^{22}$-OCO- or -CO-O- group to a polymer backbone, aliphatic or cycloaliphatic side groups which contain at least one Cl, Br or I atom in the $\alpha$-, $\beta$-, $\gamma$- or $\omega$-position, $R^{22}$ being $C_2$-$C_{12}$alkylene which is unsubstituted or substituted by OH, Cl, Br or phenyl, $C_4$-$C_{12}$cycloalkylene, $C_4$-$C_{12}$cycloalkylene-$CH_2$-, $C_4$-$C_{12}$cycloalkylene$-(CH_2)_z-$, benzylene or xylylene,

b) a compound of the formula I or Ia according to claim 1,

c) if appropriate, an inert organic solvent and

d) if appropriate, a binder.

**45.** A radiation-sensitive copolymer which contains activated Cl, Br or I atoms and photodimerizable groups in the backbone or as side groups and which contains, bound via an -O-, -O-CO-, $-CO-OR^{22}$-OCO- or -CO-O- group to a polymer backbone, aliphatic or cycloaliphatic side groups which contain at least one Cl, Br or I atom in the $\alpha$-, $\beta$, $\gamma$- or $\omega$-position, $R^{22}$ being $C_2$-$C_{12}$alkylene which is unsubstituted or substituted by OH, Cl, Br or phenyl, $C_4$-$C_{12}$cycloalkylene, $C_4$-$C_{12}$cycloalkylene-$CH_2$-, $C_4$-$C_{12}$cycloalkylene $-(CH_2)_z-$, benzylene or xylylene.

**Revendications**

**1.** Matière enduite dont au moins une des surfaces d'un substrat porte déposée une image en relief composée a) d'une matière organique photostructurée et photopolymérisée ou photoréticulée, qui b) contient un feutre aiguilleté à partir d'un complexe de transfert de charge (complexe TC) qui est formé de chlore, de brome ou d'iode et

d'un composé de formule I ou Ia ou de leurs mélanges

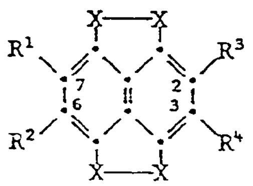 (I), 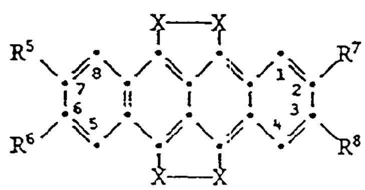 (Ia),

où X représente S, Se ou Te, $R^1$, $R^2$, $R^3$ et $R^4$, indépendamment les uns des autres, représentent un atome d'hydrogène ou Cl ou $R^1$ et $R^2$ ainsi que $R^3$ et $R^4$ ensemble chacun représente

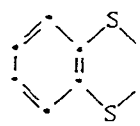 ou 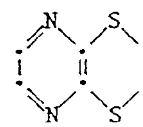

$R^1$, $R^2$, $R^3$ et $R^4$ chacun représente phénylthio, 4-méthyle ou 4-méthoxyphénylthio ou 4-pyridylthio, $R^5$, $R^6$, $R^7$ et $R^8$, indépendamment les uns des autres, représentent H ou F, $R^5$ représente $CH_3$ et $R^6$, $R^7$ et $R^8$ représentent H ou $R^5$, $R^6$, $R^7$ et $R^8$ représentent $CH_3$, $R^5$ et $R^6$ représentent $CH_3$ ou Cl et $R^7$ et $R^8$ représentent H ou $R^5$ et $R^6$ représentent H, $R^7$ représente -$COR^9$ et $R^8$ représente H ou -$COR^9$, ou $R^5$ et $R^6$ représentent H et $R^7$ et $R^8$ ensemble représentent -CO-O-CO ou -CO-$NR^{10}$-CO-, où $R^9$ représente halogène, -OH, -$NH_2$, ou le radical d'un alcool, d'une amine primaire ou secondaire, ou est -OM, M signifiant un cation, et $R^{10}$ représente H ou le radical d'une amine primaire diminué du groupe $NH_2$.

**2.** Matière selon la revendication 1, caractérisée en ce que le constituant b) est contenu dans une quantité de 0,001 à 20 % en poids, par rapport au constituant a).

**3.** Matière selon la revendication 1, caractérisée en ce que le complexe TC est formé par un composé de formule Ia et le composé représente le tétrathiotétracène, le tétrasélénotétracène, le 2-fluoro- ou 2,3-difluorotétrasélénotétracène.

**4.** Matière selon la revendication 1, caractérisée en ce que le complexe TC est formé du chlore et d'un composé de formule Ia.

**5.** Matière selon la revendication 1, caractérisée en ce que dans le cas du complexe TC, il s'agit du (tétrasélénotétracène)$_2$Cl.

**6.** Matière selon la revendication 1, caractérisée en ce que le constituant a) est obtenu à partir d'une substance non volatile monomère, oligomère ou polymère avec des groupes à insaturation éthylénique photopolymérisables ou photodimérisables, de systèmes à durcissement cationique ou de polyimides photoréticulables.

**7.** Matière selon la revendication 1, caractérisée en ce que le substrat est transparent et que le feutre aiguilleté est en partie en saillie à la surface de l'image en relief et il est métallisé.

**8.** Matière selon la revendication 7, caractérisée en ce que dans le cas du métal, il s'agit d'un métal seminoble ou noble.

**9.** Procédé pour la préparation d'une matière selon la revendication 1, caractérisé en ce qu'on enduit un substrat d'une composition

a) d'une matière organique sensible aux rayonnements, qui contient comme accepteur d'électrons des atomes Cl, Br et/ou I ou en ce qu'on la mélange avec une substance organique contenant des atomes

Cl, Br et/ou I comme accepteur d'électrons, les atomes Cl, Br et/ou I étant activés de façon telle que, sous l'effet de l'énergie thermique, ils forment avec les composés de formule I ou Ia un complexe TC,
b) d'un composé de formule I ou Ia ou mélanges de celui-ci selon la revendication 1,
c) éventuellement d'un solvant inerte, et
d) éventuellement d'un enduit,
on chauffe le substrat enduit, on irradie ensuite sous un masque d'image et on développe ultérieurement.

**10.** Procédé selon la revendication 9, caractérisé en ce que le constituant a) est un homo- ou copolymère, dont la charpente polymère porte liés par l'intermédiaire d'un groupe de pont un radical 3,4-dichloromaléimidyle et éventuellement autres groupes photodimérisables.

**11.** Procédé selon la revendication 10, caractérisé en ce que la charpente polymère est formée d'un homo- ou copolymère de l'alcool vinylique ou de leurs éthers hydroxyalkyliques de celui-ci, d'un homo- ou copolymère de l'acide méthacrylique et/ou acrylique ou de leurs esters hydroxyalkyliques ou hydroxycycloalkyliques ; ou d'un produit de polyaddition d'un composé époxyde avec en moyenne plus d'un groupe époxyde par molécule et d'un diol, d'une mono-amine primaire, d'une diamine disecondaire, d'un acide dicarboxylique ou de ses éthers hydroxyalkyliques ou d'un diamide d'acide dicarboxylique disecondaire linéaire ou cyclique.

**12.** Procédé selon la revendication 10, caractérisé en ce que le groupe photodimérisable est pris dans le groupe constitué de cinnamate et de maléimidyle 2,3-substitué par alkyle en $C_1$-$C_4$.

**13.** Procédé selon la revendication 9, caractérisé en ce que la matière organique sensible aux rayonnements du constituant a) est mélangée avec un composé organique halogéné dont l'halogène se sépare sous l'effet de l'apport de la chaleur.

**14.** Procédé selon la revendication 13, caractérisé en ce que dans le cas de composés halogénés il s'agit d'un composé organique halogéné, saturé ou insaturé, aliphatique, cycloaliphatique, aliphatique-hétérocyclique, aromatique ou hétéroaromatique.

**15.** Procédé selon la revendication 14, caractérisé en ce que le composé organique est chloré, bromé et/ou iodé.

**16.** Procédé selon la revendication 13, caractérisé en ce que dans le cas de composé halogéné il s'agit de composés comportant des groupes trichlorométhyle, d'alcène en $C_3$-$C_5$ ou d'alcane en $C_3$-$C_5$ perchloré.

**17.** Procédé selon la revendication 13, caractérisé en ce que dans le cas du composé organique halogéné il s'agit du tétrabromométhane, du bromoforme, du trichlorobromo-méthane, du hexachloropropène, du hexachlorocyclopropane, du hexachloroéthane, de l'octachloro-propane, du n-octachlorobutane, du n-décachloro-butane, du tétrabrométhane, du hexabrométhane, de la tétrabrom-o-benzoquinone, de la 2,4,4,6-tétrabromo-2,5-cyclohexadiénone, de l'hexabromobenzène, du chloranile, de l'hexachloracétone, de benzène, du chloranile, de l'hexachloracétone, de l'acide 1,4,5,6,7,7-hexachloro-5-norbornène-2,3-dicarboxylique, du 1,2,5,6,9,10-hexabromocyclododécane, du tétrachloréthylène, du perchlorocyclopentadiène, du perchlorobutadiène, du dichloroacétaldéhydediéthylacétale, du 1,4-dichloro-2-butène, du 1,3-dichloro-2-butène, du 3,4-dichloro-1-butène, du tétrachlorocyclopropène, de la 1,3-dichloroacétone, du 1,4-bis(trichlorométhyl)-benzène, du 1,3-dibromopropane, du 1,6-dibromohexane, du 3-chloropropionate d'éthyle, du 2-chloropropionate de méthyle, du 2-chloracrylonitrile, du trichloracétate d'éthyle, de la tris-(trichlorométhyl)-triazine, de la 1-(p-méthoxy)phényléthényl-5-(1,3-bistrichlorométhyl)-triazine, du 1,2,3-trichloropropane, du 1,1,2-trichloréthane, du chloroformiate de butyle, du trichloréthylène, de l'anhydride 2,3-dichloromaléique, du 1,12-dibromododécane, de l'$\alpha,\alpha'$-dibromo-p-xylène, de l'$\alpha,\alpha'$-dichloro-o-xylène, du chlorure ou bromure de phénacyle, du 1,10-dibromodécane, de l'$\alpha,\alpha'$-dichloro-p-xylène, de l'$\alpha,\alpha'$-dibromo-m-xylène, de l'iodacétonitrile, de la 2,3-dichloro-5,6-dicyanobenzoquinone, du 2,3-dichloropropionate de méthyle, du 1-bromo-2-chloréthane, du 1-bromo-2-chloropropane, du chloroformiate de 2-brométhyle, de l'iodacétate d'éthyle, du N-chloro-, N-bromo- ou N-iodosuccinimide ou -phtalimide ou de leurs mélanges.

**18.** Procédé selon la revendication 13, caractérisé en ce que dans le cas de la matière sensible aux rayonnements il s'agit d'une matière organique photopolymérisable ou photoréticulable.

**19.** Procédé selon la revendication 18, caractérisé en ce que la matière est une substance non volatile monomère, oligomère ou polymère avec des groupes à insaturation éthylènique photopolymérisables ou photodimérisables ; un système à durcissement cationique ou un polyimide photoréticulable.

**20.** Procédé selon la revendication 9, caractérisé en ce que la matière sensible aux rayonnements est mélangée avec un polymère thermoplastique soluble dans un solvant organique inerte, lequel poymère thermoplastique porte sur sa charpente polymère des groupes latéraux aliphatiques ou cycloaliphatiques liés par l'intermédiaire d'un groupe -O-, -O-CO-, -CO-O$R^{22}$-OCO- ou -CO-O-, lesquels groupes latéraux contiennent en position α, β, γ ou ω au moins un atome Cl, Br ou I, $R^{22}$ représente xylylène, benzylène, (cycloalkylène en $C_4$-$C_{12}$)-$(CH_2)_2$, (cycloalkylène en $C_4$-$C_{12}$)-$CH_2$-, cycloalkylène en $C_4$-$C_{12}$ ou alkylène en $C_2$-$C_{12}$ non substitué ou substitué par OH, Cl, Br ou phényle.

**21.** Procédé selon la revendication 20, caractérisé en ce que le polymère thermoplastique est un homo- ou copolymère d'un ester d'acide acrylique ou méthacrylique, qui contient des groupes chlorés, bromés et/ou iodés aliphatiques ou cycloaliphatiques dans le groupe ester.

**22.** Procédé selon la revendication 21, caractérisé en ce que le polymère contient

a) de 0,1 à 100 % en mole d'au moins un élément de structure de formule III :

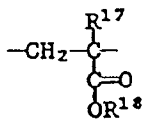

(III)

et

b) de 0 à 99,9 % en mole d'au moins un élément de formule IV :

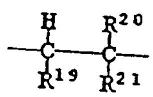

(IV)

par rapport au polymère, où $R^{17}$ représente H ou méthyle ; $R^{18}$ représente un radical $-(R^{22}\text{-O-CO})_z-C_mH_nX_o^2$, où z vaut 0 ou 1, m va de 1 à 12, n vaut 0 ou va de 1 à 24 et o va de 1 à 25 et la somme n + o = 2m + 1, $X^2$ représente Cl, Br ou I, et $R^{22}$ représente xylylène, benzylène, (cycloalkylène en $C_4$-$C_{12}$)-$(CH_2)_2$, (cycloalkylène en $C_4$-$C_{12}$)-$CH_2$-, cycloalkylène en $C_4$-$C_{12}$ ou alkylène en $C_2$-$C_{12}$ non substitué ou substitué par OH, Cl, Br ou phényle ; $R^{19}$ représente H, alkyle en $C_1$-$C_6$ ou -COO$R^{23}$ ; $R^{20}$ représente H, F, Cl, CN ou alkyle en $C_1$-$C_6$ ; et $R^{21}$ représente H, F, Cl, CN, $R^{23}$-O-, alkyle en $C_1$-$C_{12}$, -COO$R^{23}$, -O-CO-$R^{23}$, -COO$R^{22}$-OH,

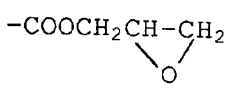

ou phényle, $R^{22}$ a la signification donnée précédemment et $R^{23}$ représente alkyle en $C_1$-$C_{18}$, cycloalkyle en $C_5$-$C_7$, (alkyl en $C_1$-$C_{12}$)-cycloalkyle en $C_5$-$C_7$, phényle, (alkyl en $C_1$-$C_{12}$)-phényle, benzyle ou (alkyl en $C_1$-$C_{12}$)-benzyle.

**23.** Procédé selon la revendication 22, caractérisé en ce que $R^{17}$ représente méthyle ; $R^{18}$ représente un radical -$R^{22}$-O-CO-$C_mH_nX_o^2$, dans lequel m va de 1 à 6, n vaut 0 ou va de 1 à 12 et o va de 1 à 13 et la somme n + o = 2m + 1, $X^2$ représente Cl, et $R^{22}$ représente cyclohexylène-$(CH_2)_2$, cyclohexylène-$CH_2$-, cyclopentylène-$CH_2$-, cyclohexylène, cyclopentylène, alkylène en $C_2$-$C_6$ non substitué ou substitué par OH ou Cl ; $R^{19}$ représente H ; $R^{20}$ représente H, F, Cl ou alkyle en $C_1$-$C_4$ ; et $R^{21}$ représente H, F, Cl, CN, $R^{23}$-O-, alkyle en $C_1$-$C_6$, -COO$R^{23}$, -O-CO-$R^{23}$, -COO$R^{22}$-OH,

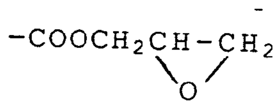

ou le phényle, $R^{22}$ a la signification donnée ci-dessus et $R^{23}$ représente alkyle en $C_1$-$C_6$, cycloalkyle en $C_5$ ou en $C_6$, phényle ou benzyle.

**24.** Procédé selon la revendication 22, caractérisé en ce que $R^{17}$ représente méthyle ; $R^{18}$ représente un radical $-R^{22}-O-CO-C_mH_nX_o^2$, où m va de 1 à 4, n vaut 0 ou va de 1 à 8 et o va de 1 à 13 et la somme n + o = 2m + 1, $X^2$ représente le chlore ; $R^{22}$ représente alkylène en $C_2$-$C_6$ linéaire ou $-CH_2CHOHCH_2-$ ; $R^{19}$ et $R^{20}$ représentent H ; et $R^{21}$ représente $-COOR^{22}-OH$, $-COOR^{23}$, où $R^{22}$ a la signification donnée ci-dessus et $R^{23}$ représente alkyle en $C_1$-$C_6$.

**25.** Procédé selon la revendication 20, caractérisé en ce que dans le cas de la matière sensible aux rayonnements, il s'agit d'une matière organique photopolymérisable ou photoréticulable.

**26.** Procédé selon la revendication 25, caractérisé en ce que la matière est une substance non volatile monomère, oligomère ou polymère avec des groupes à insaturation éthylénique photopolymérisables ou photodimérisables ; un système à durcissement cationique ou un polyimide photoréticulable.

**27.** Procédé selon la revendication 20, caractérisé en ce que dans le cas du polymère thermoplastique il s'agit d'un produit de polyaddition linéaire d'un composé glycidylique avec en moyenne plus d'un groupe époxyde et d'un diol, d'une mono-amine primaire, d'une diamine disecondaire, d'un diamide d'acide dicarboxylique disecondaire linéaire ou cyclique ou d'un acide dicarboxylique, dans lequel l'atome H dans le groupe OH secondaire est substitué au moins partiellement par un groupe $-CO-C_mH_nX_o^2$, où m va de 1 à 12, n vaut 0 ou va de 1 à 24 et o va de 1 à 25 et la somme n + o = 2m + 1, $X^2$ représente Cl, Br ou I.

**28.** Procédé selon la revendication 27, caractérisé en ce que le produit de polyaddition contient

a) de 100 à 0,1 % en moles de motifs de structure identiques ou différents de formule V :

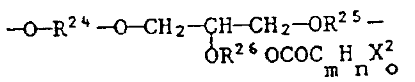

(V)

b) de 99,9 à 0 % en moles de motifs de structure identiques ou différents de formule VI :

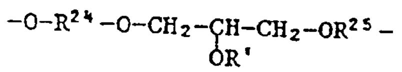

(VI)

par rapport au produit de polyaddition, $R^{24}$ et $R^{25}$ indépendamment l'un de l'autre représentent le radical d'un diol diminué de deux groupes hydroxyle avec des groupes diol aliphatiques ou aromatiques, R' représente H, acyle en $C_1$-$C_{20}$, alkyle en $C_1$-$C_{20}$ non substitué ou substitué par OH, ou un radical aminocarbonyle N-substitué par un radical hydrocarboné en $C_1$-$C_{20}$, $-OR^{26}$ représente une liaison directe ou $R^{26}$ représente l'éthylène non substitué ou substitué par alkyle en $C_1$-$C_{16}$, et $X^2$, m, n et o ont les significations données dans la revendication 27.

**29.** Procédé selon la revendication 28, caractérisé en ce que $R^{24}$ et $R^{25}$, indépendamment l'un de l'autre, représentent un radical de formule :

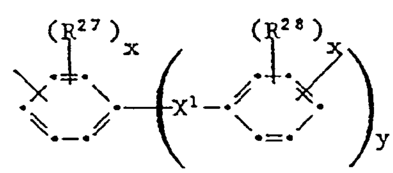

où $X^1$ représente une liaison directe, alkylène en $C_1$-$C_4$, alkylidène en $C_2$-$C_{12}$, cycloalkylidène en $C_5$-$C_8$, -O-, -S-, -SO-, $-SO_2-$, -CO-, $-CO_2-$, -N(alkyl en $C_1$-$C_4$)- ou $-Si(CH_3)_2-$, $R^{27}$ et $R^{28}$ indépendamment l'un de l'autre représentent H, halogène, alkyle en $C_1$-$C_4$ ou alcoxy en $C_1$-$C_4$, et x vaut 0, 1 ou 2 et y vaut 0 ou 1.

**30.** Procédé selon la revendication 29, caractérisé en ce que $R^{24}$ et $R^{25}$ représentent le radical

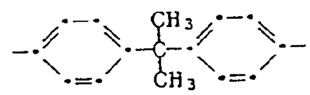

**31.** Procédé selon la revendication 27, caractérisé en ce que dans le cas de la matière sensible aux rayonnements il s'agit d'une matière organique photopolymérisable ou photoréticulable.

**32.** Procédé selon la revendication 31, caractérisé en ce que la matière est une substance non volatile monomère, oligomère ou polymère avec des groupes à insaturation éthylénique photopolymérisables ou photodimérisables ; un système à durcissement cationique ou un polyimide photoréticulable.

**33.** Procédé selon la revendication 20, caractérisé en ce que dans le cas du polymère thermoplastique il s'agit d'un homo- ou copolymère de l'alcool vinylique, dans lequel l'atome H du groupe OH secondaire est substitué au moins partiellement par un groupe $-Y-C_mH_nX_o^2$, où Y est une liaison directe, -CO- ou $-R^{26}$-O-CO-, X2 représente Cl, Br ou I, m va de 1 à 12, n vaut 0 ou va de 1 à 24, o va de 1 à 25 et la somme n + o = 2m + 1, et $R^{26}$ est l'éthylène non substitué ou substitué par alkyle en $C_1$-$C_{16}$.

**34.** Procédé selon la revendication 33, caractérisé en ce que le copolymère contient

a) de 90 à 0,1 % en moles de motifs de structure de formule VII :

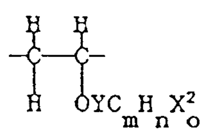

(VII)

et

b) de 99,9 à 10 % en moles de motifs de structure identiques ou différents de formule VIII :

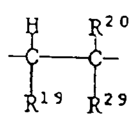

(VIII)

où Y représente une liaison directe, -CO- ou $-R^{26}$-O-CO-, $X^2$ représente Cl, Br ou I, m va de 1 à 12, n vaut 0 ou va de 1 à 24, o va de 1 à 25 et la somme n + o = 2m + 1,
et $R^{26}$ représente l'éthylène non substitué ou substitué par alkyle en $C_1$-$C_{16}$ ; $R^{19}$ représente H, alkyle en $C_1$-$C_6$ ou $-COOR^{23}$ ; $R^{20}$ représente H, F, Cl, CN ou alkyle en $C_1$-$C_6$ et $R^{29}$ représente H, F, Cl, CN, OH, $R^{23}$-O-, alkyle en $C_1$-$C_{12}$, $-COOR^{23}$, $-O-CO-R^{23}$, $OR^{34}$-OH ou phényle ; $R^{23}$ représente alkyle en $C_1$-$C_{18}$, cycloalkyle en $C_5$-$C_7$, (alkyl en $C_1$-$C_{12}$)-cycloalkyle en $C_5$-$C_7$, phényle, (alkyl en $C_1$-$C_{12}$)-phényle, benzyle ou (alkyl en $C_1$-$C_{12}$)-benzyle et $R^{34}$ représente l'éthylène non substitué ou substitué par alkyle en $C_1$-$C_{16}$.

**35.** Procédé selon la revendication 34, caractérisé en ce que Y est une liaison directe, -CO-, $-CH_2CH_2O$-CO- ou $CH_2CH(CH_3)O$-CO-, $X^2$ représente Cl, m va de 1 à 6, n vaut 0 ou va de 1 à 12, o va de 1 à 13 et la somme n + o = 2m + 1 ; $R^{19}$ et $R^{20}$ représentent H ; et $R^{29}$ représente H, F, Cl, CN, OH, $R^{23}$-O-, alkyle en $C_1$-$C_4$, $-COOR^{23}$, $-O-CO-R^{23}$ phényle, $-OCH_2CH_2OH$ ou $-OCH_2CH(CH_3)OH$ ; et $R^{23}$ représente alkyle en $C_1$-$C_6$, cycloalkyle en $C_5$ ou en $C_6$, phényle et benzyle.

**36.** Procédé selon la revendication 33, caractérisé en ce que dans le cas de la matière sensible aux rayonnements il s'agit d'une matière organique photopolymérisable ou photoréticulable.

**37.** Procédé selon la revendication 36, caractérisé en ce que la matière est une substance non volatile monomère, oligomère ou polymère avec des groupes à insaturation éthylénique photopolymérisables ou photodimérisables ; un système à durcissement cationique ou un polyimide photoréticulable.

**38.** Procédé selon la revendication 9, caractérisé en ce que la matière sensible aux rayonnements contenant des atomes de Cl, de Br et/ou de I est un copolymère, qui contient des groupes photodimérisables dans la charpente polymère ou comme groupes latéraux, et qui contient des groupes latéraux cycloaliphatiques ou aliphatiques liés à la charpente polymère par l'intermédiaire d'un groupe -O-, -O-CO-, -CO-O$R^{22}$-OCO- ou -CO-O-, lesquels groupes latéraux contiennent en position $\alpha$, $\beta$, $\gamma$ ou $\omega$ au moins un atome Cl, Br ou I, où $R^{22}$ représente xylylène, benzylène (cycloalkylène en $C_4$-$C_{12}$ $)\!-\!(CH_2)_2$, (cycloalkylène en $C_4$-$C_{12}$)-$CH_2$-, cycloalkylène en $C_4$-$C_{12}$ ou alkylène en $C_2$-$C_{12}$ non substitué ou substitué par OH, Cl, Br ou phényle.

**39.** Procédé selon la revendication 38, caractérisé en ce que dans le cas des groupes photodimérisables il s'agit d'un groupe imidyle de formule IX

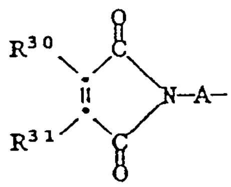

(IX)

dans laquelle $R^{30}$ et $R^{31}$ indépendamment l'un de l'autre, représentent Cl, Br, phényle ou alkyle en $C_1$-$C_4$ ou $R^{30}$ et $R^{31}$ ensemble représentent $-(CH_2)_3$, $-(CH_2)_4$ ou

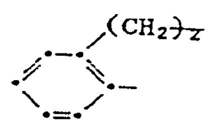

et A représente alkylène en $C_2$-$C_{12}$, linéaire ou ramifié, non substitué ou substitué par hydroxyle, ou cyclohexylène ou phénylène, ou qu'il s'agit d'un groupe cinnamoyle de formule X

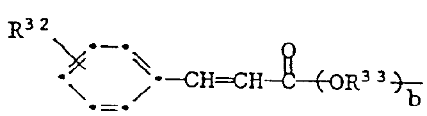

(X)

dans laquelle $R^{32}$ représente H, alcoxy en $C_1$-$C_{12}$, phényloxy ou (alkyl en $C_1$-$C_{12}$)-CO-O-, $R^{33}$ représente alkylène en $C_2$-$C_6$ et b vaut 0 ou 1.

**40.** Procédé selon la revendication 38, caractérisé en ce que le groupe aliphatique contenant Cl, Br ou I répond à la formule $-C_mH_nX_o^2$, dans laquelle m va de 1 à 12, n vaut 0 ou va de 1 à 24 et o va de 1 à 25 et la somme n + o = 2m + 1, $X^2$ représente Cl, Br ou I.

**41.** Procédé selon la revendication 38, caractérisé en ce que le copolymère contient

a) de 0,1 à 90 % en moles d'au moins un élément de structure de formule III :

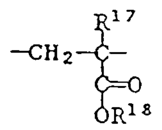

(III)

b) de 10 à 99,9 % en moles d'au moins un élément de structure de formules XI ou XIa :

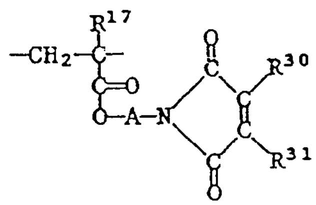

(XI)

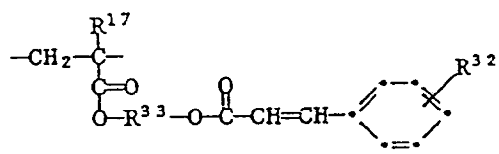

(XIa)

et

c) de 0 à 89,9 % en moles d'au moins un élément de structure de formule IV :

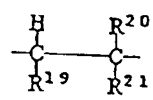

(IV)

par rapport au polymère, où $R^{17}$ représente H ou méthyle ; $R^{18}$ représente un radical $-(R^{22}\text{-O-CO})_z-C_mH_nX_o^2$, où z vaut 0 ou 1, m va de 1 à 12, n vaut 0 ou va de 1 à 24 et o va de 1 à 25 et la somme n + o = 2m + 1, $X^2$ représente Cl, Br ou I, et $R^{22}$ représente xylylène, benzylène, (cycloalkylène en $C_4$-$C_{12}$)-$(CH_2)_2$, (cycloalkylène en $C_4$-$C_{12}$)-$CH_2$-, cycloalkylène en $C_4$-$C_{12}$, alkylène en $C_2$-$C_{12}$ non substitué ou substitué par OH, Cl, Br ou phényle ; $R^{19}$ représente H, alkyle en $C_1$-$C_6$ ou -COOR$^{23}$ ; $R^{20}$ représente H, F, Cl, CN ou alkyle en $C_1$-$C_6$ ; et $R^{21}$ représente H, F, Cl, CN, $R^{23}$-O-, alkyle en $C_1$-$C_{12}$, -COOR$^{23}$, -O-CO-$R^{23}$, -COOR$^{22}$-OH,

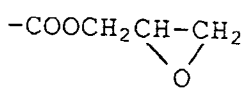

ou phényle, $R^{22}$ a la signification donnée précédemment et $R^{23}$ représente alkyle en $C_1$-$C_{18}$, cycloalkyle en $C_5$-$C_7$, (alkyl en $C_1$-$C_{12}$)-cycloalkyle en $C_5$-$C_7$, phényle, (alky en $C_1$-$C_{12}$)-phényle, benzyle ou (alkyl en $C_1$-$C_{12}$)-benzyle, $R^{30}$ et $R^{31}$ indépendamment l'un de l'autre représentent Cl, Br, phényle ou alkyle en $C_1$-$C_4$ ou $R^{30}$ et $R^{31}$ ensemble représentent $-(CH_2)_3$, $-(CH_2)_4$ ou

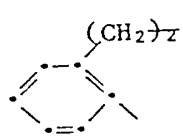

A représente alkylène en $C_2$-$C_{12}$ linéaire ou ramifié non substitué ou substitué par hydroxyle, ou cyclohexylène ou phénylène, $R^{32}$ représente H, alcoxy en $C_1$-$C_{12}$, phényloxy ou (alkyl en $C_1$-$C_{12}$)-CO-C- et $R^{33}$ représente un alkylène en $C_2$-$C_6$.

**42.** Procédé selon la revendication 38, caractérisé en ce que le copolymère est un produit de polyaddition qui contient

a) de 0,1 à 90 % en moles de motifs de structure identiques ou différents de formule V :

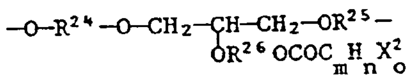

(V)

b) de 10 à 99,9 % en moles d'au moins un élément de structure de formules XII ou XIIa :

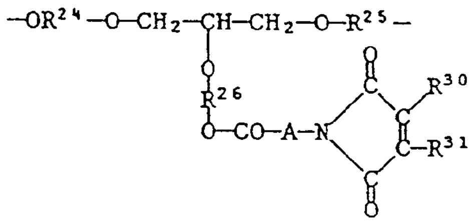

(XII)

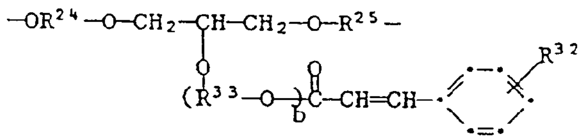

(XIIa)

et

c) de 89,9 à 0 % en moles de motifs de structure identiques ou différents de formule VI :

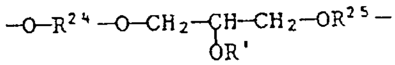

(VI)

par rapport au produit de polyaddition, où $R^{24}$ et $R^{25}$, indépendamment l'un de l'autre, représentent le radical d'un diol diminué de deux groupes hydroxyle avec des groupes diol aliphatiques ou aromatiques, R' représente H, acyle en $C_1$-$C_{20}$, alkyle en $C_1$-$C_{20}$ non substitué ou substitué par OH, ou aminocarbonyle N-substitué par un radical hydrocarboné en $C_1$-$C_{20}$, -$OR^{26}$ représente une liaison directe ou $R^{26}$ représente l'éthylène non substitué ou substitué par alkyle en $C_1$-$C_{16}$, et A, $R^{30}$, $R^{31}$, $R^{32}$, $R^{33}$, $X^2$, m, n, o et b ont les significations données précédemment.

**43.** Procédé selon la revendication 38, caractérisé en ce que le copolymère contient

a) de 90 à 0,1 % en moles de motifs de structure de formule VII :

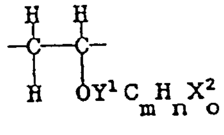

(VII)

b) de 10 à 99,9 % en moles d'au moins un élément de structure de formule XIII ou XIIIa :

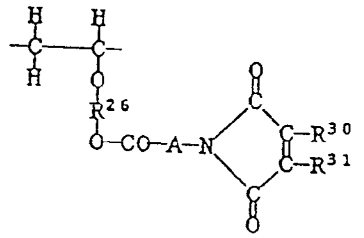

(XIII)

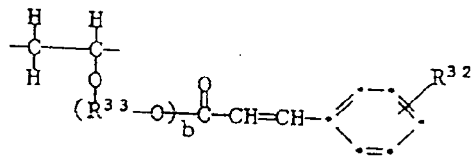

(XIIIa)

et

c) de 89,9 à 0 % en moles de motifs de structure identiques ou différents de formule VIII :

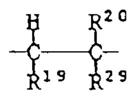

(VIII)

où $Y^1$ représente -CO- ou $-R^{26}$-O-CO-, $X^2$ représente Cl, Br ou I, m va de 1 à 12, n vaut 0 ou va de 1 à 24, o va de 1 à 25 et la somme n + o = 2m + 1, et $R^{26}$ représente l'éthylène non substitué ou substitué par alkyle en $C_1$-$C_{16}$ ; $R^{19}$ représente H, alkyle en $C_1$-$C_6$ ou $-COOR^{23}$ ; $R^{20}$ représente H, F, Cl, CN ou alkyle en $C_1$-$C_6$ ; et $R^{29}$ représente H, F, Cl, CN, OH, $R^{23}$-O-, alkyle en $C_1$-$C_{12}$, $-COOR^{23}$, -O-CO-$R^{23}$, $OR^{34}$-OH ou phényle ; $R^{23}$ représente alkyle en $C_1$-$C_{18}$, cycloalkyle en $C_5$-$C_7$, (alkyle en $C_1$-$C_{12}$)-cycloalkyle en $C_5$-$C_7$, phényle, (alkyl en $C_1$-$C_{12}$)-phényle, benzyle ou (alkyl en $C_1$-$C_{12}$)-benzyle et $R^{34}$ représente l'éthylène non substitué ou substitué par alkyle en $C_1$-$C_{16}$, et A, $R^{30}$, $R^{31}$, $R^{32}$ et $R^{33}$ ont les significations données précédemment.

**44.** Enduit contenant

a1) une matière organique sensible aux rayonnements, qui contient comme accepteur d'électrons des atomes Cl, Br et/ou I liés aux groupes sensibles aux rayonnements, qui sont activés de façon telle que, sous l'influence de l'énergie thermique, ils forment avec les composés de formule I ou Ia des complexes TC,

a2) une matière organique sensible aux rayonnements et un polymère thermoplastique soluble dans un solvant organique inerte, lequel polymère thermoplastique contient des groupes latéraux aliphatiques ou cycloaliphatiques liés à la charpente polymère par l'intermédiaire d'un groupe -O-, -O-CO-, -CO-$OR^{22}$-OCO- ou -CO-O-, lesquels groupes latéraux contiennent en position $\alpha$, $\beta$, $\gamma$ ou $\omega$ au moins un atome Cl, Br ou I, où $R^{22}$ représente xylylène, benzylène, (cycloalkylène en $C_4$-$C_{12}$)$(CH_2)_2$, (cycloalkylène en $C_4$-$C_{12}$)-$CH_2$-, cycloalkylène en $C_4$-$C_{12}$ ou alkylène en $C_2$-$C_{12}$ non substitué ou substitué par OH, Cl, Br ou phényle,

a3) un copolymère qui contient comme groupes latéraux ou dans la charpente polymère des groupes photodimérisables, lequel copolymère contient des groupes latéraux aliphatiques ou cycloaliphatiques liés à la charpente polymère par l'intermédiaire d'un groupe -O-, -O-CO-, -CO-$OR^{22}$-OCO- ou -CO-O-, lesquels groupes latéraux contiennent en position $\alpha$, $\beta$, $\gamma$ ou $\omega$ au moins un atome Cl, Br ou I, où $R^{22}$ représente xylylène, benzylène, (cycloalkylène en $C_4$-$C_{12}$ $)-(CH_2)_2$, (cycloalkylène en $C_4$-$C_{12}$)-$CH_2$-, cycloalkylène en $C_4$-$C_{12}$ ou alkylène en $C_2$-$C_{12}$ non substitué ou substitué par OH, Cl, Br ou phényle.

b) un composé de formule I ou Ia selon la revendication 1

c) éventuellement un solvant organique inerte, et

d) éventuellement un agent liant.

**45.** Copolymère sensible aux rayonnements contenant des atomes de Cl, de Br et/ou de I, contenant dans la charpente polymère ou comme groupes latéraux des groupes photodimérisables, et qui contient des groupes latéraux cycloaliphatiques ou aliphatiques liés à la charpente polymère par l'intermédiaire d'un groupe -O-, -O-CO-, -CO-OR$^{22}$-OCO- ou -CO-O-, lesquels groupes latéraux contiennent en position α, β, γ ou ω au moins un atome Cl, Br ou I, où R$^{22}$ représente xylylène, benzylène, (cycloalkylène en $C_4$-$C_{12}$ $)-(CH_2)_z$-, (cycloalkylène en $C_4$-$C_{12}$)-$CH_2$-, cycloalkylène en $C_4$-$C_{12}$ ou alkylène en $C_2$-$C_{12}$ non substitué ou substitué par OH, Cl, Br ou phényle.